(19) Europäisches Patentamt
European Patent Office
Office européen des brevets

(11) **EP 4 447 531 A1**

(12) **EUROPEAN PATENT APPLICATION**
published in accordance with Art. 153(4) EPC

(43) Date of publication:
**16.10.2024 Bulletin 2024/42**

(21) Application number: **22914835.8**

(22) Date of filing: **27.12.2022**

(51) International Patent Classification (IPC):
*H04W 24/08* (2009.01)

(52) Cooperative Patent Classification (CPC):
**H04W 4/029; H04W 24/08; H04W 64/00**

(86) International application number:
**PCT/CN2022/142540**

(87) International publication number:
**WO 2023/125583 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2021 CN 202111646420**

(71) Applicant: **Huawei Technologies Co., Ltd.**
**Shenzhen, Guangdong 518129 (CN)**

(72) Inventors:
• **YU, Yingjie**
  **Shenzhen, Guangdong 518129 (CN)**
• **WANG, Yi**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **REFERENCE SIGNAL TRANSMISSION METHOD AND APPARATUS, STORAGE MEDIUM AND CHIP**

(57) A reference signal transmission method, an apparatus, a storage medium, and a chip are provided, and relate to the field of communication technologies, to provide a solution of determining an angle (for example, an AOD) based on phase information. In this application, a first communication apparatus obtains first configuration information of a first reference signal, where the first configuration information includes indication information of a plurality of time domain resources used to determine phase information. The first communication apparatus receives the first reference signal, determines a plurality of pieces of first phase information corresponding to signals received on the plurality of time domain resources, and obtains second phase information and/or first angle-of-departure information based on the plurality of pieces of first phase information. The first communication apparatus determines a plurality of pieces of phase information based on a plurality of time domain resources, and then may determine an angle of departure of a reference signal based on the plurality of pieces of phase information. Therefore, the solution of determining an angle (for example, an AOD) based on phase information can be provided.

FIG. 4

**Description**

**CROSS-REFERENCE TO RELATED APPLICATIONS**

This application claims priority to Chinese Patent Application No. 202111646420.3, filed with the China National Intellectual Property Administration on December 30, 2021 and entitled "REFERENCE SIGNAL TRANSMISSION METHOD, APPARATUS, STORAGE MEDIUM, AND CHIP", which is incorporated herein by reference in its entirety.

**TECHNICAL FIELD**

This application relates to the field of communication technologies, and in particular, to a reference signal transmission method, an apparatus, a storage medium, and a chip.

**BACKGROUND**

With rapid development of communication technologies, high-precision positioning has been gradually determined as an important research project in 5th generation mobile communication systems (5th generation mobile networks or 5th generation wireless systems, 5G) in the 3rd Generation Partnership Project (3rd Generation Partnership Project, 3GPP). New radio (New Radio, NR) positioning is mainly applied to the following scenarios: an enhanced mobile broadband (enhanced mobile broadband, eMBB) outdoor scenario, an eMBB indoor scenario, an ultra-reliable low latency communication (ultra-reliable low latency communication, URLLC) scenario, and a massive machine type communication (massive machine type communication, mMTC)/internet of things (internet of things, IOT) scenario. NR positioning is further required to have high security, scalability, high availability, precision assurance in high-speed applications, and other features.

Currently, a terminal device may be positioned based on an angle used for positioning, for example, an angle of departure (Angle of departure, AOD) or an angle of arrival (angle of arrival, AOA). In a current positioning method, the terminal device may detect a positioning reference signal (positioning reference signal, PRS) sent by an access point (access point, AP), to obtain reference signal received powers (reference signal received powers, RSRPs) corresponding to a plurality of beams. An angle of departure (Angle of departure, AOD) at which a radio signal of the AP leaves the AP is calculated based on the RSRP values and information about a beam sent by a base station, and the AOD may be used to position the terminal device.

However, as positioning requirements and application scenarios are increasingly wide, providing more angle (for example, AOD) determining solutions becomes an urgent problem to be resolved.

**SUMMARY**

This application provides a reference signal transmission method, an apparatus, a storage medium, and a chip, applied to a solution of determining phase information based on a reference signal transmission solution, and further determining an angle (for example, an AOD) based on the phase information.

According to a first aspect, an embodiment of this application provides a reference signal transmission method. The method includes: A first communication apparatus obtains first configuration information of a first reference signal, where the first configuration information includes indication information of a plurality of time domain resources used to determine phase information. The first communication apparatus receives the first reference signal, and determines a plurality of pieces of first phase information corresponding to the plurality of time domain resources, where one of the plurality of pieces of first phase information is determined based on a signal received on one of the plurality of time domain resources. The first communication apparatus sends second phase information and/or first angle-of-departure information, where the second phase information is determined based on the plurality of pieces of first phase information, and the first angle-of-departure information is determined based on the plurality of pieces of first phase information.

The first communication apparatus determines, based on the first configuration information, the plurality of time domain resources for which phase information needs to be determined, and determines the plurality of pieces of phase information based on the plurality of time domain resources. Therefore, an angle of departure of the reference signal may be further determined based on the plurality of pieces of phase information. It can be learned that this application may provide a solution of determining an angle (for example, an AOD) based on phase information, so that when an angle used for positioning needs to be determined, there may be one more optional solution.

In a possible implementation, the plurality of time domain resources include a first time domain resource and a second time domain resource. The first communication apparatus receives a first part of the first reference signal on the first time domain resource, and determines one of the plurality of pieces of first phase information based on the first part of the first reference signal; and the first communication apparatus receives a second part of the first reference signal on the second time domain resource, and determines another one of the plurality of pieces of first phase information based on the second part of the first reference signal.

Because the first communication apparatus may determine the plurality of pieces of first phase information by using one reference signal, a quantity of reference signals used to calculate an angle of departure can be reduced, to save network resources and reduce a latency.

In a possible implementation, the indication information of the plurality of time domain resources used to determine the phase information includes at least one of the following content: information about a quantity of time domain resource units between two of S1 time domain resources corresponding to the first reference signal, where S1 is an integer greater than 1, and the S 1 time domain resources are time domain resources used by a transmit end of the first reference signal to send the first reference signal.

In this way, the first communication apparatus may determine, according to a rule of sending the first reference signal by the transmit end, a rule of determining the first phase information by the first communication apparatus. The two rules may match. Further, when a second communication apparatus intermittently sends the first reference signal on discontinuous time domain resources, because the first communication apparatus knows a rule of sending the first reference signal by the second communication apparatus, the first communication apparatus may determine each signal with better quality according to the matched rule. Further, the first communication apparatus may determine the first phase information based on the determined signal with better quality, to improve precision of the first phase information.

In a possible implementation, the indication information of the plurality of time domain resources used to determine the phase information includes information about the S 1 time domain resources corresponding to the first reference signal. In this way, the first communication apparatus may determine, based on the S1 time domain resources used by the transmit end to send the first reference signal, the plurality of time domain resources used by the first communication apparatus to determine the first phase information.

In a possible implementation, two adjacent time domain resources in the S1 time domain resources are separated by at least one time domain resource unit. In this way, when two adjacent time domain resources in the S1 time domain resources correspond to two different ports, the second communication apparatus may have time to perform a port switching action between the adjacent time domain resources in the S1 time domain resources.

In a possible implementation, adjacent time domain resources in the S1 time domain resources are separated by Q1 time domain resource units, where Q1 is a positive integer. In this way, this solution can be regular, and a quantity of bits occupied by information indicating a spacing between the time domain resources in the S1 time domain resources can be further reduced.

In a possible implementation, one time domain resource unit is one or more time domain symbols. In this way, the first communication apparatus can obtain the plurality of pieces of first phase information at a symbol granularity, and then can determine the angle of departure based on at least one piece of phase information, to reduce a latency in a solution of calculating the angle of departure based on behavior information.

In a possible implementation, the first configuration information further includes a correspondence between the S1 time domain resources corresponding to the first reference signal and a plurality of ports, where S1 is an integer greater than 1. The plurality of ports are ports used by the transmit end of the first reference signal to send the first reference signal on the S1 time domain resources. In this way, the first communication apparatus may determine a correspondence between the plurality of pieces of first phase information and first ports, and the first communication apparatus may further report the correspondence between the first phase information and the first ports, so that the second communication apparatus determines, based on the correspondence, a spacing between the ports corresponding to the first phase information.

In a possible implementation, two adjacent time domain resources in the S1 time domain resources correspond to two different ports. In this way, the first communication apparatus may obtain two pieces of different first phase information based on signals sent on two adjacent time domain resources in the S1 time domain resources. A phase difference may be obtained by using the two pieces of different first phase information. When ports corresponding to every two adjacent time domain resources are different, a maximum quantity of phase differences may be obtained, so that precision of the angle of departure can be improved.

In a possible implementation, one of the plurality of ports corresponds to one of the S1 time domain resources. In this way, in a process in which the second communication apparatus sends the first reference signal on the S1 time domain resources, one port is used once. In this way, the second communication apparatus may send the first reference signal through as many different ports as possible, and then the first communication apparatus may obtain first phase information corresponding to more different ports. More phase differences may be obtained based on first phase information corresponding to more different ports. It can be learned that, in this solution, a quantity of phase differences may be increased, to further improve precision of the angle of departure.

In a possible implementation, one of the plurality of ports corresponds to a plurality of time domain resources in the S1 time domain resources. In this way, in a process in which the second communication apparatus sends the first reference signal on the S1 time domain resources, one port may be used for a plurality of times. In this case, one port may be set as a reference port, to provide calibration for another port. In addition, ports are reused a plurality of times, so that a quantity of ports required in this solution can be reduced, to reduce a requirement on hardware of the second communication apparatus, and reduce costs of the second communication apparatus.

In a possible implementation, the first configuration information further includes information about a frequency domain resource corresponding to the first reference signal, so that the first communication apparatus receives the first reference signal on the corresponding frequency domain resource based on the first configuration information.

In a possible implementation, the second phase information includes at least one of the following content: at least two of the plurality of pieces of first phase information; at least one piece of phase difference information corresponding to the plurality of pieces of first phase information; or average information of at least one piece of phase difference information. This can improve solution flexibility.

In a possible implementation, when the second phase information includes at least two pieces of first phase information, a sequence of the at least two pieces of first phase information in the second phase information matches a sequence of time domain resources corresponding to the at least two pieces of first phase information. In this way, the second communication apparatus may determine, based on ports sequentially used to send the first reference signal, ports corresponding to the first phase information included in the second phase information, so that the second communication apparatus determines a spacing between ports corresponding to the phase difference information corresponding to the plurality of pieces of first phase information, and calculates the angle of departure based on the spacing.

In a possible implementation, when the second phase information includes at least two pieces of first phase information, a sequence of the at least two pieces of first phase information in the second phase information matches a sequence of identifiers of ports corresponding to the at least two pieces of first phase information. In this way, the second communication apparatus may determine, based on a preset port identifier sequence, ports corresponding to the first phase information included in the second phase information, so that the second communication apparatus determines a spacing between ports corresponding to the phase difference information corresponding to the plurality of pieces of first phase information, and calculates the angle of departure based on the spacing.

In a possible implementation, when the second phase information includes at least two pieces of phase difference information corresponding to the plurality of pieces of first phase information, a sequence of the at least two pieces of phase difference information in the second phase information matches a sequence of time domain resources corresponding to the phase difference information. In this way, the second communication apparatus may determine, based on ports sequentially used to send the first reference signal, ports corresponding to the phase difference information included in the second phase information, so that the second communication apparatus determines a spacing between the ports corresponding to the phase difference information, and calculates the angle of departure based on the spacing.

In a possible implementation, when the second phase information includes at least two pieces of phase difference information corresponding to the plurality of pieces of first phase information, a sequence of the at least two pieces of phase difference information in the second phase information matches a sequence of identifiers of ports corresponding to the phase difference information. In this way, the second communication apparatus may determine, based on a preset port identifier sequence, ports corresponding to the phase difference information included in the second phase information, so that the second communication apparatus determines a spacing between ports corresponding to the phase difference information, and calculates the angle of departure based on the spacing.

In a possible implementation, after the first communication apparatus determines the plurality of pieces of first phase information corresponding to the first reference signal received on the plurality of time domain resources used to determine the phase information, the method further includes: The first communication apparatus sends reliability information of the second phase information. In this way, when location information of the first communication apparatus is determined based on an angle of departure corresponding to the second phase information, calculation may be performed with reference to the reliability information of the second phase information, so that accuracy of positioning the first communication apparatus can be improved.

In a possible implementation, the reliability information of the second phase information includes standard deviation information and/or variance information corresponding to the plurality of pieces of first phase information.

In a possible implementation, after the first communication apparatus determines the plurality of pieces of first phase information corresponding to the first reference signal received on the plurality of time domain resources used to determine the phase information, the method further includes: The first communication apparatus sends first indication information. The first indication information indicates a correspondence between a parameter in the second phase information and an identifier of a port used to send the first reference signal. In this way, the second communication apparatus can determine, based on the first indication information, ports corresponding to parameters in the second phase information, so that the second communication apparatus determines a spacing between the ports corresponding to the parameters in the second phase information, and calculates the angle of departure based on the spacing.

In a possible implementation, the first angle-of-departure information includes: at least one piece of angle-of-departure information corresponding to the plurality of pieces of first phase information, where the at least one piece of angle-of-departure information is determined based on the plurality of pieces of first phase information and a spacing between the ports used to send the first reference signal; at least one piece of first angle-of-departure average information corresponding to the plurality of pieces of first phase information, where the at least one piece of first angle-of-departure average information is determined based on at least two of the at least one piece of angle-of-departure information; or at least one piece of second angle-of-departure average information corresponding to the plurality of pieces of first phase information, where the at least one piece of second angle-of-departure average information is determined based on average information of the phase difference information corresponding to the plurality of pieces of first phase information and port spacing average information, and a port spacing average is determined based on an average of spacings between the plurality of ports used to send the first reference signal.

This can improve solution flexibility. In addition, when the first communication apparatus reports the first angle-of-departure information, a positioning server may directly position the first communication apparatus based on the first angle-of-departure information reported by the first communication apparatus, so that a step of reporting, by the first communication apparatus, the second phase information to the second communication apparatus through the positioning server can be saved, and a step of sending, by the second communication apparatus, a determined angle of departure to the positioning server can be saved, to reduce signaling interactions, and save network resources.

In a possible implementation, when the first angle-of-departure information includes a plurality of pieces of angle-of-departure information corresponding to the plurality of pieces of first phase information, a sequence of the plurality of pieces of angle-of-departure information in the first angle-of-departure information matches a sequence of the time domain resources corresponding to the plurality of pieces of first phase information; or a sequence of the plurality of pieces of angle-of-departure information in the first angle-of-departure information matches a sequence of identifiers of ports corresponding to the plurality of pieces of first phase information. This can improve solution flexibility.

In a possible implementation, after the first communication apparatus determines the plurality of pieces of first phase information corresponding to the first reference signal received on the plurality of time domain resources used to determine the phase information, the method further includes: The first communication apparatus sends reliability information of the first angle-of-departure phase information. In this way, when another apparatus determines the location information of the first communication apparatus based on the plurality of pieces of first angle-of-departure information, calculation may be performed with reference to the reliability information of the first angle-of-departure information, so that accuracy of positioning the first communication apparatus can be improved.

In a possible implementation, the reliability information of the first angle-of-departure information includes standard deviation information and/or variance information of the plurality of pieces of angle-of-departure information corresponding to the plurality of pieces of first phase information.

In a possible implementation, after the first communication apparatus determines the plurality of pieces of first phase information corresponding to the first reference signal received on the plurality of time domain resources used to determine the phase information, the method further includes: The first communication apparatus sends second indication information, where the second indication information indicates a correspondence between a parameter in the first angle-of-departure information and an identifier of a port used to send the first reference signal.

In a possible implementation, the plurality of pieces of first phase information are in a one-to-one correspondence with the plurality of time domain resources used to determine the phase information. For one of the plurality of pieces of first phase information, the first phase information is determined based on a normal path and/or an additional path through which a signal received on a time domain resource corresponding to the first phase information arrives at the first communication apparatus. This can improve solution flexibility.

According to a second aspect, an embodiment of this application provides a reference signal transmission method. The method includes: A second communication apparatus generates a first reference signal; and the second communication apparatus sends the first reference signal to a first communication apparatus on a plurality of time domain resources, where two of the plurality of time domain resources correspond to two different ports used to send the first reference signal.

Because the second communication apparatus sends the first reference signal on the plurality of time domain resources through a plurality of ports, the first communication apparatus may determine a plurality of pieces of phase information based on the plurality of time domain resources, and then may determine an angle of departure of the reference signal based on the plurality of pieces of phase information. It can be learned that this application may provide a solution of determining an angle (for example, an AOD) based on phase information, so that when an angle used for positioning needs to be determined, there may be one more optional solution.

In a possible implementation, the plurality of time domain resources include a third time domain resource and a fourth time domain resource, and the plurality of ports include a first port and a second port. That the second communication apparatus sends a first reference signal to the first communication apparatus on a plurality of time domain resources includes: The second communication apparatus sends a first part of the first reference signal on the third time domain resource through the first port; and the second communication apparatus sends a second part of the first reference signal on the fourth time domain resource through the second port.

Because the first part and the second part of the first reference signal are sent through different ports of the second communication apparatus, after obtaining the plurality of pieces of phase information through measurement based on signals sent through different ports, the first communication apparatus may calculate an angle of departure with reference to phase difference information of the plurality of pieces of phase information and a spacing between ports. In addition, because the second communication apparatus sends different parts of a same reference signal through different ports, and the first communication apparatus may determine the plurality of pieces of first phase information by using one reference signal, a quantity of reference signals used to calculate the angle of departure can be reduced, to save network resources and reduce a latency.

In a possible implementation, that the second communication apparatus sends a first part of the first reference signal on the third time domain resource through the first port includes: The second communication apparatus sends the first part of the first reference signal on the third time domain resource through the first port connected to ta first radio frequency channel. That the second communication apparatus sends a second part of the first reference signal on the fourth time domain resource through the second port includes: The second communication apparatus sends the second part of the first reference signal on the fourth time domain resource through the second port connected to the first radio frequency channel.

Therefore, for the second communication apparatus that includes only one radio frequency channel including at least two ports, positioning may alternatively be performed based on the phase information corresponding to the first reference signal sent by the second communication apparatus, to reduce a requirement on hardware of the second communication apparatus in a solution of performing positioning based on phase information, and reduce costs of the second communication apparatus.

In a possible implementation, the first part of the first reference signal is used to determine one of the plurality of pieces of first phase information, and the second part of the first reference signal is used to determine another one of the plurality of pieces of first phase information.

Because the first communication apparatus may determine the plurality of pieces of first phase information by using one reference signal, a quantity of reference signals used to calculate an angle of departure can be reduced, to save network resources and reduce a latency.

In a possible implementation, before the second communication apparatus sends the first reference signal to the first communication apparatus on the plurality of time domain resources, the method further includes: The second communication apparatus determines second configuration information of the first reference signal, where the second configuration information includes fourth indication information, the fourth indication information indicates S1 time domain resources, S1 is an integer greater than 1, and the S1 time domain resources are the plurality of time domain resources used to send the first reference signal.

In a possible implementation, the second configuration information further includes at least one of the following content: information about a quantity of time domain resource units between two of the S1 time domain resources; and/or information about the S1 time domain resources. This can improve solution flexibility.

In a possible implementation, two adjacent time domain resources in the S1 time domain resources are separated by at least one time domain resource unit. For beneficial effects, refer to the foregoing content. Details are not described herein again.

In a possible implementation, adjacent time domain resources in the S1 time domain resources are separated by Q1 time domain resource units, where Q1 is a positive integer. For beneficial effects, refer to the foregoing content. Details are not described herein again.

In a possible implementation, one time domain resource unit is one or more time domain symbols. For beneficial effects, refer to the foregoing content. Details are not described herein again.

In a possible implementation, the second configuration information further includes a correspondence between the S1 time domain resources and the plurality of ports, where S1 is an integer greater than 1. That the second communication apparatus sends the first reference signal to the first communication apparatus on the S1 time domain resources based on the second configuration information includes: For time domain resources in the S1 time domain resources, the second communication apparatus sends the first reference signal to the first communication apparatus through a port corresponding to the time domain resources.

In a possible implementation, two adjacent time domain resources in the S1 time domain resources correspond to two different ports. For beneficial effects, refer to the foregoing content. Details are not described herein again.

In a possible implementation, one of the plurality of ports corresponds to one or more of the S1 time domain resources. For beneficial effects, refer to the foregoing content. Details are not described herein again.

In a possible implementation, the second configuration information further includes information about a frequency domain resource corresponding to the first reference signal. For beneficial effects, refer to the foregoing content. Details are not described herein again.

According to a third aspect, an embodiment of this application provides a reference signal transmission method. The method includes: A second communication apparatus receives second phase information; and the second communication apparatus determines an angle of departure of a first reference signal based on the second phase information.

The second phase information is determined based on a plurality of pieces of first phase information, and the plurality of pieces of first phase information are determined based on the first reference signal.

In another possible implementation provided in this application, the second communication apparatus in this implementation may determine the angle of departure of the first reference signal based on the plurality of pieces of first phase information of the first reference signal. Therefore, when an angle used for positioning needs to be determined, there may be one more optional solution.

In a possible implementation, the second phase information includes at least one of the following content: at least two of the plurality of pieces of first phase information; at least one piece of phase difference information corresponding to the plurality of pieces of first phase information; or average information of at least one piece of phase difference information. For beneficial effects, refer to the foregoing content. Details are not described herein again.

In a possible implementation, when the second phase information includes at least two pieces of first phase information, a sequence of the at least two pieces of first phase information in the second phase information matches a sequence of time domain resources corresponding to the at least two pieces of first phase information; or a sequence of the at least two pieces of first phase information in the second phase information matches a sequence of identifiers of ports corresponding to the at least two pieces of first phase information. For beneficial effects, refer to the foregoing content. Details are not described herein again.

In a possible implementation, when the second phase information includes at least two pieces of phase difference information corresponding to the plurality of pieces of first phase information, a sequence of the at least two pieces of phase difference information in the second phase information matches a sequence of time domain resources corresponding to the phase difference information; or a sequence of the at least two pieces of phase difference information in the second phase information matches a sequence of identifiers of ports corresponding to the phase difference information. For beneficial effects, refer to the foregoing content. Details are not described herein again.

In a possible implementation, after the second communication apparatus sends the first reference signal to the first communication apparatus on the plurality of time domain resources, the method further includes: The second communication apparatus receives reliability information of the second phase information. For beneficial effects, refer to the foregoing content. Details are not described herein again.

In a possible implementation, the reliability information of the second phase information includes standard deviation information and/or variance information corresponding to the plurality of pieces of first phase information. For beneficial effects, refer to the foregoing content. Details are not described herein again.

In a possible implementation, after the second communication apparatus sends the first reference signal to the first communication apparatus on the plurality of time domain resources, the method further includes: The second communication apparatus receives first indication information, where the first indication information indicates a correspondence between a parameter in the second phase information and an identifier of a port used to send the first reference signal.

In this way, the second communication apparatus can determine, based on the first indication information, ports corresponding to parameters in the second phase information, so that the second communication apparatus determines a spacing between the ports corresponding to the parameters in the second phase information, and calculates the angle of departure based on the spacing.

In a possible implementation, the plurality of pieces of first phase information are in a one-to-one correspondence with the plurality of time domain resources used to send the first reference signal. For one of the plurality of pieces of first phase information, the first phase information is determined based on a normal path and/or an additional path through which a signal sent on a time domain resource corresponding to the first phase information arrives at the first communication apparatus. For beneficial effects, refer to the foregoing content. Details are not described herein again.

According to a fourth aspect, an embodiment of this application provides a positioning method based on an angle used for positioning. The method includes: A positioning server receives a plurality of pieces of first angle-of-departure information, where one piece of the plurality of pieces of first angle-of-departure information is determined based on a plurality of pieces of first phase information determined by a first communication apparatus, and the plurality of pieces of first phase information are determined based on a first reference signal. The positioning server determines location information of the first communication apparatus based on the plurality of pieces of first angle-of-departure information.

The first communication apparatus determines the plurality of pieces of phase information based on the first reference signal. Therefore, an angle of departure of the reference signal may be further determined based on the plurality of pieces of phase information. It can be learned that this application may provide a solution of determining an angle (for example, an AOD) based on phase information, and then positioning the first communication apparatus. Therefore, when the location information of the first communication apparatus needs to be determined, there may be one more optional solution.

In another possible implementation, the second communication apparatus may alternatively receive the first angle-of-departure information, and then the second communication apparatus sends the first angle-of-departure information to the positioning server.

In a possible implementation, the first angle-of-departure information includes: at least one piece of angle-of-departure information corresponding to the plurality of pieces of first phase information, where the at least one piece of angle-of-departure information is determined based on the plurality of pieces of first phase information and a spacing between the ports used to send the first reference signal; at least one piece of first angle-of-departure average information corresponding to the plurality of pieces of first phase information, where the at least one piece of first angle-of-departure average information is determined based on at least two of the at least one piece of angle-of-departure information; or at least one piece of second angle-of-departure average information corresponding to the plurality of pieces of first phase information, where the at least one piece of second angle-of-departure average information is determined based on average information of the phase difference information corresponding to the plurality of pieces of first phase information and port spacing average information, and a port spacing average is determined based on an average of spacings between the plurality of ports used to send the first reference signal.

For beneficial effects, refer to the foregoing content. Details are not described herein again.

In a possible implementation, when the first angle-of-departure information includes a plurality of pieces of angle-of-departure information corresponding to the plurality of pieces of first phase information, a sequence of the plurality of pieces of angle-of-departure information in the first angle-of-departure information matches a sequence of the time domain resources corresponding to the plurality of pieces of first phase information; or a sequence of the plurality of pieces of angle-of-departure information in the first angle-of-departure information matches a sequence of identifiers of ports corresponding to the plurality of pieces of first phase information. For beneficial effects, refer to the foregoing content. Details are not described herein again.

In a possible implementation, before the positioning server determines the location information of the first communication apparatus based on the plurality of pieces of first angle-of-departure information, the method further includes: The positioning server receives reliability information of the first angle-of-departure information. In this way, when the positioning server determines the location information of the first communication apparatus based on the plurality of pieces of first angle-of-departure information, calculation may be performed with reference to the reliability information of the first angle-of-departure information, so that accuracy of positioning the first communication apparatus can be improved.

In a possible implementation, the reliability information of the first angle-of-departure information includes standard deviation information and/or variance information of the plurality of pieces of angle-of-departure information corresponding to the plurality of pieces of first phase information.

In a possible implementation, before the positioning server determines the location information of the first communication apparatus based on the plurality of pieces of first angle-of-departure information, the method further includes: The positioning server receives second indication information. The second indication information indicates a correspondence between a parameter in the first angle-of-departure information and an identifier of a port used to send the first reference signal.

According to a fifth aspect, an embodiment of this application provides another reference signal transmission method. The method includes: A second communication apparatus receives a second reference signal. The second communication apparatus determines a plurality of pieces of third phase information corresponding to the second reference signal received on a plurality of time domain resources. The second communication apparatus determines an angle of arrival of the second reference signal based on the plurality of pieces of third phase information.

The second communication apparatus determines the plurality of pieces of third phase information corresponding to the second reference signal based on the plurality of time domain resources. Therefore, the angle of arrival of the reference signal may be further determined based on the plurality of pieces of third phase information. It can be learned that this application may provide a solution of determining an angle (for example, an AOA) based on phase information, so that when an angle used for positioning needs to be determined, there may be one more optional solution.

In a possible implementation, that the second communication apparatus determines a plurality of pieces of third phase information corresponding to the second reference signal received on a plurality of time domain resources includes: The second communication apparatus receives a first part of the second reference signal on a fifth time domain resource, and determines one of the plurality of pieces of third phase information based on the first part of the second reference signal; and the second communication apparatus receives a second part of the second reference signal on a sixth time domain resource, and determines another one of the plurality of pieces of third phase information based on the second part of the second reference signal.

Because the second communication apparatus may determine the plurality of pieces of third phase information by using one reference signal, a quantity of reference signals used to calculate the angle of arrival can be reduced, to save network resources and reduce a latency.

In a possible implementation, that a second communication apparatus receives a second reference signal includes: The second communication apparatus receives the first part of the second reference signal on the fifth time domain resource through a third port; and the second communication apparatus receives the second part of the second reference signal on the sixth time domain resource through a fourth port.

Because the first part and the second part of the second reference signal are received through different ports of the second communication apparatus, after obtaining the plurality of pieces of phase information through measurement based on signals received through different ports, the second communication apparatus may calculate the angle of arrival with reference to phase difference information of the plurality of pieces of phase information and a spacing between ports. In addition, because the second communication apparatus receives different parts of a same reference signal through different ports, and the second communication apparatus may determine the plurality of pieces of third phase information by using one reference signal, a quantity of reference signals used to calculate the angle of arrival can be reduced, to save network resources and reduce a latency.

In a possible implementation, that the second communication apparatus receives the first part of the second reference signal on the fifth time domain resource through a third port includes: The second communication apparatus receives the first part of the second reference signal on the fifth time domain resource through the third port connected to a second radio frequency channel. That the second communication apparatus receives the second part of the second reference signal on the sixth time domain resource through a fourth port includes: The second communication apparatus receives the second part of the second reference signal on the sixth time domain resource through the fourth port connected to the second radio frequency channel.

Therefore, for the second communication apparatus that includes only one radio frequency channel including at least two ports, positioning may alternatively be performed based on the phase information corresponding to the second reference signal sent by the first communication apparatus, to reduce a requirement on hardware of the second communication apparatus in a solution of performing positioning based on phase information, and reduce costs of the second communication apparatus.

In a possible implementation, before the second communication apparatus receives the second reference signal, the method further includes: The second communication apparatus obtains fourth configuration information of the second reference signal, where the fourth configuration information includes indication information of the plurality of time domain resources used to determine the phase information.

Because the second communication apparatus may receive the second reference signal based on the fourth configuration information, the fourth configuration information may be more appropriately set for the second communication apparatus based on an application scenario, so that a solution executed on the second communication apparatus side is more appropriate. In addition, a manner of flexibly setting the fourth configuration information may improve flexibility of the solution.

In a possible implementation, the indication information of the plurality of time domain resources used to determine the phase information includes information used to determine a quantity of time domain resource units between two of the plurality of time domain resources used to determine the phase information. In this way, the second communication apparatus may determine, based on the information about the quantity of time domain resource units between the two time domain resources, the plurality of time domain resources used to determine the phase information, determine the phase information based on signals received on the plurality of time domain resources, and perform port switching at locations of a plurality of time domain resource spacings.

In a possible implementation, the indication information of the plurality of time domain resources used to determine the phase information includes information about the plurality of time domain resources used to determine the phase information.

In a possible implementation, the plurality of time domain resources used to determine the phase information are separated by at least one time domain resource unit. In this way, when two adjacent time domain resources in the plurality of time domain resources correspond to two different ports, the second communication apparatus may have time to perform a port switching action between the adjacent time domain resources in the plurality of time domain resources.

In a possible implementation, the plurality of time domain resources used to determine the phase information are separated by Q2 time domain resource units, where Q2 is a positive integer. In this way, this solution can be regular, and a quantity of bits occupied by information indicating a spacing between the time domain resources in the plurality of time domain resources can be further reduced.

In a possible implementation, one time domain resource unit is one or more time domain symbols. In this way, the second communication apparatus can obtain the plurality of pieces of first phase information at a symbol granularity, and then can determine the angle of departure based on at least one piece of phase information, to reduce a latency in a solution of calculating the angle of departure based on behavior information.

In a possible implementation, the fourth configuration information further includes a correspondence between the plurality of time domain resources used to determine the phase information and a plurality of ports. That a second communication apparatus receives a second reference signal includes: For a time domain resource in the plurality of time domain resources used to determine the phase information, the second communication apparatus receives the second reference signal through a port corresponding to the time domain resource. In this way, the second communication apparatus may perform port switching based on the fourth configuration information. Because the fourth configuration information may be flexibly configured, flexibility of the solution can be improved.

In a possible implementation, two adjacent time domain resources in the plurality of time domain resources used to determine the phase information correspond to two different ports. In this way, the second communication apparatus may obtain two pieces of different third phase information based on signals received on two adjacent time domain resources in the plurality of time domain resources. A phase difference may be obtained by using the two pieces of different third phase information. When ports corresponding to every two adjacent time domain resources are different, a maximum quantity of phase differences may be obtained, so that precision of the angle of arrival can be improved.

In a possible implementation, one of the plurality of ports corresponds to one or more of the plurality of time domain resources used to determine the phase information. In this way, in a process in which the second communication apparatus receives the second reference signal on the plurality of time domain resources, one port is used once. In this way, the second communication apparatus may receive the second reference signal through as many different ports as possible, and then the second communication apparatus may obtain third phase information corresponding to more different ports. More phase differences may be obtained based on third phase information corresponding to more different ports. It can be learned that, in this solution, a quantity of phase differences may be increased, to further improve precision of the angle of arrival.

In a possible implementation, the fourth configuration information further includes information about a frequency domain resource corresponding to the second reference signal.

In a possible implementation, the plurality of pieces of third phase information are in a one-to-one correspondence with the plurality of time domain resources used to determine the phase information. For a piece of third phase information in the plurality of pieces of third phase information, the third phase information is determined based on a normal path and/or an additional path through which a signal received on a time domain resource corresponding to the third phase information arrives at the second communication apparatus. This can improve solution flexibility.

According to a sixth aspect, a communication apparatus is provided. The communication apparatus may be the first communication apparatus, the second communication apparatus, or the third communication apparatus. The communication apparatus may include a communication unit and a processing unit, to perform any implementation of any method according to the first aspect to the fifth aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any implementation of any method according to the first aspect to the fifth aspect.

According to a seventh aspect, a communication apparatus is provided. The communication apparatus may be the first communication apparatus, the second communication apparatus, or the third communication apparatus. The communication apparatus may include a processor and a memory. Optionally, a transceiver is further included. The memory is configured to store a computer program or instructions. The processor is configured to invoke the computer program or the instructions from the memory and run the computer program or the instructions. When the processor executes the computer program or the instructions in the memory, the communication apparatus is enabled to perform any implementation of any method according to the first aspect to the fifth aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to an eighth aspect, a communication apparatus is provided. The communication apparatus may be the first communication apparatus, the second communication apparatus, or the third communication apparatus. The communication apparatus may include a processor. The processor is coupled to a memory, and may be configured to perform the method according to any one of the first aspect to the fifth aspect and any one of the possible implementations of the first aspect to the fifth aspect. Optionally, the communication apparatus further includes the memory. Optionally, the communication apparatus further includes a communication interface, and the processor is coupled to the communication interface.

In an implementation, when the communication apparatus is a wireless communication device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a ninth aspect, a system is provided. The system includes the first communication apparatus and the second communication apparatus, and may further include the third communication apparatus.

According to a tenth aspect, a computer program product is provided. The computer program product includes a computer program (which may also be referred to as code or instructions). When the computer program is run, a computer is enabled to perform the method according to any possible implementation of the first aspect, or the computer is enabled to perform the method according to any implementation of the first aspect to the fifth aspect.

According to an eleventh aspect, a computer-readable storage medium is provided. The computer-readable medium stores a computer program (which may also be referred to as code or instructions). When the computer program is run on a computer, the computer is enabled to perform the method according to any possible implementation of the first aspect, or the computer is enabled to perform the method according to any implementation of the first aspect to the fifth aspect.

According to a twelfth aspect, a chip system is provided, and the chip system may include a processor. The processor is coupled to a memory, and may be configured to perform the method according to any one of the first aspect to the fifth aspect and any possible implementation according to any one of the first aspect to the fifth aspect. Optionally, the chip system further includes the memory. The memory is configured to store a computer program (which may also be referred to as code or instructions). The processor is configured to invoke the computer program from the memory and run the computer program, so that a device ion which the chip system is installed performs the method according to any one of the first aspect to the fifth aspect and any possible implementation according to any one of the first aspect to the fifth aspect.

According to a thirteenth aspect, a communication apparatus is provided. The communication apparatus may be the first communication apparatus, the second communication apparatus, or the third communication apparatus. The communication apparatus may include an interface circuit and a processing circuit. The interface circuit may include an input circuit and an output circuit. The processing circuit is configured to receive a signal through the input circuit, and transmit a signal through the output circuit, so that the method according to any one of the first aspect to the fifth aspect and any possible implementation according to the first aspect to the fifth aspect are implemented.

In a specific implementation process, the communication apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver. A signal output by the output circuit may be, for example, but not limited to, output to and transmitted by the transmitter. The input circuit and the output circuit may be a same circuit, and the circuit is configured as the input circuit and the output circuit at different moments. Specific implementations of the processor and various circuits are not limited in embodiments of this application.

In an implementation, when the communication apparatus is a wireless communication device, the wireless communication device may be a terminal like a smartphone or a radio access network device like a base station. The interface circuit may be a radio frequency processing chip in the wireless communication device, and the processing circuit may be a baseband processing chip in the wireless communication device.

In another implementation, the communication apparatus may be a part of components in a wireless communication device, for example, an integrated circuit product like a system chip or a communication chip. The interface circuit may be an input/output interface, an interface circuit, an output circuit, an input circuit, a pin, a related circuit, or the like on the chip or the chip system. The processing circuit may be a logic circuit on the chip.

**BRIEF DESCRIPTION OF DRAWINGS**

FIG. 1a is a diagram of a possible network architecture to which an embodiment of this application is applicable;
FIG. 1b is a diagram of another possible network architecture to which an embodiment of this application is applicable;
FIG. 1c is a diagram of a possible network architecture to which an embodiment of this application is applicable;
FIG. 2 is a diagram of a possible structure of a possible wireless communication apparatus according to an embodiment of this application;
FIG. 3 is a diagram of a spacing between two ports (a port a and a port b) deployed in a communication apparatus;
FIG. 4 is a schematic flowchart of a possible AOD determining method according to an embodiment of this application;
FIG. 5a is a diagram of a structure of a possible communication apparatus according to an embodiment of this application;
FIG. 5b is a diagram of a structure of a communication apparatus obtained by adding a switch to the communication apparatus shown in FIG. 5a;
FIG. 6 is a diagram in which a first radio frequency channel 43 in FIG. 5b is connected to a port in a port array 44 through a switch 45;
FIG. 7a is a diagram of a possible pattern of S1 time domain resources corresponding to a first reference signal according to an embodiment of this application;
FIG. 7b is a diagram of another possible pattern of S1 time domain resources corresponding to a first reference signal according to an embodiment of this application;
FIG. 7c is an example of a possible correspondence between S 1 time domain resources and ports according to an embodiment of this application;
FIG. 7d is an example of another possible correspondence between S1 time domain resources and ports according to an embodiment of this application;
FIG. 8A and FIG. 8B are a schematic flowchart of another possible AOD determining method according to an embodiment of this application;
FIG. 9 is a possible diagram of determining an angle of departure of a first reference signal based on phase difference information according to an embodiment of this application;
FIG. 10 is a diagram of a possible AOD-based positioning solution according to an embodiment of this application;
FIG. 11A and FIG. 11B are a schematic flowchart of another possible AOD determining method according to an embodiment of this application;
FIG. 12 is a schematic flowchart of another possible AOD determining method according to an embodiment of this application;
FIG. 13A and FIG. 13B are a schematic flowchart of another possible AOD determining method according to an embodiment of this application;
FIG. 14 is a schematic flowchart of a possible AOA determining method according to an embodiment of this application;
FIG. 15 is a diagram in which a second radio frequency channel 53 in FIG. 5b is connected to a port in a port array 54 through a switch 55;
FIG. 16A and FIG. 16B are a schematic flowchart of another possible AOA determining method according to an embodiment of this application;
FIG. 17 is a possible diagram of determining an angle of arrival of a second reference signal based on phase difference information according to an embodiment of this application;
FIG. 18 is a diagram of a structure of another communication apparatus according to an embodiment of this application;
FIG. 19 is a diagram of a structure of another communication apparatus according to an embodiment of this application; and
FIG. 20 is a diagram of a structure of another communication apparatus according to an embodiment of this application.

## DESCRIPTION OF EMBODIMENTS

The following further describes in detail embodiments of this application with reference to the accompanying drawings.

A reference signal transmission method provided in embodiments of this application may be applied to a plurality of industries and services, to determine an angle used for positioning. The angle used for positioning may be an AOD or an AOA. The angle used for positioning may be used with reference to another parameter to position a person and an object, so as to obtain location information of the person and the object. Further, application development may be performed based on the location information.

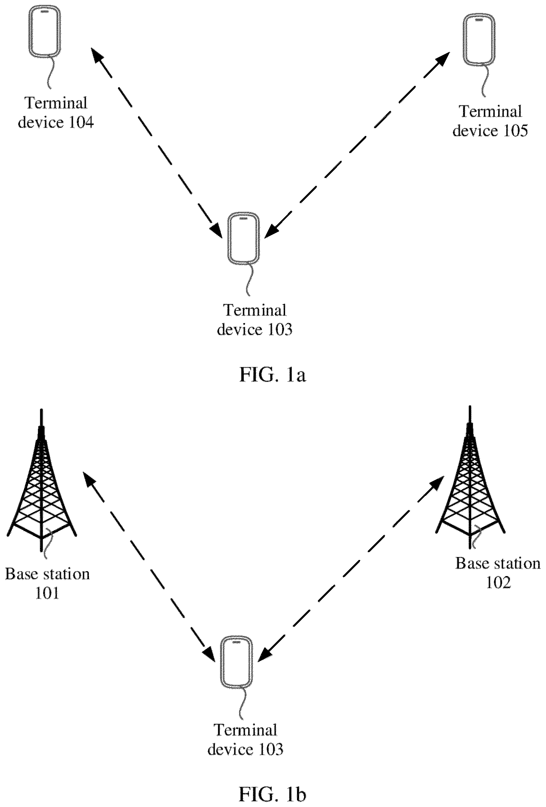

FIG. 1a and FIG. 1b are examples of diagrams of two possible system architectures to which embodiments of this application are applicable. As shown in FIG. 1a, in a possible implementation, a terminal device 104 sends a reference signal, a terminal device 103 measures the received reference signal to obtain a measurement result, and the terminal device 104 further determines, based on the measurement result, an AOD of the signal sent by the terminal device 104. Similarly, a terminal device 105 sends a reference signal, the terminal device 103 measures the received reference signal to obtain a measurement result, and the terminal device 105 further determines, based on the measurement result, an AOD of the signal sent by the terminal device 105. AODs corresponding to at least two other terminal devices may be used to position the terminal device 103.

In embodiments of this application, when two terminal devices need to communicate with each other, communication may be performed based on a sidelink (direct link), and the sidelink is a link for data communication between the two terminal devices through a PC5 interface. The sidelink in embodiments of this application may also be referred to as a direct link, or may be referred to as a side link. When the terminal device is positioned based on the sidelink, the positioning solution may also be referred to as sidelink positioning.

In another possible implementation, the terminal device 103 sends a reference signal, the terminal device 104 measures the received reference signal to obtain a measurement result, and the terminal device 104 further determines, based on the measurement result, an AOA corresponding to the terminal device 103. The terminal device 104 may obtain a relative direction of the terminal device 103. Similarly, the terminal device 105 determines, based on a reference signal sent by the terminal device 103, an AOA corresponding to the terminal device 105. AOAs corresponding to at least two other terminal devices at known locations may be used to position the terminal device 103.

It can be learned from the system architecture shown in FIG. 1a that the solution for determining the angle used for positioning provided in embodiments of this application may be applied to a scenario including two terminal devices. The solution provided in embodiments of this application may also be applied to a scenario including a network device and a terminal device. As shown in FIG. 1b, in a possible implementation, a base station 101 sends a reference signal, the terminal device 103 measures the received reference signal to obtain a measurement result, and the base station 101 further determines, based on the measurement result, an AOD of the signal sent by the base station 101. Similarly, a base station 102 sends a reference signal, the terminal device 103 measures the received reference signal to obtain a measurement result, and the base station 102 further determines, based on the measurement result, an AOD of the signal sent by the base station 102. AODs corresponding to at least two base stations may be used to position the terminal device 103.

In another possible implementation, the terminal device 103 sends a reference signal, the base station 101 measures the received reference signal to obtain a measurement result, and the base station 101 further determines, based on the measurement result, an AOA corresponding to the base station 101. Similarly, the base station 102 determines, based on a reference signal sent by the terminal device 103, an AOA corresponding to the base station 102. AOAs corresponding to at least two base stations may be used to position the terminal device 103.

In addition to the two possible application scenarios shown in FIG. 1a and FIG. 1b, embodiments of this application may be further applied to another scenario. For another example, positioning of a base station is implemented by using AODs or AOAs corresponding to at least two terminal devices.

The technical solutions provided in embodiments of this application are mainly applicable to a wireless communication system. The wireless communication system may comply with a wireless communication standard of the 3rd Generation Partnership Project (3rd Generation Partnership Project, 3GPP). For example, the solutions provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or may be applied to various future communication systems, for example, a 6th generation (6th generation, 6G) communication system. The technical solutions provided in embodiments of this application may also comply with other wireless communication standards, for example, a wireless communication standard of the Institute of Electrical and Electronics Engineers (Institute of Electrical and Electronics Engineers, IEEE) 802 series (for example, 802.11, 802.15, or 802.20). The method provided in embodiments of this application may be further applied to a Bluetooth system, a Wi-Fi system, a LoRa system, or an internet of vehicles system. The method provided in embodiments of this application may be further applied to a satellite communication system. The satellite communication system may be integrated with the foregoing communication system.

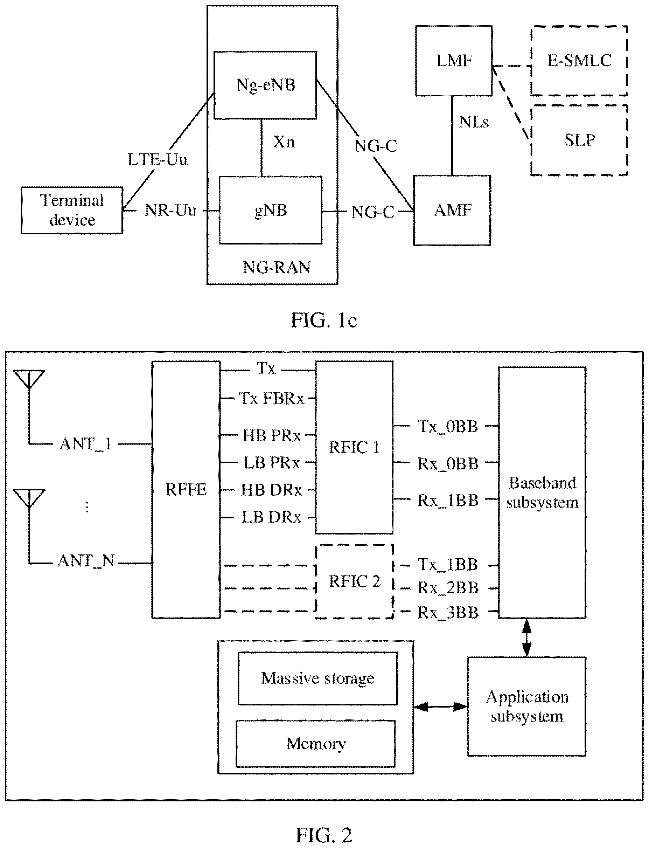

For ease of description, in embodiments of this application, a 5G network architecture shown in FIG. 1c is used as an example to show a diagram of a possible network architecture to which embodiments of this application are applicable. The possible network architecture to which this application is applicable may include three parts: a terminal device, an access network device (also referred to as a next generation (next generation, NG) radio access network (radio access network, RAN) device), and a core network (core network).

The terminal device may include a device that provides a user with voice and/or data connectivity, for example, may include a handheld device having a wireless connection function, or a processing device connected to a wireless modem. The terminal device may communicate with a core network through a radio access network (radio access network, RAN), and exchange a voice and/or data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal) device, an access terminal (access terminal) device, a user terminal (user terminal) device, a user agent (user agent), a user device (user device), or the like. For example, the terminal device may include a mobile phone (or referred to as a "cellular" phone), a computer having a mobile terminal device, or a portable, pocket-sized, handheld, or a computer-embedded mobile apparatus. For example, the terminal device is a device like a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). Alternatively, the terminal device may be a tablet computer or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal device further includes a limited device, for example, a device with low power consumption, a device with a limited storage capability, or a device with a limited computing capability. For example, the terminal device includes an information sensing device, for example, a barcode, radio frequency identification (radio frequency identification, RFID), a sensor, a global positioning system (global positioning system, GPS), or a laser scanner.

The access network (access network, AN) device (for example, a base station) may be a device that communicates with a wireless terminal device over an air interface through one or more cells in an access network. For example, the access network device may include an evolved NodeB (NodeB, eNB, or e-NodeB, evolved NodeB) in an LTE system or long term evolution-advanced (long term evolution-advanced, LTE-A), or may include a next generation NodeB (next generation NodeB, gNB) in a new radio (new radio, NR) system in a 5th generation (5th generation, 5G) mobile communication technology, or may include a central unit (central unit, CU) and a distributed unit (distributed unit, DU) in a cloud radio access network (cloud radio access network, Cloud RAN) system. This is not limited in embodiments of this application.

As shown in FIG. 1c, an example in which an access network includes a gNB and an Ng-eNB is used for presentation. The Ng-eNB is an LTE base station, and the gNB is an NR base station. The terminal device may communicate with a serving base station through a Uu link. For example, the terminal device may communicate with the Ng-eNB through an LTE-Uu link, and may communicate with the gNB through an NR-Uu link. Base stations may communicate with each other through an Xn interface.

Positioning-related network elements in the core network mainly include an access and mobility management function (access and mobility management function, AMF) network element and a location management function (location management function, LMF) network element, and may further include an evolved serving mobile location center (evolved serving mobile location center, E-SMLC) network element, a unified data management (unified data management, UDM) network element, and an application function (application function, AF) network element.

The base station may communicate with the AMF network element through an NG-C interface, and the AMF network element may be equivalent to a router for communication between the gNB and the LMF.

The LMF network element may estimate a location of the terminal device, and the AMF communicates with the LMF through an NLs interface.

The E-SMLC network element is mainly responsible for processing a positioning request of a positioning service, and selecting an appropriate AMF network element for the positioning service.

A service location protocol (service location protocol, SLP) network element may also communicate with the LMF network element, and may be responsible for processing a positioning request of a positioning service.

Application scenarios to which embodiments of this application are applicable may further include a location management component (location management component, LMC). The LMC may be a part of functional components of the LMF, and may be integrated into a gNB on an NG-RAN side.

The mobility management network element, the location management network element, and the service location protocol network element in embodiments of this application may be the AMF, the LMF, the E-SMLC, and the SLP in FIG. 1c, or may be network elements that have functions of the AMF, the LMF, the E-SMLC, and the SLP in a future communication network, for example, a 6th generation (6th generation, 6G) network. This is not limited in this application. For ease of description, in this application, an example in which the mobility management network element, the location management network element, and the service location protocol network element are the AMF, the LMF, the E-SMLC, and the SLP is used for description.

Based on the foregoing content, FIG. 2 is a diagram of a possible structure of a wireless communication apparatus according to an embodiment of this application. The wireless communication apparatus may be the terminal device in embodiments of this application, for example, may be the terminal device in FIG. 1a, FIG. 1b, or FIG. 1c. Alternatively, the wireless communication apparatus may be the network device in embodiments of this application. The network device in embodiments of this application may be the access network device in FIG. 1b or FIG. 1c, for example, may be the base station in FIG. 1b or FIG. 1c.

In a possible implementation, the wireless communication apparatus may include a processing circuit and an interface circuit. The interface circuit may include an input circuit and an output circuit. The processing circuit is configured to receive a signal through the input circuit, and transmit a signal through the output circuit, so that the following methods are implemented. For example, when the wireless communication apparatus is a terminal device, the processing circuit may perform, by controlling the interface circuit, the following method steps that may be performed on a terminal device side. For another example, when the wireless communication apparatus is a network device, the processing circuit may perform, by controlling the interface circuit, the following method steps that may be performed on a network device side, and the like.

In an implementation, the interface circuit may alternatively be a radio frequency processing chip in the wireless communication apparatus, and the processing circuit may be a baseband processing chip in the wireless communication apparatus.

In another implementation, the wireless communication apparatus may be a part of components in a wireless communication device, for example, an integrated circuit product like a system chip or a communication chip. The interface circuit may be an input/output interface, an interface circuit, an output circuit, an input circuit, a pin, a related circuit, or the like on the chip or the chip system. The processing circuit may be a logic circuit on the chip.

In another implementation, the processing circuit in this embodiment of this application may alternatively be a processor or a part of modules or units in a processor, and the interface circuit may alternatively be a radio frequency channel or a part of components in a radio frequency channel. The processor is configured to control the radio frequency channel, so that the following related methods are implemented.

As shown in FIG. 2, the wireless communication apparatus may include a plurality of components, for example, an application subsystem, a memory (memory), a massive storage (massive storage), a baseband subsystem, a radio frequency integrated circuit (radio frequency integrated circuit, RFIC), a radio frequency front end (radio frequency front end, RFFE) component, and an antenna (antenna, ANT). These components may be coupled through various interconnection buses or in another electrical connection manner.

The application subsystem in FIG. 2 may be a disposed processor in FIG. 2, or may be a module in a processor.

In FIG. 2, ANT_1 represents a first antenna, ANT_N represents an $N^{th}$ antenna, and N is a positive integer greater than 1. Tx indicates a transmit path, Rx indicates a receive path, and different numbers indicate different paths. Each path may represent a signal processing channel. FBRx represents a feedback receiving path, PRx represents a primary receiving path, and DRx represents a diversity receiving path. HB indicates a high frequency, LB indicates a low frequency, and HB and LB indicate relative magnitudes of frequencies. BB indicates a baseband. It should be understood that marks and components in FIG. 2 are merely used for illustration, and are merely used as a possible implementation. Embodiments of this application further include another implementation. For example, the communication apparatus may include more or fewer paths, and include more or fewer components.

The application subsystem may be used as a main control system or a main computing system of the communication apparatus, and is configured to: run a main operating system and an application program, manage software and hardware resources of the entire communication apparatus, and provide a user operation interface for a user. In addition, the application subsystem may also include driver software related to another subsystem (for example, the baseband subsystem). The application subsystem may include one or more processors.

In FIG. 2, the radio frequency integrated circuit (including an RFIC 1 and one or more optional RFICs 2) and the radio frequency front end component may jointly form a radio frequency subsystem. Based on different signal receiving or transmitting paths, the radio frequency subsystem may also be classified into a radio frequency receive path (RF receive path) and a radio frequency transmit path (RF transmit path). The radio frequency receive path may receive a radio frequency signal through an antenna, perform processing (such as amplification, filtering, and down-conversion) on the radio frequency signal to obtain a baseband signal, and transfer the baseband signal to the baseband subsystem. The radio frequency transmit path may receive a baseband signal from the baseband subsystem, perform processing (such as up-conversion, amplification, and filtering) on the baseband signal to obtain a radio frequency signal, and finally radiate the radio frequency signal to space through an antenna. The radio frequency integrated circuit may be referred to as a radio frequency processing chip or a radio frequency chip.

Specifically, the radio frequency subsystem may include electronic components such as an antenna switch, an antenna tuner, a low noise amplifier (low noise amplifier, LNA), a power amplifier (power amplifier, PA), a mixer (mixer), a local oscillator (local oscillator, LO), and a filter (filter), and the electronic components may be integrated into one or more chips as required. The radio frequency integrated circuit may be referred to as a radio frequency processing chip or a radio frequency chip. The radio frequency front end device may also be an independent chip. The radio frequency chip is also sometimes referred to as a receiver (receiver), a transmitter (transmitter), or a transceiver (transceiver). With evolution of technologies, the antenna sometimes may also be considered as a part of the radio frequency subsystem, and may be integrated into a chip of the radio frequency subsystem. The antenna, the radio frequency front end component, and the radio frequency chip may all be manufactured and sold separately. Certainly, the radio frequency subsystem may alternatively use different components or different integration manners based on power consumption and performance requirements. For example, some components belonging to a radio frequency front end are integrated into a radio frequency chip, or even both the antenna and the radio frequency front end component are integrated into a radio frequency chip. The radio frequency chip may also be referred to as a radio frequency antenna module or an antenna module.

Similar to the radio frequency subsystem that mainly processes the radio frequency signal, the baseband subsystem mainly processes a baseband signal. The baseband subsystem may extract useful information or data bits from a baseband signal, or convert information or data bits into a to-be-sent baseband signal. The information or data bits may be data representing user data or control information such as a voice, a text, and a video. For example, the baseband subsystem may implement signal processing operations such as modulation and demodulation, and encoding and decoding. For different radio access technologies, for example, 5G NR and 4G LTE, baseband signal processing operations are not completely the same.

In addition, because a radio frequency signal is usually an analog signal, and a signal processed by the baseband subsystem is mainly a digital signal, an analog to digital conversion component is further required in the communication apparatus. In this embodiment of this application, the analog to digital conversion component may be disposed in the baseband subsystem or in the radio frequency subsystem. The analog to digital conversion component includes an analog to digital converter (analog to digital converter, ADC) that converts an analog signal into a digital signal, and a digital to analog converter (digital to analog converter, DAC) that converts a digital signal into an analog signal. Similar to the application subsystem, the baseband subsystem may also include one or more processors.

In addition, the communication apparatus further includes a memory, for example, the memory and the massive storage in FIG. 2. In addition, the application subsystem and the baseband subsystem each may further include one or more caches. In embodiments of this application, the memory may be classified into a volatile memory (volatile memory) and a non-volatile memory (non-volatile memory, NVM). The volatile memory is a memory in which data stored in the memory is lost when a power supply is interrupted. At present, the volatile memory is mainly a random access memory (random access memory, RAM), including a static random access memory (static RAM, SRAM) and a dynamic random access memory (dynamic RAM, DRAM). The non-volatile memory is a memory in which data stored in the memory is not lost even if a power supply is interrupted. A common non-volatile memory includes a read-only memory (read-only memory, ROM), an optical disc, a magnetic disk, various memories based on a flash memory (flash memory) technology, and the like. Generally, the volatile memory may be used for the memory and the cache, and the non-volatile memory may be used for the massive storage, for example, a flash memory.

Before the solutions provided in embodiments of this application are described, names and terms in embodiments of this application are first described.

(1) Port

In embodiments of this application, a second communication apparatus may send one reference signal through one logical port. The logical port may include a plurality of physical ports. The plurality of physical ports may be divided into a plurality of groups of ports, and each group of ports may include one or more of the plurality of physical ports. In embodiments of this application, the second communication apparatus may send a first reference signal through one logical port. For example, the second communication apparatus may send the first reference signal by switching a plurality of groups of ports. For example, the second communication apparatus may send a first part of the first reference signal through one group of ports in the plurality of groups of ports, and then send a second part of the first reference signal through another group of ports in the plurality of groups of ports. A "first port" and a "second port" that are used to send the first reference signal and that are mentioned in subsequent content in embodiments of this application may be two groups of ports in the plurality of groups of ports. Each group of ports in the two groups of ports may include one or more physical ports, and physical ports included in the two groups of ports may overlap, or may not overlap.

Similarly, in embodiments of this application, a second communication apparatus may receive one reference signal through one logical port. The logical port may include a plurality of physical ports. The plurality of physical ports may be divided into a plurality of groups of ports, and each group of ports may include one or more of the plurality of physical ports. In embodiments of this application, the second communication apparatus may receive a second reference signal through one logical port. For example, the second communication apparatus may receive the second reference signal by switching a plurality of groups of ports. For example, the second communication apparatus may receive a first part of the second reference signal through one group of ports in the plurality of groups of ports, and then receive a second part of the second reference signal through another group of ports in the plurality of groups of ports. A "third port" and a "fourth port" that are used to receive the second reference signal and that are mentioned in subsequent content in embodiments of this application may be two groups of ports in the plurality of groups of ports. Each group of ports in the two groups of ports may include one or more physical ports, and physical ports included in the two groups of ports may overlap, or may not overlap.

In other words, a port (for example, the "first port" and the "second port" that are used to send the first reference signal or the "third port" and the "fourth port" that are used to receive the second reference signal and that are mentioned in subsequent content) that is on the second communication apparatus side and that is mentioned in embodiments of this application and that is used to communicate (send or receive) a reference signal (for example, the first reference signal or the second reference signal) may be a logical port. The logical port may include one physical port, or may include a plurality of physical ports. When the port includes one physical port, it may also be understood that the port is a physical port.

The port used to communicate (send or receive) a reference signal in embodiments of this application may also be referred to as an antenna, an antenna port, an antenna interface, an antenna transmit port, an antenna receive port, a phase measurement port, or a phase measurement interface. In addition, in embodiments of this application, a physical port that is on the second communication apparatus side and that is used to communicate (send or receive) a reference signal may also be referred to as a physical antenna, a physical antenna port, or a physical antenna interface. In addition, in embodiments of this application, a physical port that is on the second communication apparatus side and that is used to send a reference signal may also be referred to as a physical antenna transmit port, and a physical port that is on the second communication apparatus side and that is used to receive a reference signal may also be referred to as a physical antenna receive port.

The port used to communicate a reference signal mentioned in embodiments of this application may be the antenna (antenna, ANT) mentioned in FIG. 2, or may be understood as a port that is connected to the radio frequency front end and that is of the antenna (antenna, ANT) mentioned in FIG. 2.

(2) Spacing between ports

In embodiments of this application, a concept of a spacing between ports is used in a process of determining an AOA or an AOD. For example, when an AOD corresponding to the second communication apparatus needs to be calculated in subsequent content, calculation needs to be performed with reference to a spacing between the first port and the second port. When an AOA corresponding to the second communication apparatus needs to be calculated, calculation needs to be performed with reference to a spacing between the third port and the fourth port. The following describes a method for calculating the spacing between the ports by using calculation of the spacing between the first port and the second port as an example.

When the first port includes only one physical port, it may also be understood that the first port is a physical port. When the second port includes only one physical port, it may also be understood that the second port is a physical port. In this case, the spacing between the first port and the second port may be a spacing between the two physical ports.

When the first port includes a plurality of physical ports, the first port may be understood as a logical port. When the second port includes a plurality of physical ports, the second port may also be understood as a logical port. In this case, the spacing between the first port and the second port may be a spacing between preset locations of the two logical ports. One logical port corresponds to one preset location. A preset location of a logical port may be a geometric center point of a plurality of physical ports corresponding to the logical port, or may be a location in an area of a plurality of physical ports corresponding to the logical port, for example, may be a location of one physical port in the plurality of physical ports corresponding to the logical port.

When the first port is a physical port and the second port is a logical port, or the first port is a logical port and the second port is a physical port, the spacing between the first port and the second port may be a spacing between a location of the physical port and a preset location of the logical port.

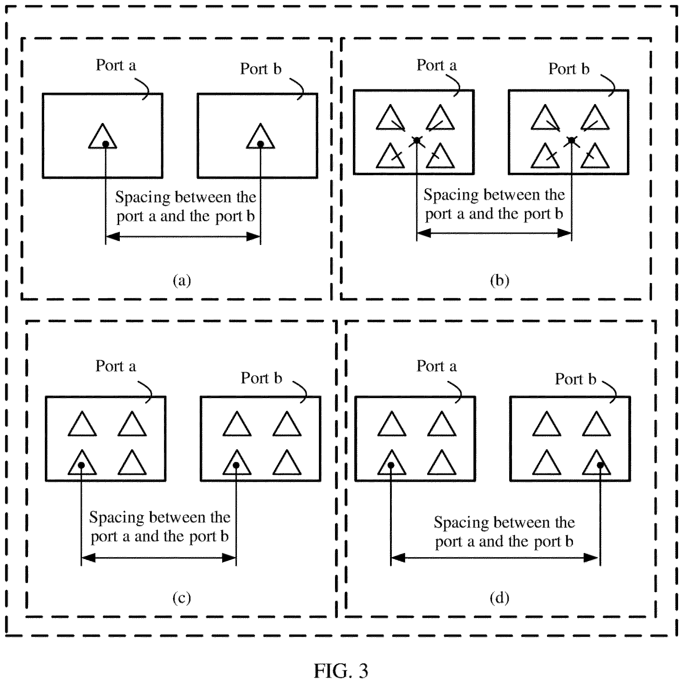

FIG. 3 is an example of a diagram of a spacing between two ports (a port a and a port b) deployed in a communication apparatus. The following provides explanation with reference to FIG. 3. FIG. 3 may be a diagram of deployment of the port a and the port b in a hardware structure of the communication apparatus. The port a may be the first port, and the port b may be the second port; or the port a may be the third port, and the port b may be the fourth port.

As shown in (a) in FIG. 3, the port a is a physical port (or the port a includes one physical port), and the port b is a physical port (or the port b includes one physical port). The spacing between the port a and the port b may be a distance between the port a and the port b.

As shown in (b) in FIG. 3, the port a is a logical port and includes four physical ports (for example, the port a is a 2x2 array); and the port b is a logical port and includes four physical ports (for example, the port a includes a 2x2 port array). A preset location of the port a is a geometric center point of the 2x2 port array. A preset location of the port b is a geometric center point of the 2x2 port array. The spacing between the port a and the port b may be a spacing between the geometric center point corresponding to the port a and the geometric center point corresponding to the port b.

As shown in (c) in FIG. 3, the port a is a logical port and includes four physical ports (for example, the port a is a 2x2 port array); and the port b is a logical port and includes four physical ports (for example, the port a includes a 2x2 port array). A preset location of the port a is a location of a first port in a second row. A preset location of the port b is a location of a first port in a second row. The spacing between the port a and the port b may be a spacing between the first port in the second row corresponding to the port a and the first port in the second row corresponding to the port b.

As shown in (d) in FIG. 3, the port a is a logical port and includes four physical ports (for example, the port a is a 2x2 port array); and the port b is a logical port and includes four physical ports (for example, the port a includes a 2x2 port array). A preset location of the port a is a location of a first port in a second row. A preset location of the port b is a location of a second port in a second row. The spacing between the port a and the port b may be a spacing between the first port in the second row corresponding to the port a and the second port in the second row corresponding to the port b.

The spacing between the ports is merely an example. In a specific implementation, a spacing between two ports may be determined based on an actual situation.

(3) Reference signal.

The reference signal (for example, the first reference signal and the second reference signal mentioned in subsequent content) in embodiments of this application may be a signal used to calculate an angle, for example, may be a positioning reference signal (positioning reference signal, PRS), a sounding reference signal (sounding reference signal, SRS), a channel state information reference signal (channel state information reference signal, CSI-RS), a demodulation reference signal (demodulation reference signal, DMRS), a phase tracking reference signal (phase tracking reference signal, PTRS), a positioning reference signal (positioning reference signal, PRS), a cell reference signal (cell reference signal, CRS), or a synchronization signal/physical broadcast channel block (Synchronization signal/physical broadcast channel block, SS/PBCH block). The SS/PBCH block may be referred to as an SSB for short. For example, the first reference signal may be, for example, a PRS, and the second reference signal may be, for example, an SRS.

The reference signal in embodiments of this application may include a plurality of parts, for example, the first part of the first reference signal and the second part of the first reference signal that are mentioned in subsequent content, and the first part of the second reference signal and the second part of the second reference signal that are mentioned in subsequent content. A part of each reference signal is data on a part of bits of the reference signal.

For example, the first part of the first reference signal is data on some of all bits of the first reference signal, and the second part of the first reference signal is data on some of all the bits of the first reference signal. In other words, the first part of the first reference signal and the second part of the first reference signal are bits in the reference signal that are generated based on a same signal sequence.

For another example, the first part of the second reference signal is data on some of all bits of the second reference signal, and the second part of the second reference signal is data on some of all the bits of the second reference signal. In other words, the first part of the second reference signal and the second part of the second reference signal are bits in a reference signal that are generated based on a same signal sequence.

In another possible implementation, the reference signal in embodiments of this application may correspond to a plurality of segments of time domain symbols. The first reference signal is used as an example for description. All time domain resources occupied by the first reference signal may be divided into a plurality of segments of time domain resources. Each segment of time domain resources includes one or more consecutive time domain symbols, and two adjacent time domain resources are separated by at least one time domain symbol. The second communication apparatus sends the first reference signal on all the time domain resources occupied by the first reference signal, and the second communication apparatus sends, on a segment of time domain resources, data in some of all the bits of the first reference signal.

In embodiments of this application, to-be-sent data that is in the first reference signal and that corresponds to a segment of time domain resources in all the time domain resources occupied by the first reference signal may be referred to as a part of the first reference signal. For example, to-be-sent data that is in the first reference signal and that corresponds to a first segment of time domain resources in all the time domain resources occupied by the first reference signal is referred to as the first part of the first reference signal. To-be-sent data that is in the first reference signal and that corresponds to a second segment of time domain resources in all the time domain resources occupied by the first reference signal is referred to as the second part of the first reference signal. This example is also applicable to the second reference signal. For example, to-be-sent data that is in the second reference signal and that corresponds to a third segment of time domain resources in all the time domain resources occupied by the second reference signal may be referred to as the first part of the second reference signal. To-be-sent data that is in the second reference signal and that corresponds to a fourth segment of time domain resources in all the time domain resources occupied by the second reference signal is referred to as the second part of the second reference signal. The following uses the first reference signal as an example for description. Related content of the second reference signal is similar to that of the first reference signal, and details are not described again.

In embodiments of this application, there is a correspondence between the plurality of segments of time domain resources of the first reference signal and a plurality of ports of the second communication apparatus. For a segment of time domain resources, the second communication apparatus sends some data of the first reference signal on the segment of time domain resources through a port corresponding to the segment of time domain resources. A port 1 corresponding to the first segment of time domain resources in the plurality of segments of time domain resources corresponding to the first reference signal and a port 2 corresponding to the second segment of time domain resources in the plurality of segments of time domain resources corresponding to the first reference signal are two different ports of the second communication apparatus. In this way, the second communication apparatus sends the first reference signal through at least two different ports, so that the first communication apparatus can obtain at least two pieces of phase information based on the first reference signal, and then determine an angle of departure of the first reference signal with reference to the plurality of pieces of phase information corresponding to the first reference signal.

One segment of time domain resources in the plurality of segments of time domain resources corresponding to the first reference signal may correspond to one or more ports of the second communication apparatus. It may be understood that the second communication apparatus sends, through the one or more ports, data that is in some of all the bits of the first reference signal and that corresponds to the time domain resource. One port of the second communication apparatus may also correspond to one or more segments of time domain resources in the plurality of segments of time domain resources. In other words, in a process in which the second communication apparatus sends the first reference signal, one port may be used once or may be used a plurality of times.

In a possible implementation, the plurality of segments of time domain resources corresponding to the first reference signal may belong to a same slot.

In another possible implementation, the plurality of segments of time domain resources corresponding to the first reference signal may alternatively belong to a plurality of slots. For example, the plurality of segments of time domain resources are in a one-to-one correspondence with a plurality of slots. In this case, two of the plurality of segments of time domain resources correspond to two different slots. For another example, one of the plurality of segments of time domain resources corresponds to one or more slots. For another example, one of the plurality of slots corresponds to one or more of the plurality of segments of time domain resources. One slot may correspond to one or more ports of the second communication apparatus, and one port of the second communication apparatus may correspond to one or more of the plurality of slots corresponding to the plurality of segments of time domain resources. For example, the plurality of slots are in a one-to-one correspondence with the plurality of ports of the second communication apparatus. In this case, the second communication apparatus may send the first reference signal in the plurality of slots through the plurality of ports. Data in some of all the bits of the first reference signal is sent in each slot, and two ports used to send the signal in two slots are different.

(3.1) Concept of one reference signal

In a possible implementation, one reference signal in embodiments of this application may be a reference signal corresponding to one resource identifier (resource ID). The following uses the first reference signal as an example for description. Content of the second reference signal is similar to that of the first reference signal, and details are not described again.

For example, when the first reference signal is an SRS, a resource identifier (resource ID) of the first reference signal may be configured in SRS configuration information (SRS-Config). For example, the resource identifier (resource ID) configured in the SRS configuration information (SRS-Config) is 1. The SRS configuration information (SRS-Config) further includes information such as a time domain resource and a frequency domain resource that are configured for the reference signal whose resource identifier (resource ID) is 1. The time domain resources used by the second communication apparatus to send the first reference signal may be a part of or all time domain resources configured for the reference signal whose resource identifier (resource ID) is 1 in the configuration information (SRS-Config).

For example, a time domain resource configured for the reference signal whose resource identifier (resource ID) is 1 in the configuration information (SRS-Config) is a string of consecutive time domain symbols. In an actual process of sending the first reference signal, the second communication apparatus sends the first part of the first reference signal on the third time domain resource through the first port, and sends the second part of the second reference signal on the fourth time domain resource through the second port. The third time domain resource is a part of the time domain resources configured for the reference signal whose resource identifier (resource ID) is 1 in the configuration information (SRS-Config), and the fourth time domain resource is a part of the time domain resources configured for the reference signal whose resource identifier (resource ID) is 1 in the configuration information (SRS-Config). The first part of the first reference signal is a part of data corresponding to the reference signal whose resource identifier (resource ID) is 1, and the second part of the first reference signal is also a part of the data corresponding to the reference signal whose resource identifier (resource ID) is 1.

Similarly, when the first reference signal is a PRS, a resource identifier (resource ID) of the first reference signal may be configured in PRS configuration information (PRS-Info). A resource identifier (resource ID) of the first part of the first reference signal is the same as a resource identifier (resource ID) of the second part of the first reference signal. For related content, refer to descriptions of the first reference signal being an SRS. Details are not described again.

Similarly, a resource identifier (resource ID) of the first part of the second reference signal is the same as a resource identifier (resource ID) of the second part of the second reference signal. For related content, refer to related descriptions of the first reference signal. Details are not described again.

In another possible implementation, in embodiments of this application, a reference signal generated based on one signal sequence (the signal sequence may correspond to one sequence ID) may be referred to as one reference signal. The first reference signal is used as an example. In embodiments of this application, the first part of the first reference signal and the second part of the first reference signal are two parts of the reference signal that are generated based on a same signal sequence. In other words, a signal sequence corresponding to the first part of the first reference signal is the same as a signal sequence corresponding to the second part of the first reference signal.

For example, the first reference signal is an SRS, and the first reference signal may be a combination of a root

sequence $\bar{r}_{u,v}(n)$ and a cyclic shift $\alpha$. The sequence of the first reference signal may be represented by Formula (1):

$$r_{u,v}^{(\alpha,\delta)}(n)=e^{j\alpha n}\bar{r}_{u,v}(n), \quad 0\leq n<M_{ZC} \quad \text{... Formula (1)}$$

In Formula (1), $M_{ZC} = mN_{sc}^{RB}/2^{\delta}$ is a sequence length, and generation of the root sequence is related to the sequence length and a sequence ID.

In this embodiment of this application, it may be understood that the first part of the first reference signal and the second part of the first reference signal are two parts of the reference signal that are generated based on one root sequence $\bar{r}_{u,v}(n)$. In other words, a signal sequence (which may be referred to as a root sequence) corresponding to the first part of the first reference signal is the same as a signal sequence (which may be referred to as a root sequence) corresponding to the second part of the first reference signal. A signal sequence (which may be referred to as a root sequence) identifier of the first reference signal may be configured in the configuration information of the first reference signal. Both signal sequence (which may be referred to as a root sequence) identifiers of the first part of the first reference signal and the second part of the first reference signal may be the signal sequence (which may be referred to as a root sequence) identifier of the first reference signal that is configured in the configuration information.

For another example, the first reference signal is a PRS, and a sequence of one first reference signal may be represented by Formula (2):

$$r(m) = \frac{1}{\sqrt{2}}\left(1 - 2c(2m)\right) + j\frac{1}{\sqrt{2}}\left(1 - 2c(2m + 1)\right)\text{... Formula (2)}$$

In Formula (2), a pseudo-random sequence c(i) includes two m-sequences, and is represented as:

$$c(n) = \left(x_1(n + N_C) + x_2(n + N_C)\right)\text{mod } 2$$

$$x_1(n + 31) = \left(x_1(n + 3) + x_1(n)\right)\text{mod } 2$$

$$x_2(n + 31) = \left(x_2(n + 3) + x_2(n + 2) + x_2(n + 1) + x_2(n)\right)\text{mod } 2$$

Herein, $N_C = 1600$, the first m-sequence $x_1(n)$ is $x_1(0) = 1$, $x_1(n) = 0$, $n = 1,2,...,30$, and the second m-sequence $x_2(n)$ is determined by an initialization factor $c_{init} = \sum_{i=0}^{30} x_2(i) \cdot 2^i$. For example, the initialization factor is:

$$c_{init} = \left(2^{22}\left\lfloor\frac{n_{ID,seq}^{PRS}}{1024}\right\rfloor + 2^{10}\left(N_{symb}^{slot}n_{s,f}^{\mu} + l + 1\right)\left(2\left(n_{ID,seq}^{PRS} \bmod 1024\right) + 1\right)\right.$$

$$\left. + \left(n_{ID,seq}^{PRS} \bmod 1024\right)\right) \bmod 2^{31}$$

Herein, $n_{s,f}^{\mu}$ is a quantity of slots, $N_{symb}^{slot}$ is a quantity of symbols in one slot, and $n_{ID,seq}^{PRS}$ is a sequence ID. The sequence ID may be configured by using the configuration information of the first reference signal.

In this embodiment of this application, it may be understood that the first part of the first reference signal and the second part of the first reference signal are two parts of the reference signal that are generated based on one signal sequence (a sequence ID identifier is $n_{\text{ID,seq}}^{\text{PRS}}$ ). In other words, a signal sequence corresponding to the first part of the first reference signal is the same as a signal sequence corresponding to the second part of the first reference signal. A signal sequence identifier $n_{\text{ID,seq}}^{\text{PRS}}$ of the first reference signal may be configured in the configuration information of the first reference signal. Both signal sequence identifiers of the first part of the first reference signal and the second part of the first reference signal may be the signal sequence identifier $n_{\text{ID,seq}}^{\text{PRS}}$ of the first reference signal that is configured in the configuration information.

(4) Slot and time domain symbol

The slot may also be referred to as a slot, and may be understood as a time slice or a time domain resource. The time domain symbol may also be referred to as a symbol, and may be understood as a time slice or a time domain resource. One slot may include one or more time domain symbols.

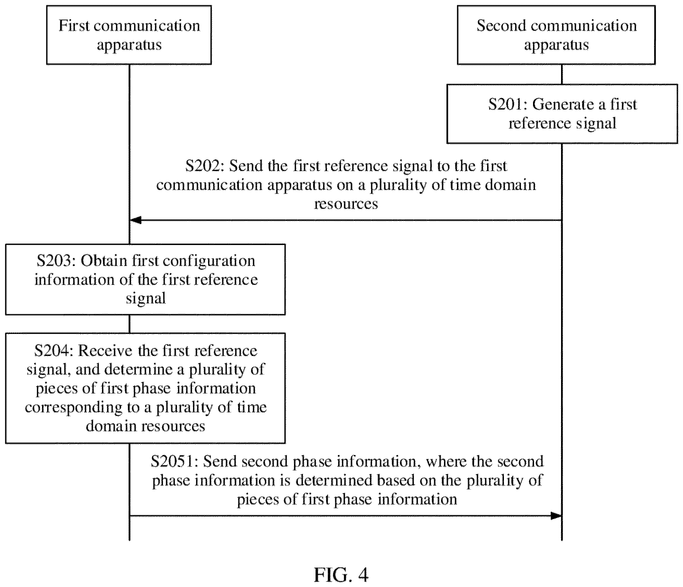

Based on the foregoing content, FIG. 4 is an example of a schematic flowchart of an AOD determining method according to an embodiment of this application. To describe the solutions provided in embodiments of this application more clearly, FIG. 4 is described from an interaction perspective. The method may be executed by a first communication apparatus and a second communication apparatus.

The first communication apparatus may be a terminal device (for example, the terminal device 103 in FIG. 1a or FIG. 1b, or the terminal device in FIG. 1c), or may be a module, a unit, or a chip in a terminal device, or may be a network device (for example, the access network device in FIG. 1c), or may be a module, a unit, or a chip in a network device. The second communication apparatus may be a terminal device (for example, the terminal device 104 or the terminal device 105 in FIG. 1a, or the terminal device in FIG. 1c), or may be a module, a unit, or a chip in a terminal device, or may be a network device (for example, the base station 101 or the base station 102 in FIG. 1b, or the access network device in FIG. 1c), or may be a module, a unit, or a chip in a network device. The first communication apparatus and the second communication apparatus may be flexibly selected. For example, both the first communication apparatus and the second communication apparatus may be terminal devices (for example, the scenario shown in FIG. 1a), or may be network devices. Alternatively, the first communication apparatus and the second communication apparatus are respectively a network device and a terminal device. For example, the first communication apparatus is a network device, and the second communication apparatus is a terminal device. For another example, the first communication apparatus is a terminal device, and the second communication apparatus is a network device (for example, the scenario shown in FIG. 1b). For clearer description in subsequent content, an example in which the first communication apparatus is a terminal device (for example, the terminal device in FIG. 1b) and the second communication apparatus is a network device (for example, the base station in FIG. 1b) is used for description.

As shown in FIG. 4, the AOD determining method includes the following steps.

S201: The second communication apparatus generates a first reference signal.

S202: The second communication apparatus sends the first reference signal to the first communication apparatus on a plurality of time domain resources, where two of the plurality of time domain resources used to send the first reference signal correspond to two different ports used to send the first reference signal.

S203: The first communication apparatus obtains first configuration information of the first reference signal, where the first configuration information includes indication information of a plurality of time domain resources used to determine phase information.

S204: The first communication apparatus receives the first reference signal, and determines a plurality of pieces of first phase information corresponding to the plurality of time domain resources used to determine the phase information.

For ease of differentiation, in this embodiment of this application, the plurality of time domain resources used to send the first reference signal on the second communication apparatus side may be referred to as S1 time domain resources, where S1 is an integer greater than 1. The plurality of time domain resources used to determine the phase information on the first communication apparatus side are referred to as S2 time domain resources, where S2 is an integer greater than 1.

The first configuration information in S203 may include indication information of the S2 time domain resources. In S204, the first communication apparatus may determine the plurality of pieces of first phase information corresponding to the first reference signal received on the S2 time domain resources.

There may be a plurality of possible correspondences between the S2 time domain resources and the plurality of pieces of first phase information. In a possible implementation, the first communication apparatus may determine one piece of first phase information based on one or more of the S2 time domain resources. For example, the first communication apparatus may determine S2 pieces of first phase information corresponding to the S2 time domain resources,

and the plurality of pieces of first phase information are in a one-to-one correspondence with the S2 time domain resources. For another example, the first communication apparatus may determine a plurality of pieces (which may be less than S2) of first phase information corresponding to time domain resources in the S2 time domain resources. For example, S2 is 8. The first communication apparatus may determine six pieces of first phase information corresponding to the eight time domain resources. For example, the six pieces of first phase information may be determined based on signals received on six of the eight time domain resources. For another example, five pieces of first phase information may be determined based on signals received on five of the eight time domain resources, and one piece of first phase information may be determined based on signals received on remaining three time domain resources in the eight time domain resources.

In S204, the first communication apparatus may receive the entire first reference signal through one port. Alternatively, the first communication apparatus may simultaneously receive the first reference signal through a plurality of ports. This is not limited in embodiments of this application. In this way, a requirement of the AOD determining solution on hardware of the first communication apparatus can be reduced, to reduce costs of the first communication apparatus.

S2051: The first communication apparatus sends second phase information, where the second phase information is determined based on the plurality of pieces of first phase information.

The first communication apparatus may determine, based on the first configuration information, the plurality of time domain resources for which phase information needs to be determined, and determines the plurality of pieces of phase information based on the plurality of time domain resources. Therefore, an AOD of the reference signal may be further determined based on the plurality of pieces of phase information. It can be learned that this application may provide a solution of determining an AOD based on phase information, so that when an angle used for positioning needs to be determined, there may be one more optional solution.

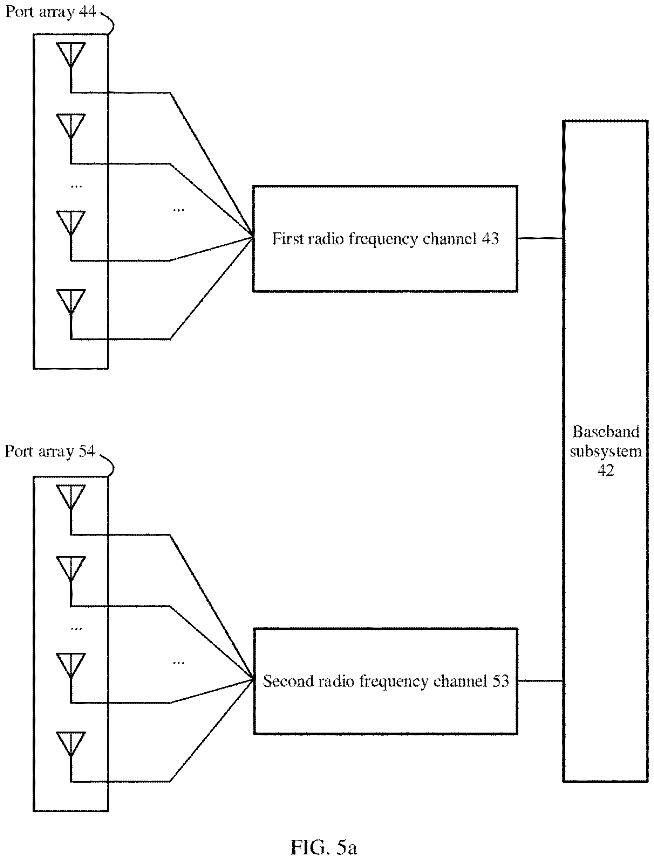

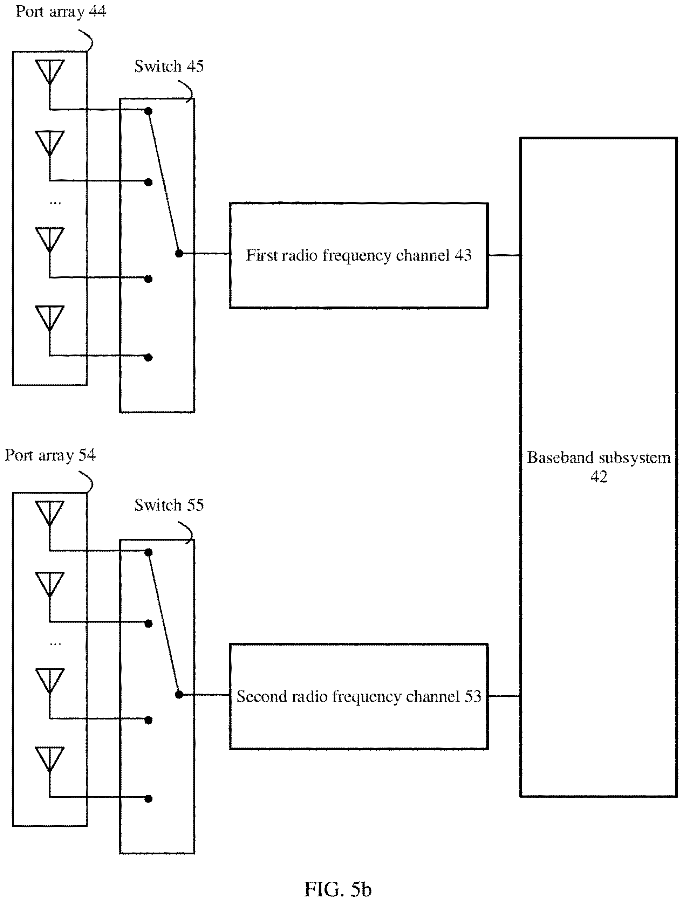

The following provides further descriptions with reference to FIG. 5a and FIG. 5b.

FIG. 5a is an example of a diagram of a possible structure of a communication apparatus. As shown in FIG. 5a, the communication apparatus may include one or more radio frequency channels, and each radio frequency channel may include a plurality of ports. FIG. 5a is illustrated by using a first radio frequency channel 43 and a second radio frequency channel 53. Each radio frequency channel may be connected to one or more ports. In FIG. 5a, an example in which a port array 44 connected to the first radio frequency channel 43 includes a plurality of physical ports, and a port array 54 connected to the second radio frequency channel 53 includes a plurality of physical ports is used for presentation.

Ports in the port array in FIG. 5a may include the antenna in FIG. 2. The first radio frequency channel 43 in FIG. 5a may include a component and a module (for example, may include a filter) in the RFFE in FIG. 2, and may further include a component and a module (for example, may include a frequency mixer) in the RFIC in FIG. 2. The second radio frequency channel 53 in FIG. 5a may also include a component and a module (for example, may include a filter) in the RFFE in FIG. 2, and may further include a component and a module (for example, may include a frequency mixer) in the RFIC in FIG. 2. A baseband subsystem 42 in FIG. 5a may be the baseband subsystem in FIG. 2. A processor 41 in FIG. 5a may be the processor in the baseband subsystem in FIG. 2.

As shown in FIG. 5a, in a possible AOD determining solution, the second communication apparatus may send a plurality of positioning reference signals (Positioning reference signals, PRSs) corresponding to a plurality of beams to the first communication apparatus. The first communication apparatus measures the PRSs of the plurality of beams, to obtain an RSRP corresponding to each beam. Then, the second communication apparatus or a positioning server (for example, the LMF) may calculate the AOD of the reference signal with reference to the reference signal received power (Reference signal received power, RSRP) and a transmit beam directivity pattern of the base station. In this solution, the AOD is calculated based on the RSRP, and the second communication apparatus usually needs to send eight reference signals corresponding to at least eight beams. If the second communication apparatus configures a small quantity of radio frequency channels, for example, configures only one radio frequency channel, the second communication apparatus needs to send sequentially the eight reference signals. It can be learned that a latency in this solution is large. To improve efficiency, the second communication apparatus may need to configure eight radio frequency channels, so that the second communication apparatus may simultaneously send, through the eight radio frequency channels, the eight reference signals corresponding to the eight beams. Although this solution can improve efficiency, a large quantity of radio frequency channels need to be configured for the second communication apparatus, and costs are high.

In actual application, to reduce costs, a small quantity of radio frequency channels are usually configured in a communication apparatus, but a large quantity of physical ports are usually configured. For example, for some high-frequency communication apparatuses, only one radio frequency channel may be configured, but the radio frequency channel may be configured with four to eight physical ports. For a communication apparatus with a small quantity of radio frequency channels, for example, the communication apparatus shown in FIG. 5a, the communication apparatus needs to spend a long time sending the eight reference signals corresponding to the at least eight beams, and a latency is long.

In a possible solution provided in this embodiment of this application, a switch may be disposed between a radio frequency channel and a port. For one time of data transmission, the radio frequency channel does not necessarily perform data transmission through all ports connected to the radio frequency channel, but may select, through the switch, one or more ports in all the ports corresponding to the radio frequency channel to perform data transmission. Refer to FIG. 5b. FIG. 5b shows an example of a diagram of a communication apparatus obtained by adding a switch to the communication apparatus shown in FIG. 5a. As shown in FIG. 5b, the first radio frequency channel 43 may be connected to each port in the port array 44 through a switch 45. The second radio frequency channel 53 may be connected to each port in the port array 54 through a switch 55. It should be noted that either of the switch 45 and the switch 55 may be a logical circuit switch, or another component that can control the first radio frequency channel to be selectively connected to or not connected to the port.

Based on the architecture of the second communication apparatus shown in FIG. 5b, in S202, the second communication apparatus may select, by using the switch, a port that needs to be used in a process of transmitting the first reference signal. Therefore, the second communication apparatus may sequentially send signals through a plurality of ports connected to one radio frequency channel. The first communication apparatus obtains, through measurement, a plurality of pieces of first phase information corresponding to at least two of the plurality of ports. Further, the AOD may be calculated by a device like the second communication apparatus or another apparatus (for example, the positioning server) with reference to the second phase information (the second phase information is determined based on the plurality of pieces of first phase information) and a spacing between ports in the at least two ports.

It can be learned from the foregoing content that, in the solution provided in this embodiment of this application, corresponding phase information may be calculated at a granularity of a port (a quantity of ports may affect precision of the phase information), to obtain the AOD. In comparison with a solution in which an AOD is calculated at a granularity of a radio frequency channel (precision of the AOD depends on a quantity of radio frequency channels), in this embodiment of this application, a requirement on a quantity of radio frequency channels on the second communication apparatus side can be reduced when AOD calculation precision is ensured. Therefore, costs of the second communication apparatus can be reduced.

In a possible implementation, in S202, the second communication apparatus may send one first reference signal to the first communication apparatus on a plurality of time domain resources through a plurality of ports. The following uses a first port and a second port in the plurality of ports of the second communication apparatus as an example for description, but this does not indicate that the plurality of ports of the second communication apparatus include only two ports. The second communication apparatus may further continue to send another part of the first reference signal through a port other than the first port and the second port. For example, in S202, the second communication apparatus sends a first part of the first reference signal on a third time domain resource through the first port in the plurality of ports. The second communication apparatus sends a second part of the first reference signal on a fourth time domain resource through the second port in the plurality of ports. The first part of the first reference signal is used to determine one of the plurality of pieces of first phase information, and the second part of the first reference signal is used to determine another one of the plurality of pieces of first phase information.

In S204, the first communication apparatus may receive the first reference signal on the plurality of time domain resources, and determine the plurality of pieces of first phase information corresponding to the plurality of time domain resources. The following uses a first time domain resource and a second time domain resource in the plurality of time domain resources as an example for description, but this does not indicate that the plurality of time domain resources include only two time domain resources. The first part of the first reference signal is received on the first time domain resource, and one of the plurality of pieces of first phase information is determined based on the first part of the first reference signal. The first communication apparatus receives the second part of the first reference signal on the second time domain resource, and determines another one of the plurality of pieces of first phase information based on the second part of the first reference signal.

It should be noted that there is no absolute sequence between S202 and S204, and S202 and S204 may be performed in a cross manner. For example, S202 may be performed first, and then S204 is performed. Alternatively, S204 may also be performed in a process of performing S202. For example, the step of determining, by the first communication apparatus, one piece of first phase information based on the first part of the first reference signal occurs after the first part of the first reference signal is received and before the first communication apparatus receives the second part of the first reference signal. The step of determining, by the first communication apparatus, one piece of first phase information based on the first part of the first reference signal may alternatively occur after the second part of the first reference signal is received. In other words, there is no absolute sequence between time indicated by the first time domain resource and time indicated by the fourth time domain resource. The time indicated by the first time domain resource may be earlier than, later than, or equal to the time indicated by the fourth time domain resource. This is not limited in embodiments of this application.

Because the first part and the second part of the first reference signal are sent through different ports of the second communication apparatus, after obtaining the plurality of pieces of phase information through measurement based on signals sent through different ports, the first communication apparatus may calculate an angle of departure with reference to phase difference information of the plurality of pieces of phase information and a spacing between ports. In addition, because the second communication apparatus sends different parts of a same reference signal through different ports, and the first communication apparatus may determine the plurality of pieces of first phase information by using one reference signal, a quantity of reference signals used to calculate the angle of departure can be reduced, to save network resources and reduce a latency.

In another possible implementation, in S202, the second communication apparatus may send a plurality of reference signals to the first communication apparatus on a plurality of time domain resources through a plurality of ports, where one port corresponds to one reference signal. The first communication apparatus measures each reference signal, to obtain one piece of phase information corresponding to each reference signal. For example, the second communication apparatus may send one first reference signal through one port, and send one third reference signal through another port. The first communication apparatus may determine one piece of phase information based on the received first reference signal, and determine another piece of phase information based on the received another third reference signal. Then, the positioning server (for example, the LMF) may determine an angle of departure based on the two pieces of phase information corresponding to the two reference signals (the first reference signal and the third reference signal).

It should be noted that in this embodiment of this application, there is at least one physical port that is in physical ports included in the first port and that is different from each of all physical ports included in the second port. Alternatively, there is at least one physical port that is in physical ports included in the second port and that is different from each of all physical ports included in the first port. In addition, the physical ports included in the first port and the physical ports included in the second port may overlap or may not overlap.

In a possible implementation, the first port and the second port may have a selective connection relationship with a same radio frequency channel. For example, both the first port and the second port are ports that have a selective connection relationship with the first radio frequency channel. The second communication apparatus sends the first part of the first reference signal on the third time domain resource through the first port connected to the first radio frequency channel. The second communication apparatus sends the second part of the first reference signal on the fourth time domain resource through the second port connected to the first radio frequency channel.

In another possible implementation, the second communication apparatus may alternatively send the first reference signal through a plurality of ports of a plurality of radio frequency channels. For example, the second communication apparatus may send the first part of the first reference signal through the first port of the first radio frequency channel and one or more ports of the second radio frequency channel, and the second communication apparatus may send the second part of the first reference signal through the second port of the first radio frequency channel and one or more ports of another radio frequency channel (for example, the second radio frequency channel). To describe the solutions provided in embodiments of this application more clearly, the first radio frequency channel in the plurality of radio frequency channels used to send the first reference signal is described in this embodiment of this application.

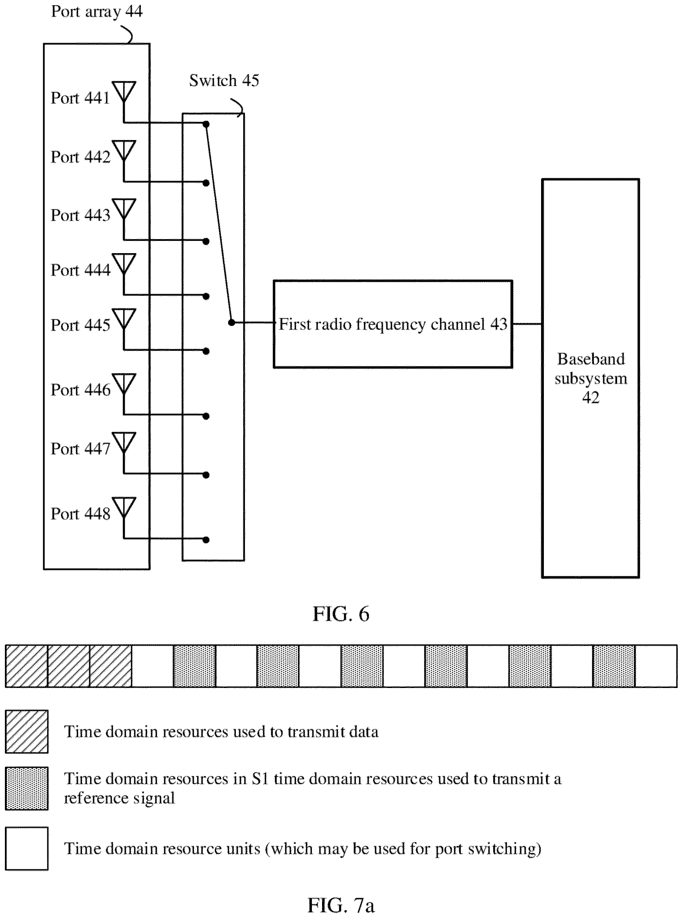

FIG. 6 is an example of a diagram in which the first radio frequency channel 43 in FIG. 5b is connected to ports in the port array 44 through the switch 45. In FIG. 6, an example in which the first radio frequency channel 43 is connected to eight physical ports is used for presentation. The eight physical ports are respectively a port 441, a port 442, a port 443, a port 444, a port 445, a port 446, a port 447, and a port 448. For example, with reference to FIG. 6, the first port may be, for example, the port 441, and the second port may be, for example, the port 442. For another example, the first port may be, for example, the port 441 and the port 442, and the second port may be, for example, the port 442 and the port 443. For another example, the first port may be, for example, the port 441 and the port 442, and the second port may be, for example, the port 447 and the port 448.

In another possible implementation, the first port and the second port may be two ports connected to two radio frequency channels. For example, the first port is a port connected to the first radio frequency channel 43 in FIG. 5b, and the second port is a port connected to the second radio frequency channel 53 in FIG. 5b.

In this embodiment of this application, there may be a plurality of possible implementations of a correspondence between the S1 time domain resources and the ports, for example, an implementation a1, an implementation a2, an implementation a3, and an implementation a4 shown in the following content.

Implementation a1: Two of the S1 time domain resources used to send the first reference signal correspond to two different ports used to send the first reference signal.

The implementation a1 may also be understood as that at least two of the S1 time domain resources correspond to different ports. In this way, because the second communication apparatus sends the first reference signal through at least two different ports, the first communication apparatus may measure the signals sent through the at least two different ports, to obtain at least two pieces of first phase information. The at least two pieces of first phase information may correspond to at least one phase difference, and then the angle of departure may be determined based on the phase difference. Therefore, for the second communication apparatus that includes only one radio frequency channel including at least two ports, positioning may alternatively be performed based on the phase information corresponding to the first reference signal sent by the second communication apparatus, to reduce a requirement on hardware of the second communication apparatus in a solution of performing positioning based on phase information, and reduce costs of the second communication apparatus.

Implementation a2: One of the plurality of ports corresponds to one of the S1 time domain resources.

In this way, in a process in which the second communication apparatus sends the first reference signal on the S 1 time domain resources, one port is used once. In this way, the second communication apparatus may send the first reference signal through as many different ports as possible, and then the first communication apparatus may obtain first phase information corresponding to more different ports. More phase differences may be obtained based on first phase information corresponding to more different ports. It can be learned that, in this solution, a quantity of phase differences may be increased, to further improve precision of the angle of departure.

Implementation a3: One of the plurality of ports corresponds to a plurality of time domain resources in the S1 time domain resources.

In this way, in a process in which the second communication apparatus sends the first reference signal on the S1 time domain resources, one port may be used for a plurality of times. In this case, one port may be set as a reference port, to provide calibration for another port. In addition, ports are reused a plurality of times, so that a quantity of ports required in this solution can be reduced, to reduce a requirement on hardware of the second communication apparatus, and reduce costs of the second communication apparatus.

Implementation a4: Two adjacent time domain resources in the S1 time domain resources correspond to two different ports.

In this way, in a process of sending the first reference signal on the S1 time domain resources in S202, the second communication apparatus needs to change a port after sending a signal on one time domain resource, to send a signal on a next time domain resource. In this way, the first communication apparatus may obtain two pieces of different first phase information based on signals sent on two adjacent time domain resources. A phase difference may be obtained by using the two pieces of different first phase information. When ports corresponding to every two adjacent time domain resources are different, a maximum quantity of phase differences may be obtained, so that precision of the angle of departure can be improved.

In this embodiment of this application, the S1 time domain resources may also have a plurality of possible implementations. For example, the following implementation b1, implementation b2, implementation b3, and implementation b4 are examples of several possible implementations of the S1 time domain resources.

Implementation b1: Two time domain resources that are in the S1 time domain resources and that correspond to different ports are separated by at least one time domain resource unit.

Because the second communication apparatus sends the first reference signal through at least two different ports, to reserve time for the second communication apparatus to perform port switching in the process of sending the first reference signal, two time domain resources that are in the S1 time domain resources and that correspond to different ports are separated by at least one time domain resource unit. In this way, the second communication apparatus may have time to perform a port switching action.

Implementation b2: Two adjacent time domain resources in the S1 time domain resources are separated by at least one time domain resource unit.

In this way, when two adjacent time domain resources in the S1 time domain resources correspond to two different ports, the second communication apparatus may have time to perform a port switching action between the adjacent time domain resources in the S1 time domain resources.

Implementation b3: Adjacent time domain resources in the S1 time domain resources are separated by Q1 time domain resource units, where Q1 is a positive integer.

Because this solution is regular, a quantity of bits occupied by information indicating a spacing between the time domain resources in the S1 time domain resources can be further reduced.

Implementation b4: One time domain resource unit may be one or more time domain symbols.

The time domain resource unit may also be referred to as a resource element (resource element, RE). In this way, in the process in which the second communication apparatus sends the first reference signal, port switching may be performed at a time domain symbol level, and the first communication apparatus may obtain a plurality of pieces of first phase information at the time domain symbol level. In comparison with a solution in which the second communication apparatus sends a plurality of first reference signals and the first communication apparatus obtains one piece of first phase information by measuring each first reference signal, because the first communication apparatus knows information about the time domain resources for determining the first phase information, a phenomenon of determining one piece of first phase information based on data received on a plurality of adjacent time domain symbols can be reduced (because the data received on the plurality of adjacent time domain symbols may be considered as one signal by a receive end and cannot be differentiated). In this way, the first communication apparatus can obtain a plurality of pieces of first phase information at a symbol granularity, and then can determine the angle of departure based on phase information of at least one reference signal. This can reduce a latency of a solution of calculating the angle of departure based on behavior information.

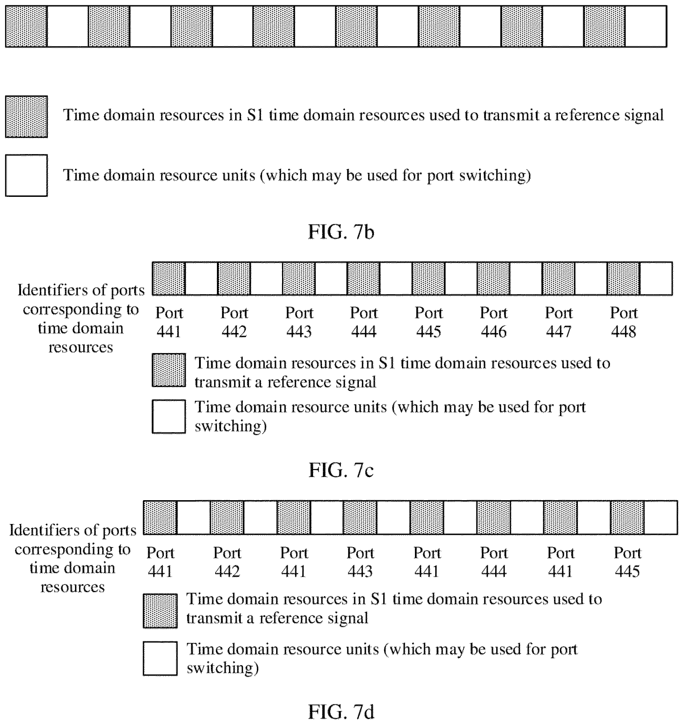

In a possible implementation, the S1 time domain resources are S1 time domain resources in one slot (slot). The first reference signal may be sent together with data, or may be sent separately. FIG. 7a and FIG. 7b show examples of diagrams of several possible patterns of the S 1 time domain resources corresponding to the first reference signal.

As shown in FIG. 7a, the first reference signal and data (for example, a physical downlink control channel (physical downlink control channel, PDCCH) and/or a demodulation reference signal (demodulation reference signal, DMRS)) may be sent in a same slot. As shown in FIG. 7b, the first reference signal may be separately sent, that is, not sent together with data (for example, a PDCCH and/or a DMRS), and the first reference signal may occupy the S 1 time domain resources in the slot.

As shown in FIG. 7a and FIG. 7b, two adjacent time domain resources in the S1 time domain resources are separated by one time domain resource unit. In this way, the second communication apparatus may send a signal once at an interval of one time domain resource unit in one slot, and perform port switching on the separated time domain resource unit.

Based on the foregoing content, FIG. 7c and FIG. 7d show examples of several possible correspondences between the S 1 time domain resources and the ports. These examples are presented by using the ports in the first radio frequency channel shown in FIG. 6 as an example.

As shown in FIG. 7c, the S1 time domain resources are eight time domain symbols in one slot, and every two adjacent time domain symbols are separated by one time domain symbol. Ports corresponding to the eight time domain symbols may be successively a port 441, a port 442, a port 443, a port 444, a port 445, a port 446, a port 447, and a port 448. In a possible implementation, the ports have port identifiers, and there may be a preset sorting relationship between the port identifiers. For example, the sorting relationship is: the port 441, the port 442, the port 443, the port 444, the port 445, the port 446, the port 447, and the port 448. In a possible implementation, a port switching rule is the same as the preset sorting relationship of the port identifiers. In this way, complexity of this solution can be reduced.

As shown in FIG. 7d, the S1 time domain resources are eight time domain symbols in one slot, and every two adjacent time domain symbols are separated by one time domain symbol. Ports corresponding to the eight time domain symbols may be successively a port 441, a port 442, the port 441, a port 443, the port 441, a port 444, the port 441, and a port 445. It can be learned that, in the port switching rule shown in FIG. 7d, the port 441 is used for a plurality of times. In this case, the port 441 may be considered as a calibration port, and first phase information corresponding to ports that subsequently follow a plurality of ports 441 is calibrated with reference to a plurality of pieces of first phase information corresponding to the plurality of ports 441, to improve precision of the angle of departure. For example, in the eight time domain symbols, if there is a large difference between first phase information corresponding to a port 441 of a first time domain symbol and first phase information corresponding to a port 441 of a third time domain symbol, two pieces of first phase information corresponding to the port 442 and/or the port 443 may be calibrated based on the two pieces of first phase information corresponding to the port 441, so that accuracy of the first phase information can be improved, and precision of the angle of departure can be improved.

It should be noted that the correspondence between the S 1 time domain resources and the ports may be preset, or may be preset on the second communication apparatus side, or may be determined by the second communication apparatus, or may be determined by the second communication apparatus through negotiation with the first communication apparatus, or may be determined by the positioning server (for example, the LMF) and sent to the second communication apparatus. There are many specific implementations. This is not limited in embodiments of this application.

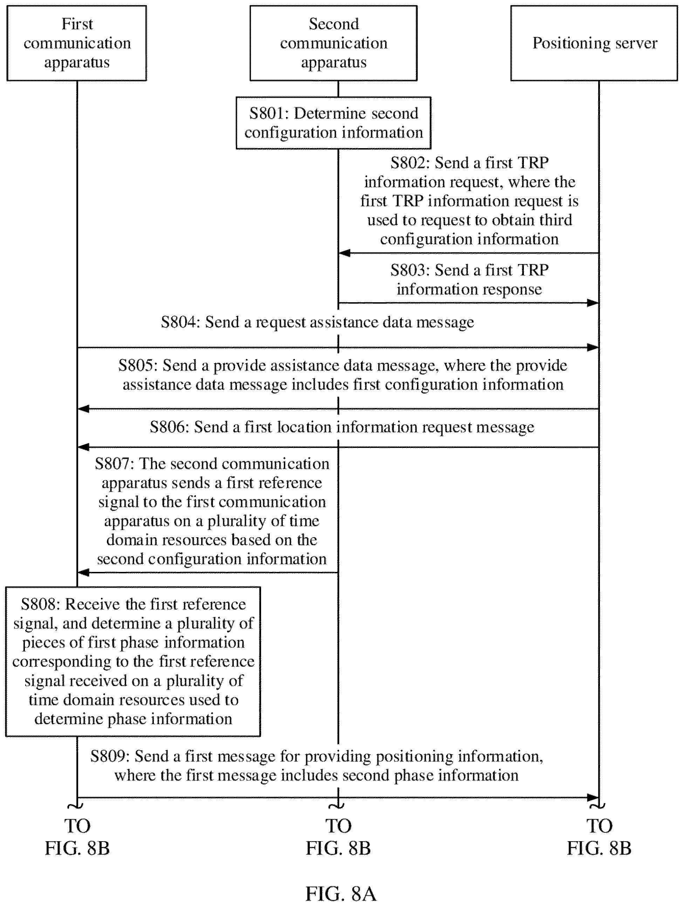

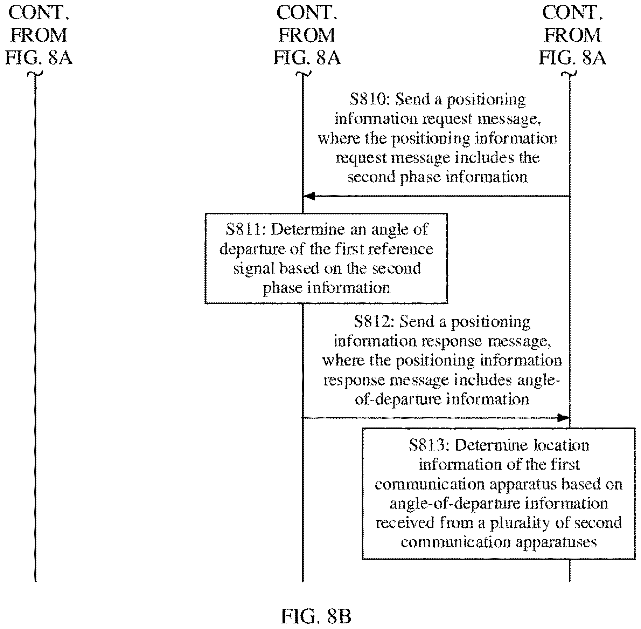

Based on the foregoing content, FIG. 8A and FIG. 8B are an example of a schematic flowchart of another AOD determining method. In this method, an example in which a first communication apparatus is a terminal device, a second communication apparatus is a base station, and a positioning server is an LMF is used for description. Alternatively, the second communication apparatus may be a terminal device. When the second communication apparatus is a terminal device, second configuration information may be determined by the second communication apparatus, or may be sent by another apparatus (for example, a base station) to the second communication apparatus. As shown in FIG. 8A and FIG. 8B, the method includes the following steps.

S801: The second communication apparatus determines second configuration information of a first reference signal.

In this embodiment of this application, the second configuration information may include at least one of the following parameters: a parameter c1, a parameter c2, a parameter c3, or a parameter c4.

The parameter c1 is information indicating S1 time domain resources used to send the first reference signal.

In this embodiment of this application, for differentiation, information that is included in the second configuration information and that indicates the S1 time domain resources used to send the first reference signal may be referred to as fourth indication information.

The fourth indication information may include information about a quantity of time domain resource units between two of the S1 time domain resources; and/or information about the S1 time domain resources.

For example, the fourth indication information may include indication information of a quantity of time domain resource units between adjacent time domain resources in the S1 time domain resources. For example, the fourth indication information may be information indicating the following content: In one slot, the first reference signal is sent once at an interval of one time domain symbol, and duration for sending the first reference signal is one time domain symbol. For another example, the fourth indication information may be information indicating the following content: In one slot, the first reference signal is sent once at an interval of two time domain symbols, and duration for sending the first reference signal is two time domain symbols. When the second configuration information includes the information about the quantity of time domain resource units between two of the S1 time domain resources, the second communication apparatus may determine the S1 time domain resources used to send the first reference signal, so that the first reference signal may be sent on the S 1 time domain resources.

The information about the S1 time domain resources may include at least one of the following content:

a start frame or symbol of the S1 time domain resources (indicating a frame or symbol starting from which mapping is performed in time domain);

a quantity of symbols or slots occupied by the S1 time domain resources; or

an offset corresponding to the S1 time domain resources (indicating a quantity of symbols or slots offset by the S1 time domain resources in a current sending periodicity of the first reference signal).

The parameter c2 is information about a frequency domain resource corresponding to the first reference signal.

The first reference signal may occupy one or more subcarriers in frequency domain. Frequency domain resources corresponding to two of the S 1 time domain resources may be the same. In another possible implementation, frequency domain resources corresponding to all of the S1 time domain resources may be the same. In this way, the solution may be simple.

In a possible implementation, the information about the frequency domain resource corresponding to the first reference signal may include at least one of the following content:

a sequence number of a subcarrier used to send the first reference signal (for example, may include a sequence number of a subcarrier occupied by the first reference signal in a resource block (resource block, RB));

density of resource blocks occupied by the first reference signal in frequency domain (for example, may include indication information indicating a quantity of RBs between which data on a bit in the first reference signal is sent);

a bandwidth (which may indicate a quantity of consecutive physical resource blocks (Physical resource blocks, PRBs) or REs occupied in frequency domain); or

a start common resource block (Common resource block, CRB) (which may indicate an RB starting from which mapping is performed in frequency domain).

The parameter c3 is information indicating a correspondence between the S1 time domain resources and a plurality of ports.

For a correspondence between the plurality of ports corresponding to the S1 time domain resources, refer to the foregoing descriptions. For example, the correspondence may be the correspondence in FIG. 7c or FIG. 7d.

The information indicating the correspondence between the S1 time domain resources and the plurality of ports may include at least one of the following content:

the S1 time domain resources and identifiers of the plurality of ports (the identifiers of the plurality of ports may appear in a form of an array, and each number may indicate an identifier of one port); or

an identifier of a target port switching policy used to send a reference signal.

One or more port switching policies for sending a reference signal may be preset on the second communication apparatus side, and the target port switching policy for sending a reference signal is one of the preset port switching policies for sending a reference signal. The port switching policy for sending a reference signal includes information about the identifiers of the plurality of ports corresponding to the S1 time domain resources. The second communication apparatus may determine, based on the identifier of the target port switching policy used for sending a reference signal, the target port switching policy used for sending a reference signal, and then determine the identifiers of the plurality of ports corresponding to the S1 time domain resources.

The parameter c4 is a sending periodicity of the first reference signal.

In a possible implementation, the second communication apparatus may periodically send the first reference signal, so that the first communication apparatus periodically measures the first reference signal, and reports an obtained result (second phase information and/or angle-of-departure information corresponding to each first reference signal). In this way, the first communication apparatus can be periodically positioned.

The sending periodicity of the first reference signal may indicate a time interval at which the second communication apparatus sends the first reference signal once. The time interval may be one or more symbols, slots, frames, seconds, minutes, hours, or the like.

In another possible implementation, if the first communication apparatus does not need to be periodically positioned, the sending periodicity may not be configured in the second configuration information, or a value of the sending periodicity configured in the second configuration information indicates that the second communication apparatus sends the first reference signal once, and the second communication apparatus does not periodically send the first reference signal.

In addition, in S801, the second communication apparatus determines the second configuration information in a plurality of manners. For example, the second configuration information may be pre-configured on the second communication apparatus side. For another example, the second communication apparatus may determine the second configuration information based on a hardware condition of the second communication apparatus. For another example, the second communication apparatus may receive the second configuration information sent by another apparatus. For another example, the second communication apparatus may negotiate with the first communication apparatus to determine the second configuration information.

S802: The positioning server may send a first transmission-reception point (Transmission-Reception Point, TRP) information request to the second communication apparatus, where the first TRP information request is used to request to obtain third configuration information.

The TRP information request may also be referred to as a TRP information request. The positioning server may send the TRP information request to the second communication apparatus by using the NR positioning protocol (NR positioning protocol a, NRPPa).

S803: The second communication apparatus sends a first TRP information response to the positioning server, where the first TRP information response includes the third configuration information.

The TRP information response may also be referred to as a TRP information response.

The third configuration information may include at least one of the parameter c1, the parameter c2, the parameter c3, the parameter c4, or the following parameter d. For related content of the parameter c 1, the parameter c2, the parameter c3, and the parameter c4, refer to the foregoing content. Details are not described again. The following describes the parameter d.

The parameter d indicates port configuration information of the second communication apparatus.

The indicated port configuration information of the second communication apparatus may include at least one of the following content:

information about a quantity of radio frequency channels of the second communication apparatus (which may be a quantity of radio frequency channels configured by the second communication apparatus, or may be a quantity of radio frequency channels used to send the first reference signal);
information about a quantity of ports of the second communication apparatus (which may be a quantity of ports corresponding to one or more radio frequency channels configured by the second communication apparatus, or may be a quantity of ports used to send the first reference signal);
identifiers of ports of the second communication apparatus;
a spacing between ports of the second communication apparatus (which may be a spacing between two of the plurality of ports corresponding to the one or more radio frequency channels configured by the second communication apparatus, or may be a spacing between ports in the plurality of ports used to send the first reference signal, or may be a spacing between ports corresponding to adjacent time domain resources in the S1 time domain resources);
a port array shape corresponding to ports of the second communication apparatus (which may be a port array shape corresponding to a radio frequency channel in the one or more radio frequency channels configured by the second communication apparatus, or may be a port array shape corresponding to the ports used to send the first reference signal); or
information indicating a port arrangement direction of the second communication apparatus (the port arrangement direction may be, for example, a horizontal direction, a vertical direction, or an angle of inclination).

The spacing between the ports of the second communication apparatus may be in a form of a column or an array, and may be indicated by a value. A unit may be meter, centimeter, decimeter, millimeter, micrometer, or nanometer. Alternatively, the spacing may be represented as a multiple of a wavelength, and may be an integer multiple, a fractional multiple, a decimal multiple, or the like. The spacing between the plurality of ports of the second communication apparatus may be represented in a form of a column. When the spacing between the ports of the second communication apparatus is unique, the spacing between the ports of the second communication apparatus may include only one value.

When the spacing between the ports of the second communication apparatus is not unique, the identifiers of the ports may be carried in the port configuration information. The two parameters, namely, the identifiers of the ports and the spacing between the ports, may be combined. For example, the port configuration information includes indication information indicating that a spacing between a port a and a port b is a half wavelength.

The port array shape may be a linear array, a planar array, a circular array, a cylindrical array, or the like.

In a possible implementation, when estimating the angle-of-departure information of the first reference signal based on the second phase information, the second communication apparatus may further perform calculation with reference to the port array shape. For example, when the port array shape is a linear array, and the second phase information received by the second communication apparatus includes a plurality of pieces of phase difference information, angles of departure corresponding to the plurality of pieces of phase difference information may be understood as angles on a plane. In a possible implementation, the second communication apparatus may average the obtained plurality of pieces of phase difference information, and then estimate the angle of departure of the first reference signal based on averaged phase difference information.

For another example, when the port array shape is a circular array, and the second phase information received by the second communication apparatus includes a plurality of pieces of phase difference information, angles of departure corresponding to the plurality of pieces of phase difference information may be a plurality of different angles. In a possible implementation, the second communication apparatus may perform calculation for each piece of phase difference information, to obtain a plurality of pieces of angle-of-departure information, and then may determine the angle of departure of the first reference signal based on the obtained plurality of pieces of angle-of-departure information.

The foregoing examples are described by using an example in which the second communication apparatus estimates the angle of departure of the first reference signal based on the second phase information. In actual application, the first communication apparatus or the positioning server may alternatively estimate the angle of departure of the first reference signal based on the second phase information. In this case, the positioning server may obtain the port array shape on the second communication apparatus side by using the third configuration information. Alternatively, the positioning server sends the obtained port array shape on the second communication apparatus side to the first communication apparatus side.

S804: The first communication apparatus sends a request assistance data message to the positioning server (for example, an LMF). The request assistance data message may include an identifier of a target cell. The request assistance data message is used to request to obtain the first configuration information.

The identifier of the target cell may be an identifier of a primary cell corresponding to the first communication apparatus. The request assistance data message may also be referred to as request assistance data. The first communication apparatus may send the request assistance data message to the positioning server (for example, an LMF) by using the LTE positioning protocol (LTE positioning protocol, LPP).

S805: The positioning server sends a provide assistance data message to the first communication apparatus. The provide assistance data message includes the first configuration information.

The provide assistance data message may also be referred to as provide assistance data. The positioning server may send the provide assistance data message to the first communication apparatus by using the LPP.

In a possible implementation, the first configuration information may include at least one of the following parameters: a parameter e1, a parameter e2, the parameter c2, the parameter c3, the parameter c4, or the parameter d. For the parameter c2, the parameter c3, the parameter c4, and the parameter d, refer to the foregoing content. Details are not described again. The following separately describes the parameter e1 and the parameter e2.

The parameter e1 is information indicating S2 time domain resources used to determine phase information.

In a possible implementation, the information indicating the S2 time domain resources used to determine the phase information may include the fourth indication information in the parameter c1.

When the first configuration information includes the information about the quantity of time domain resource units between two of the S1 time domain resources, the first communication apparatus may determine the S2 time domain resources on which the first phase information needs to be obtained, and may determine one piece of first phase information based on a signal received on one of the S2 time domain resources.

For example, the information indicating the S2 time domain resources used to determine the phase information may be information indicating the following content: In one slot, the second communication apparatus sends the reference signal once at an interval of one time domain symbol, and duration for sending the reference signal is one time domain symbol. In this way, in a process of receiving the first reference signal, the first communication apparatus may estimate one piece of first phase information once at an interval of one time domain symbol, and each piece of first phase information is determined based on a signal received on one time domain symbol. In this way, the plurality of pieces of first phase information corresponding to the first reference signal are obtained.

For another example, the fourth indication information may be information indicating the following content: In one slot, the reference signal is sent once at an interval of two time domain symbols, and duration for sending the reference signal is two time domain symbols. In this way, in a process of receiving the first reference signal, the first communication apparatus may estimate one piece of first phase information once at an interval of two time domain symbols, and each piece of first phase information is determined based on a signal received on two time domain symbols.

In this way, the plurality of pieces of first phase information corresponding to the first reference signal may be obtained.

The S 1 time domain resources are time domain resources used by a transmit end of the first reference signal to send the first reference signal. For related content of the parameter e 1, refer to related content of the parameter c1. Details are not described herein again.

The parameter e2 is an identifier of the second communication apparatus.

The identifier of the second communication apparatus may be one or more of a physical cell index (physical cell index, PCI) and a cell global identity (cell global identity, CGI).

It should be noted that, in addition to obtaining the first configuration information by the first communication apparatus in S805, in S203, the first communication apparatus may obtain the first configuration information in a plurality of manners. For example, the first configuration information may be pre-configured on the second communication apparatus side. For another example, the first communication apparatus may negotiate with the second communication apparatus to determine the first configuration information. For another example, the first communication apparatus may receive the first configuration information sent by another apparatus.

S806: The positioning server sends a first location information request message to the first communication apparatus. The first location information request message indicates the first communication apparatus to report a measurement value.

The first location information request message may be referred to as request location information.

For example, in a possible positioning architecture, an access and mobility management function (Access and Mobility Management Function, AMF) receives a service request about a terminal device that is initiated by another network element in a network, the AMF sends a positioning request about the terminal device to the LMF, and the LMF receives the positioning request from the AMF, initiates positioning of the terminal device, and determines location information of the terminal device. After initiating positioning of the terminal device, the LMF may indicate the second communication apparatus to send the first reference signal, and indicate, by using S806, the terminal device to report a measurement value.

S807: The second communication apparatus sends the first reference signal to the first communication apparatus on the plurality of time domain resources based on the second configuration information. Two of the S1 time domain resources used to send the first reference signal correspond to two different ports used to send the first reference signal.

In S807, the second communication apparatus may perform channel calibration on the plurality of ports used to send the first reference signal, so that phases of the plurality of ports are initially consistent. Then, the first reference signal is sent through the plurality of ports. In this way, accuracy of the phase difference obtained based on the first reference signals sent through the plurality of ports can be improved, and accuracy of the angle of departure can be improved.

In addition, when the second configuration information includes the parameter c2, in a possible implementation, the second communication apparatus may determine, based on the second configuration information, a frequency domain resource corresponding to the first reference signal, and send the first reference signal on the frequency domain resource.

When the second configuration information includes the parameter c3, in a possible implementation, for a time domain resource in the S1 time domain resources, the second communication apparatus may determine, based on the second configuration information, a port corresponding to the time domain resource as a port used when a signal is sent on the time domain resource, and then send the signal on the time domain resource through the port.

For other related content of S807, refer to related content of S202. S807 may be a possible implementation of S202.

S808: The first communication apparatus receives the first reference signal, and determines a plurality of pieces of first phase information corresponding to the S2 time domain resources.

S809: The first communication apparatus sends, to the positioning server, a first message for providing positioning information.

The first message for providing the positioning information includes second phase information (a parameter f1), and may further include at least one of a parameter f2, a parameter f3, or a parameter f4. At least one of the parameter f2, the parameter f3, or the parameter f4 may be reported together with the parameter f1, or may be separately reported. This is not limited in embodiments of this application.

In a possible implementation, in S806, the location information request message may further indicate the first communication apparatus to report the second phase information. In this way, the first communication apparatus determines, based on the location information request message, the second phase information for reporting after subsequent S808.

The parameter f1 is the second phase information.

In this embodiment of this application, the second phase information includes at least one of the following parameters: a parameter f1-1, a parameter f1-2, or a parameter f1-3.

The parameter f1-1 is at least two of the plurality of pieces of first phase information;

In a possible implementation, when the second phase information reported by the first communication apparatus includes at least two pieces of first phase information, the first communication apparatus may report the at least two pieces of first phase information in a form of a column (or an array).

For example, a sequence of the at least two pieces of first phase information in the second phase information matches a sequence of time domain resources corresponding to the at least two pieces of first phase information. In this case, the first communication apparatus may sort the plurality of pieces of first phase information based on a receiving sequence of signals used to estimate the first phase information, and report the sorted plurality of pieces of first phase information.

For another example, a sequence of the at least two pieces of first phase information in the second phase information matches a sequence of identifiers of ports corresponding to the at least two pieces of first phase information. In this example, there may be a preset sorting relationship between the plurality of ports used to send the first reference signal on the second communication apparatus side. For example, there is a preset sequence relationship between ports corresponding to the first radio frequency channel 43 in FIG. 6, and the sequence is sequentially the port 441, the port 442, the port 443, the port 444, the port 445, the port 446, the port 447, and the port 448. The first communication apparatus may determine, based on ports corresponding to received signals, a correspondence between a plurality of pieces of first phase information determined based on the received signals and the ports, to send the plurality of pieces of first phase information based on a sequence relationship of identifiers of the ports.

For another example, the first communication apparatus may further re-sort the plurality of pieces of obtained first phase information based on the sequence relationship of the identifiers of the ports, and report the plurality of pieces of re-sorted first phase information. For example, ports used by the second communication apparatus to send the first reference signal are sequentially the port 441, the port 442, the port 441, the port 443, the port 441, the port 444, the port 441, and the port 445. In this case, the first communication apparatus may sequentially obtain the following content: first phase information corresponding to the port 441, first phase information corresponding to the port 442, first phase information corresponding to the port 441, first phase information corresponding to the port 443, first phase information corresponding to the port 441, first phase information corresponding to the port 444, first phase information corresponding to the port 441, and first phase information corresponding to the port 445. Further, the first communication apparatus may re-sort the plurality of pieces of sequentially obtained first phase information, and the sorted first phase information may be: one or more pieces of first phase information corresponding to the port 441, the first phase information corresponding to the port 442, the first phase information corresponding to the port 443, the first phase information corresponding to the port 444, and the first phase information corresponding to the port 445.

In another possible implementation, when the second phase information reported by the first communication apparatus includes at least two pieces of first phase information, the first communication apparatus may report the at least two pieces of first phase information in a plurality of reporting manners, and may report one or more pieces of first phase information each time.

In a possible implementation, the first communication apparatus may determine one piece of first phase information on each of the S2 time domain resources. For one of the plurality of pieces of first phase information, the first phase information is determined based on any propagation path through which a signal received on a time domain resource corresponding to the first phase information arrives at the first communication apparatus. The propagation path may be a normal path, or may be an additional path, for example, may be a first path, a direct path, a reflection path, or a strongest path. For example, the first communication apparatus may estimate the first phase information based on the first path of the signal received on each of the S2 time domain resources.

The parameter f1-2 is at least one piece of phase difference information corresponding to the plurality of pieces of first phase information.

The phase difference information may be determined based on two pieces of first phase information. For example, phases indicated by the two pieces of first phase information may be subtracted, to obtain one piece of phase difference information.

In a possible implementation, when the second phase information reported by the first communication apparatus includes a plurality of pieces of phase difference information, the first communication apparatus may report the plurality of pieces of phase difference information in a form of a column (or an array).

For example, a sequence of the at least two pieces of phase difference information in the second phase information matches a sequence of time domain resources corresponding to the phase difference information. In this case, the first communication apparatus may sort the plurality of pieces of first phase information based on a receiving sequence of signals used to estimate the first phase information, sequentially calculate phase difference information corresponding to two pieces of adjacent first phase information, and then report the plurality of pieces of obtained phase difference information that have a sorting relationship.

For another example, a sequence of the at least two pieces of phase difference information in the second phase information matches a sequence of identifiers of ports corresponding to the phase difference information. In this example, there may be a preset sorting relationship between the plurality of ports used to send the first reference signal on the second communication apparatus side. For example, there is a preset sequence relationship between ports corresponding to the first radio frequency channel 43 in FIG. 6, and the sequence is sequentially the port 441, the port 442, the port 443, the port 444, the port 445, the port 446, the port 447, and the port 448. The first communication apparatus may determine, based on ports corresponding to received signals, a correspondence between a plurality of pieces of first phase information determined based on the received signals and the ports, to determine a sequence of the plurality of pieces of first phase information based on a sequence relationship of identifiers of the ports, further sequentially calculate phase difference information corresponding to two pieces of adjacent first phase information, and then report a plurality of pieces of obtained phase difference information that have a sorting relationship.

For example, ports used by the second communication apparatus to send the first reference signal are sequentially the port 441, the port 442, the port 443, the port 444, the port 445, the port 446, the port 447, and the port 448. In this case, the first communication apparatus may sequentially obtain the following content: first phase information corresponding to the port 441, first phase information corresponding to the port 442, first phase information corresponding to the port 443, first phase information corresponding to the port 444, first phase information corresponding to the port 445, first phase information corresponding to the port 446, first phase information corresponding to the port 447, and first phase information corresponding to the port 448. Further, the first communication apparatus may sequentially obtain the following content: phase difference information corresponding to the port 442 and the port 441, phase difference information corresponding to the port 444 and the port 443, phase difference information corresponding to the port 446 and the port 445, and phase difference information corresponding to the port 448 and the port 447. Further, the first communication apparatus may report the phase difference information in a column (or array) manner.

For another example, ports used by the second communication apparatus to send the first reference signal are sequentially the port 441, the port 442, the port 441, the port 443, the port 441, the port 444, the port 441, and the port 445. In this case, the first communication apparatus may sequentially obtain the following content: first phase information (information a1) corresponding to the port 441, first phase information (information a2) corresponding to the port 442, first phase information (information a3) corresponding to the port 441, first phase information (information a4) corresponding to the port 443, first phase information (information a5) corresponding to the port 441, first phase information (information a6) corresponding to the port 444, first phase information (information a7) corresponding to the port 441, and first phase information (information a8) corresponding to the port 445. Further, the first communication apparatus may sequentially obtain the following content: phase difference information (obtained based on the information a1 and the information a2) corresponding to the port 442 and the port 441, phase difference information (obtained based on the information a3 and the information a4) corresponding to the port 443 and the port 441, phase difference information (obtained based on the information a5 and the information a6) corresponding to the port 444 and the port 441, and phase difference information (obtained based on the information a7 and the information a8) corresponding to the port 445 and the port 441. Further, the first communication apparatus may report the phase difference information in a column (or array) manner. It can be learned that, in this solution, the port 441 may be used as a reference port, and the plurality of pieces of first phase information corresponding to the port 441 may be used for channel calibration, so that precision of the angle of departure can be further improved.

In another possible implementation, when the second phase information reported by the first communication apparatus includes at least two pieces of phase difference information, the first communication apparatus may report the at least two pieces of phase difference information in a plurality of reporting manners, and may report one or more pieces of phase difference information each time.

The parameter f1-3 is average information of a plurality of pieces of phase difference information.

The average information of the plurality of pieces of phase difference information may be obtained by averaging the plurality of pieces of phase difference information, or may be obtained by averaging the plurality of pieces of phase difference information through weighting. There are a plurality of specific manners. This is not limited in embodiments of this application.

The parameter f2 is reliability information of the second phase information received by the second communication apparatus.

The reliability information of the second phase information includes standard deviation information and/or variance information corresponding to the plurality of pieces of first phase information.

The parameter f3 is first indication information received by the second communication apparatus. The first indication information indicates a correspondence between a parameter in the second phase information and an identifier of a port used to send the first reference signal.

When the first angle-of-departure information includes a plurality of pieces of first phase information, the second indication information may indicate an identifier of a port corresponding to each of the plurality of pieces of first phase information. When the first angle-of-departure information includes a plurality of pieces of phase difference information, the second indication information may indicate an identifier of a port corresponding to each of the plurality of pieces of phase difference information. A port corresponding to one piece of phase difference information is a port corresponding to two pieces of first phase information based on which the phase difference information is calculated.

The first indication information may include indication information indicating a measurement manner of measuring the first reference signal by the first communication apparatus. There are a plurality of measurement manners. For example, the first communication apparatus may sequentially obtain a plurality of pieces of first phase information based on a sequence of switching ports in a process of sending the first reference signal by the second communication apparatus side, and then calculate two pieces of adjacent first phase information in a sequence of the plurality of pieces of obtained first phase information, to obtain a plurality of pieces of phase difference information that have a sorting relationship.

For another example, the first communication apparatus may sequentially obtain a plurality of pieces of first phase information based on a sequence of switching ports in a process of sending the first reference signal by the second communication apparatus side, then re-sort the obtained first phase information based on a preset sorting relationship of identifiers of the ports, and then calculate two pieces of adjacent first phase information in a sequence of the plurality of pieces of re-sorted first phase information, to obtain a plurality of pieces of phase difference information that have a sorting relationship.

The parameter f4 is the identifier of the second communication apparatus.

The identifier of the second communication apparatus may be one or more of a physical cell index (physical cell index, PCI) and a cell global identity (cell global identity, CGI). The identifier of the second communication apparatus may indicate a specific apparatus that sends a reference signal based on which the second phase information obtained by the first communication apparatus is determined.

S810: The positioning server sends a positioning information request message to the second communication apparatus, where the positioning information request message includes the second phase information (the parameter f1), and may further include at least one of the parameter f2, the parameter f3, or the parameter f4.

Correspondingly, the second communication apparatus receives the positioning information request message from the LMF.

The LMF may send the positioning information request message to the second communication apparatus by using the NRPPa. The positioning information request message may alternatively be replaced with TRP information request information, a positioning information request message, or a measurement request message.

It should be noted that the first communication apparatus may receive reference signals delivered by a plurality of second communication apparatuses. To describe the solution provided in this embodiment of this application more clearly, one second communication apparatus is described in detail in this embodiment of this application. When there are a plurality of second communication apparatuses, for another solution on the second communication apparatus side, refer to the solution on the second communication apparatus side described in this embodiment of this application. Further, the LMF may alternatively feed back a positioning information request message to each second communication apparatus. For each second communication apparatus, the second communication apparatus may include a measurement value obtained through measurement based on a reference signal of the second communication apparatus.

S811: The second communication apparatus determines information about the angle of departure of the first reference signal based on the obtained second phase information.

The second communication apparatus may further receive at least one of the parameter f2, the parameter f3, or the parameter f4. If the second communication apparatus further receives the parameter f2, the second communication apparatus may learn of reliability of the angle of departure determined by the second communication apparatus, and may feed back the reliability of the angle of departure to the positioning server. If the second communication apparatus further receives the parameter f3, the second communication apparatus may determine, based on the parameter f3, ports corresponding to the parameter in the received second phase information, so that the angle of departure may be determined based on a spacing between the ports and the second phase information. Calculation is performed, so that precision of the angle of departure can be improved. If the second communication apparatus further receives the parameter f4, the second communication apparatus may check the received parameter based on the parameter f4, to determine whether the received second phase information is determined based on the first reference signal sent by the second communication apparatus.

When the second phase information includes a plurality of pieces of first phase information, the second communication apparatus may calculate the plurality of pieces of first phase information, to obtain phase difference information, and further determine the angle of departure of the first reference signal based on the phase difference information. If the second phase information includes the phase difference information or the average information of the phase difference information, the second communication apparatus may calculate the angle of departure of the first reference signal based on the phase difference information or the average information of the phase difference information. There are a plurality of manners of calculating the angle of departure of the first reference signal based on the phase difference information. This embodiment of this application provides an example of a possible manner. A manner of determining the angle of departure of the first reference signal based on the average information of the phase difference information is similar to this manner, and details are not described again.

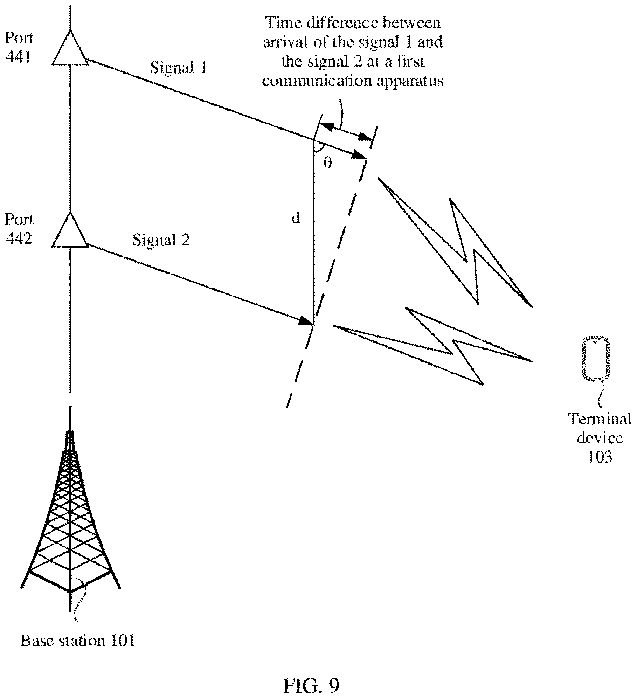

FIG. 9 is an example of a diagram of determining the angle of departure of the first reference signal based on the phase difference information. In FIG. 9, an example in which the second communication apparatus is a base station 101 and the first communication apparatus is a terminal device 103 is used for presentation. As shown in FIG. 9, the base station 101 sends a signal 1 through the port 441, and the base station 101 sends a signal 2 through the port 442. There is a spacing between the port 441 and the port 442, and the spacing is represented by d in FIG. 9. The signal 1 may be the first part of the first reference signal, and the signal 2 may be the second part of the first reference signal. Correspondingly, the terminal device 103 receives the signal 1 and the signal 2. The terminal device may receive the signal 1 and the signal 2 through one port, or may receive the signal 1 and the signal 2 through a plurality of ports. To better present a relationship between the angle of departure and another parameter, because a spacing between the base station and the terminal device is far greater than the spacing between the port 441 and the port 442, signal transmission between the base station and the terminal device may be considered as a far-field scenario. Therefore, in FIG. 9, a transmission path of the signal 1 and a transmission path of the signal 2 are presented by using parallel lines as an example. With reference to FIG. 9, a relationship between the angle of departure and the phase difference information may be learned, and the angle of departure of the first reference signal may be calculated by using Formula (3):

$$\psi = 2\pi \frac{d cos\theta}{\lambda} ... \text{Formula (3)}$$

In Formula (3), d is the spacing between the port 441 and the port 442.

$\theta$ is the angle of departure of the first reference signal.

$\psi$ is a phase difference corresponding to the signal 1 and the signal 2 on the first communication apparatus side.

$\lambda$ is a wavelength of the first reference signal.

$\pi$ is a constant and refers to the circumference ratio.

S812: The second communication apparatus sends a positioning information response message to the positioning server, where the positioning information response message includes the angle-of-departure information of the first reference signal sent by the second communication apparatus.

Correspondingly, the positioning server receives the positioning information response message from the second communication apparatus. In a possible implementation, the positioning server may receive a plurality of pieces of angle-of-departure information from a plurality of second communication apparatuses.

The second communication apparatus may send the positioning information response message to the LMF by using the NRPPa. The positioning information response message may be replaced with TRP information response information, a measurement response message, or the like.

S813: The positioning server determines the location information of the first communication apparatus based on the received angle-of-departure information of the plurality of second communication apparatuses.

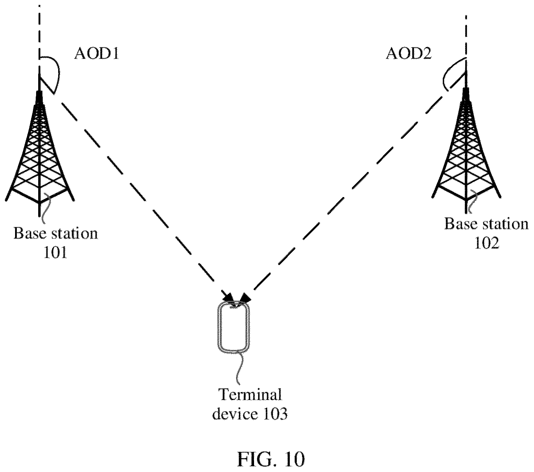

FIG. 10 is an example of a diagram of an AOD-based positioning solution according to an embodiment of this application. In FIG. 10, an example in which the second communication apparatus is a base station and the first communication apparatus is a terminal device is used for presentation. As shown in FIG. 10, at least two second communication apparatuses (base stations) may send reference signals to the first communication apparatus (a terminal device 103). For each second communication apparatus, the first communication apparatus may determine second phase information corresponding to a reference signal sent by the second communication apparatus. Further, the first communication apparatus sends the second phase information.

Further, the second communication apparatus calculates, based on the second phase information, an AOD corresponding to the reference signal, for example, an AOD 1 corresponding to a reference signal sent by a base station 101 to the terminal device 103, and an AOD 2 corresponding to a reference signal sent by a base station 102 to the terminal device 103.

Further, the positioning server may calculate a location of the terminal device with reference to the AODs (the AOD 1 and the AOD 2) corresponding to the at least two reference signals. For example, the positioning server may form, based on the AODs, a plurality of rays that use locations of the base stations as start points and whose angle deflection amounts are the AODs, and an intersection point at which the plurality of rays intersect is the location of the terminal device.

FIG. 8A and FIG. 8B show only an example of a possible implementation solution. In a specific implementation, there may be another possible implementation. For example, the step of determining, based on the second phase information of each second communication apparatus, the angle-of-departure information corresponding to each second communication apparatus may alternatively be performed by the positioning server. In this way, an amount of signaling communicated between the positioning server and each second communication apparatus can be reduced, a latency can be reduced, and a positioning speed of the first communication apparatus can be increased.

It should be noted that in this embodiment of this application, the positioning server is a network element that may be configured to initiate positioning on the first communication apparatus, for example, may be a location management function (location management function, LMF) in an NR system, or may be a network element that may initiate positioning on the first communication apparatus in another system. In this embodiment of this application, an example in which the positioning server is an LMF is used.

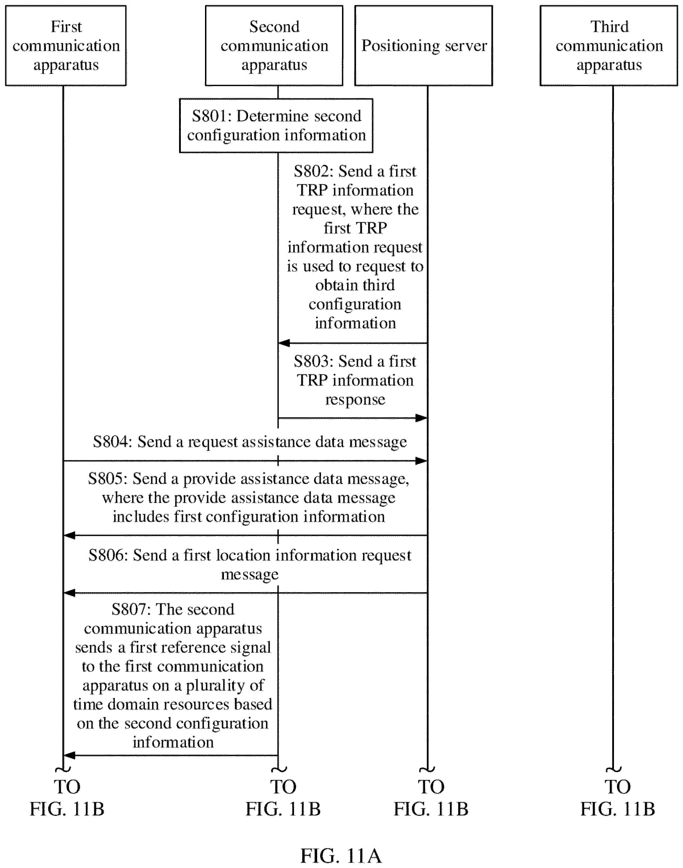

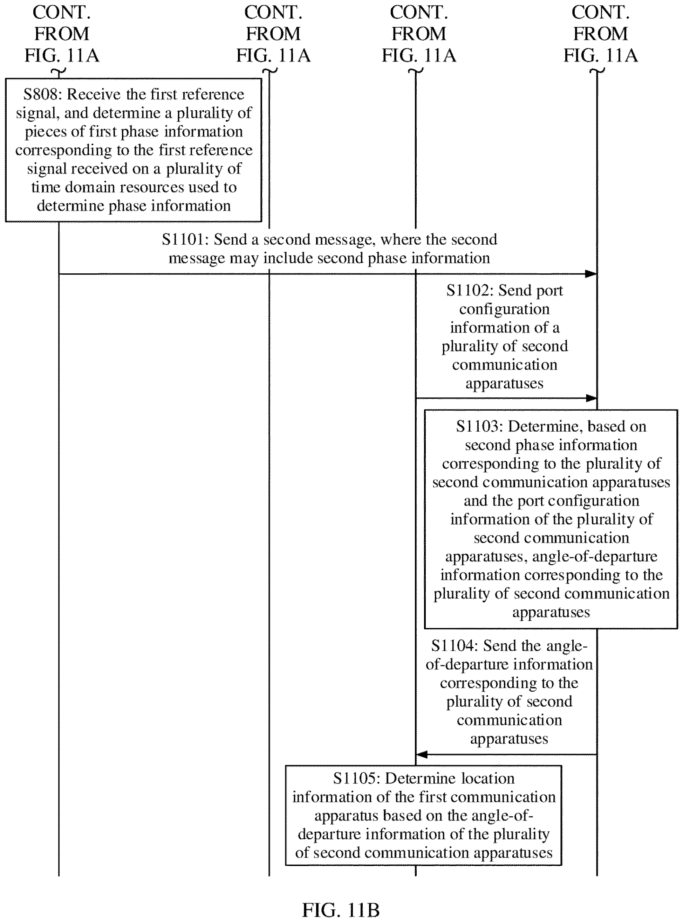

Based on the foregoing content, FIG. 11A and FIG. 11B are an example of a schematic flowchart of another AOD determining method according to an embodiment of this application. FIG. 11A and FIG. 11B further include a third communication apparatus, and the third communication apparatus may be a serving base station. This is basically similar to the solution provided in FIG. 8A and FIG. 8B. A difference lies in that in the solution provided in FIG. 11A and FIG. 11B, S1101 to S1105 may be performed after S808.

S1101: A first communication apparatus sends a second message to the third communication apparatus, where the second message may include second phase information corresponding to a second communication apparatus.

Correspondingly, the third communication apparatus may receive the second phase information from the first communication apparatus.

In a possible implementation, the first communication apparatus may send the second message to the third communication apparatus by using radio resource control (radio resource control, RRC).

In a possible implementation, the first communication apparatus may further send at least one of a parameter f2, a parameter f3, or a parameter f4 to the third communication apparatus. For related content, refer to the foregoing descriptions, and details are not described herein again.

In another possible implementation, the third communication apparatus may receive a plurality of pieces of second phase information corresponding to a plurality of second communication apparatuses from the first communication apparatus.

S1102: The positioning server sends port configuration information of the plurality of second communication apparatuses to the third communication apparatus. Port configuration information corresponding to one second communication apparatus includes a spacing between ports.

The positioning server may send a third message to the third communication apparatus by using the NRPPa, where the third message includes the port configuration information of the plurality of second communication apparatuses. The third message may be a TRP information request message, a positioning information request message, a measurement request message, or the like.

Correspondingly, the third communication apparatus receives the port configuration information of the plurality of second communication apparatuses from the positioning server.

For the second communication apparatus in the plurality of second communication apparatuses in S 1102, for the port configuration information that is of the second communication apparatus and that is sent by the positioning server to the third communication apparatus, refer to the foregoing descriptions of the parameter d. Details are not described herein again.

In another possible implementation, in S1102, the positioning server may further send at least one of a parameter c1, a parameter c2, a parameter c3, or a parameter c4 to the third communication apparatus. For related content of the parameter c 1, the parameter c2, the parameter c3, and the parameter c4, refer to the foregoing descriptions. Details are not described herein again.

In another possible implementation, in S1102, the positioning server may further send at least one of a parameter e1, a parameter e2, a parameter c2, a parameter c3, or a parameter c4 to the third communication apparatus. For related content of the parameter e1, the parameter e2, the parameter c2, the parameter c3, or the parameter c4, refer to the foregoing descriptions. Details are not described herein again.

Step S1102 may be performed before S 1101, for example, may be performed after S803 and before S804.

S 1103: The third communication apparatus determines, based on the second phase information corresponding to the plurality of second communication apparatuses and the port configuration information of the plurality of second communication apparatuses, angle-of-departure information corresponding to the plurality of second communication apparatuses.

S1104: The third communication apparatus sends, to the positioning server, a plurality of pieces of angle-of-departure information corresponding to the plurality of second communication apparatuses.

Correspondingly, the positioning server receives the plurality of pieces of angle-of-departure information corresponding to the plurality of second communication apparatuses.

In S1104, the third communication apparatus may send a message to the positioning server by using the NRPPa, where the message includes the plurality of pieces of angle-of-departure information, and the message may be referred to as TRP information response information, a positioning information response message, or a measurement response message.

S1105: The positioning server determines the location information of the first communication apparatus based on the angle-of-departure information of the plurality of second communication apparatuses.

For content of S 1105, refer to related content of S813. Details are not described herein again.

It can be learned from the foregoing content that, in the solution provided in FIG. 11A and FIG. 11B, the positioning server does not need to distribute, to each second communication apparatus, the second phase information corresponding to each second communication apparatus, but the first communication apparatus uniformly sends the second phase information corresponding to each second communication apparatus to the third communication apparatus, so that the third communication apparatus calculates the angle-of-departure information of the plurality of second communication apparatuses with reference to the port configuration information of the second communication apparatuses, and then sends the angle-of-departure information of the plurality of second communication apparatuses to the positioning server. When the third communication apparatus is a serving base station, a speed at which the first communication apparatus reports the second phase information to the third communication apparatus is faster than a speed at which the first communication apparatus reports the second phase information to the positioning server. In addition, because the positioning server may not need to separately send each piece of second phase information to each second communication apparatus, a speed of positioning the first communication apparatus may be increased.

FIG. 11A and FIG. 11B show only an example of a possible implementation solution. In a specific implementation, there may be another possible implementation. For example, the port configuration information of each second communication apparatus may be sent by the positioning server to the third communication apparatus, or may be sent by each second communication apparatus to the third communication apparatus, or may be sent by the first communication apparatus to the third communication apparatus. For example, the port configuration information may be sent together with the second phase information in S1101.

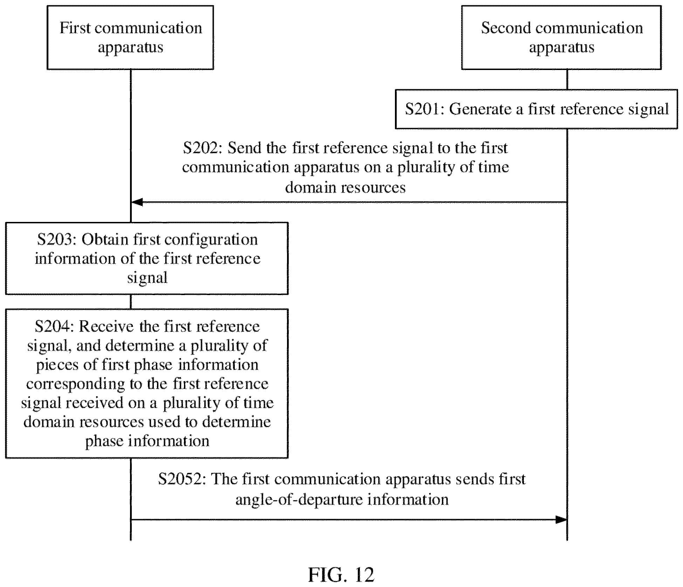

Based on the foregoing content, FIG. 12 is an example of a schematic flowchart of another AOD determining method according to an embodiment of this application. This is basically similar to the solution provided in FIG. 4. A difference lies in that in the solution provided in FIG. 12, S2052 may be further performed after S204.

S2052: A first communication apparatus sends first angle-of-departure information.

In this embodiment of this application, the first angle-of-departure information includes at least one of the following parameters: a parameter f5, a parameter f6, or a parameter f7.

The parameter f5 is information about at least one angle of departure corresponding to a plurality of pieces of first phase information.

The at least one piece of angle-of-departure information is determined based on the plurality of pieces of first phase information and a spacing between ports used to send a first reference signal. For a manner of determining the angle-of-departure information based on the plurality of pieces of first phase information, refer to the foregoing content. Details are not described herein again.

In a possible implementation, when the first angle-of-departure information reported by the first communication apparatus includes a plurality of pieces of angle-of-departure information, the first communication apparatus may report the plurality of pieces of angle-of-departure information in a form of a column (or an array).

For example, a sequence of the plurality of pieces of angle-of-departure information in the first angle-of-departure information matches a sequence of time domain resources corresponding to the plurality of pieces of first phase information. In this case, the first communication apparatus may sort the plurality of pieces of first phase information based on a receiving sequence of signals used to estimate the first phase information, sequentially calculate phase difference information corresponding to two pieces of adjacent first phase information, then sequentially obtain angle-of-departure information based on each piece of phase difference information, and then report the plurality of pieces of obtained angle-of-departure information that have a sorting relationship.

For another example, a sequence of the plurality of pieces of angle-of-departure information in the first angle-of-departure information matches a sequence of identifiers of ports corresponding to the plurality of pieces of first phase information. In this example, there may be a preset sorting relationship between the plurality of ports used to send the first reference signal on the second communication apparatus side. For example, there is a preset sequence relationship between ports corresponding to the first radio frequency channel 43 in FIG. 6, and the sequence is sequentially the port 441, the port 442, the port 443, the port 444, the port 445, the port 446, the port 447, and the port 448. The first communication apparatus may determine, based on ports corresponding to received signals, a correspondence between a plurality of pieces of first phase information determined based on the received signals and the ports, to determine a sequence of the plurality of pieces of first phase information based on a sequence relationship of identifiers of the ports, further sequentially calculate phase difference information corresponding to two pieces of adjacent first phase information, sequentially obtain angle-of-departure information based on each piece of phase difference information, and then report the plurality of pieces of obtained angle-of-departure information that have a sorting relationship.

For example, ports used by the second communication apparatus to send the first reference signal are sequentially the port 441, the port 442, the port 443, the port 444, the port 445, the port 446, the port 447, and the port 448. In this case, the first communication apparatus may sequentially obtain the following content: first phase information corresponding to the port 441, first phase information corresponding to the port 442, first phase information corresponding to the port 443, first phase information corresponding to the port 444, first phase information corresponding to the port 445, first phase information corresponding to the port 446, first phase information corresponding to the port 447, and first phase information corresponding to the port 448. Further, the first communication apparatus may sequentially obtain the following content: phase difference information corresponding to the port 442 and the port 441, phase difference information corresponding to the port 444 and the port 443, phase difference information corresponding to the port 446 and the port 445, and phase difference information corresponding to the port 448 and the port 447. Further, the first communication apparatus sequentially obtains the angle-of-departure information based on each piece of phase difference information, and then reports the plurality of pieces of obtained angle-of-departure information that have a sorting relationship.

For another example, ports used by the second communication apparatus to send the first reference signal are sequentially the port 441, the port 442, the port 441, the port 443, the port 441, the port 444, the port 441, and the port 445. In this case, the first communication apparatus may sequentially obtain the following content: first phase information (information a1) corresponding to the port 441, first phase information (information a2) corresponding to the port 442, first phase information (information a3) corresponding to the port 441, first phase information (information a4) corresponding to the port 443, first phase information (information a5) corresponding to the port 441, first phase information (information a6) corresponding to the port 444, first phase information (information a7) corresponding to the port 441, and first phase information (information a8) corresponding to the port 445. Further, the first communication apparatus may sequentially obtain the following content: phase difference information (obtained based on the information a1 and the information a2) corresponding to the port 442 and the port 441, phase difference information (obtained based on the information a3 and the information a4) corresponding to the port 443 and the port 441, phase difference information (obtained based on the information a5 and the information a6) corresponding to the port 444 and the port 441, and phase difference information (obtained based on the information a7 and the information a8) corresponding to the port 445 and the port 441. Further, the first communication apparatus sequentially obtains the angle-of-departure information based on each piece of phase difference information, and then reports the plurality of pieces of obtained angle-of-departure information that have a sorting relationship. It can be learned that, in this solution, the port 441 may be used as a reference port, and the plurality of pieces of first phase information corresponding to the port 441 may be used for channel calibration, so that precision of the angle of departure can be further improved.

In another possible implementation, when the first angle-of-departure information reported by the first communication apparatus includes at least two pieces of angle-of-departure information, the first communication apparatus may report the at least two pieces of angle-of-departure information in a plurality of reporting manners, and may report one or more pieces of angle-of-departure information each time.

The parameter f6 is at least one piece of first angle-of-departure average information corresponding to the plurality of pieces of first phase information.

The at least one piece of first angle-of-departure average information is determined based on at least two of the at least one piece of angle-of-departure information.

The first angle-of-departure average information may be obtained by averaging the plurality of pieces of angle-of-departure information, or may be obtained by averaging the plurality of pieces of angle-of-departure information through weighting. There are a plurality of specific manners. This is not limited in embodiments of this application.

The parameter f7 is at least one piece of second angle-of-departure average information corresponding to the plurality of pieces of first phase information.

The at least one piece of second angle-of-departure average information is determined based on average information of phase difference information corresponding to the plurality of pieces of first phase information and port spacing average information.

For a manner of obtaining the average information of the plurality of pieces of phase difference information, refer to the foregoing content. Details are not described herein again. A port spacing average is determined based on an average of spacings between the plurality of ports used to send the first reference signal.

It can be learned that, in the solution shown in FIG. 12, the first communication apparatus may calculate the first angle-of-departure information based on the spacing between the ports that are on the second communication apparatus side and that are used to send the first reference signal. It should be noted that the first communication apparatus may obtain the spacing between the ports. If the spacing is not obtained, calculation may be performed based on a preset port spacing value. For example, the preset port spacing value may be a half wavelength.

It should be noted that both S2051 and S2052 may be performed in one solution. For example, a measurement value reported by the first communication apparatus includes the first angle-of-departure information, and also includes second phase information. In another possible implementation, either S2051 or S2052 may be selected for use. For example, the measurement value reported by the first communication apparatus includes the first angle-of-departure information but does not include the second phase information. For another example, the measurement value reported by the first communication apparatus does not include the first angle-of-departure information but includes the second phase information.

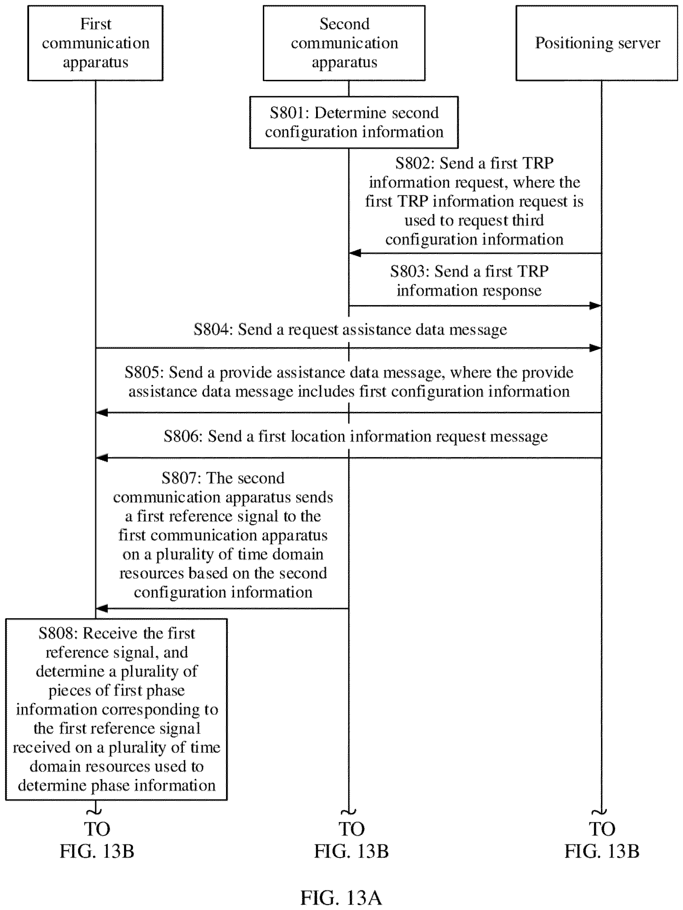

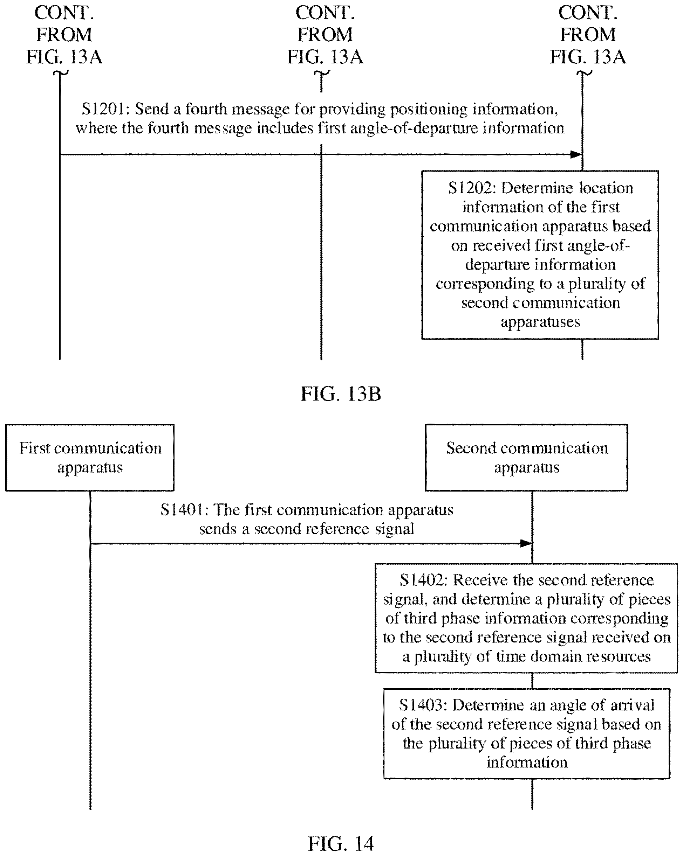

Based on the foregoing content, FIG. 13A and FIG. 13B are an example of a schematic flowchart of another AOD determining method according to an embodiment of this application. This is basically similar to the solution provided in FIG. 8A and FIG. 8B. A difference lies in that in the solution provided in FIG. 13A and FIG. 13B, S1201 and S1202 are performed after S808.

S1201: A first communication apparatus sends, to a positioning server, a fourth message for providing positioning information. The fourth message for providing the positioning information includes first angle-of-departure information, and may further include at least one of the following parameters: a parameter g1, a parameter g2, or a parameter g3.

The parameter g1 is reliability information of the first angle-of-departure information.

The reliability information of the first angle-of-departure information includes standard deviation information and/or variance information of a plurality of pieces of angle-of-departure information corresponding to a plurality of pieces of first phase information.

The parameter g2 is second indication information. The second indication information indicates a correspondence between a parameter in the first angle-of-departure information and an identifier of a port used to send a first reference signal.

When the first angle-of-departure information includes a plurality of pieces of angle-of-departure information, the second indication information may indicate an identifier of a port corresponding to each of the plurality of pieces of angle-of-departure information. A port corresponding to one piece of angle-of-departure information is a port corresponding to phase difference information based on which the angle-of-departure information is calculated.

The second indication information may include indication information indicating a measurement manner of measuring the first reference signal by the first communication apparatus. There are a plurality of measurement manners. For details, refer to related descriptions of the parameter f3. Details are not described herein again.

The parameter g3 is the identifier of the second communication apparatus.

For the parameter g3, refer to related content of the parameter f4. Details are not described herein again.

S1202: The positioning server determines location information of the first communication apparatus based on the received first angle-of-departure information corresponding to a plurality of second communication apparatuses.

In the solution shown in FIG. 13A and FIG. 13B, the first communication apparatus may calculate the first angle-of-departure information based on a spacing between the ports that are on the second communication apparatus side and that are used to send the first reference signal. The first communication apparatus may obtain the spacing between the ports from the positioning server by using S805, and the positioning server may obtain the spacing between the ports by using S803. In another possible implementation, if the first communication apparatus does not obtain, from another apparatus side, the spacing between the ports that are in the second communication apparatus and that are used to send the first reference signal, calculation may be performed based on a preset port spacing value. For example, the preset port spacing value may be a half wavelength.

In the implementation shown in FIG. 13A and FIG. 13B, in S806, the location information request message may further indicate the first communication apparatus to report the angle-of-departure information. In this way, the first communication apparatus calculates the first angle-of-departure information based on the location information request message after subsequent S808, and reports the first angle-of-departure information.

It should be noted that, in the solution provided in FIG. 13A and FIG. 13B, the fourth message for providing the positioning information may not include the parameter f1 (the second phase information), or may not include the parameter f2, the parameter f3, and the parameter f4. In another possible implementation, the fourth message for providing the positioning information may alternatively include the parameter f1 (the second phase information), or may include one or more of the parameter f2, the parameter f3, or the parameter f4. This is not limited in embodiments of this application.

Based on the foregoing content, FIG. 14 is an example of a schematic flowchart of an AOA determining method according to an embodiment of this application. To describe the solutions provided in embodiments of this application more clearly, FIG. 14 is described from an interaction perspective. The method may be executed by a first communication apparatus and a second communication apparatus.

The AOA determining solution provided in FIG. 14 in embodiments of this application may be used together with the AOD determining solutions (in FIG. 4, FIG. 8A and FIG. 8B, FIG. 11A and FIG. 11B, FIG. 12, and FIG. 13A and FIG. 13B), or may be used independently. This is not limited in embodiments of this application.

The first communication apparatus may be a terminal device (for example, the terminal device 103 in FIG. 1a or FIG. 1b, or the terminal device in FIG. 1c), or may be a module, a unit, or a chip in a terminal device, or may be a network device (for example, the access network device in FIG. 1c), or may be a module, a unit, or a chip in a network device. The second communication apparatus may be a terminal device (for example, the terminal device 104 or the terminal device 105 in FIG. 1a, or the terminal device in FIG. 1c), or may be a module, a unit, or a chip in a terminal device, or may be a network device (for example, the base station 101 or the base station 102 in FIG. 1b, or the access network device in FIG. 1c), or may be a module, a unit, or a chip in a network device. The first communication apparatus and the second communication apparatus may be flexibly selected. For details, refer to the related descriptions in FIG. 8A and FIG. 8B. Details are not described again.

As shown in FIG. 14, the AOA determining method includes the following steps.

S1401: The first communication apparatus sends a second reference signal.

In S1401, the first communication apparatus may send the entire second reference signal through one port. Alternatively, the first communication apparatus may simultaneously send the second reference signal through a plurality of ports. In this way, a requirement of the AOA determining solution on hardware of the first communication apparatus can be reduced, to reduce costs of the first communication apparatus.

S 1402: The second communication apparatus receives the second reference signal, and determines a plurality of pieces of third phase information corresponding to the second reference signal received on a plurality of time domain resources.

S1403: The second communication apparatus determines an angle of arrival of the second reference signal based on the plurality of pieces of third phase information.

For ease of differentiation, in this embodiment of this application, a plurality of time domain resources used to determine phase information on the second communication apparatus side may be referred to as S3 time domain resources, where S3 is an integer greater than 1.

There may be a plurality of possible correspondences between the S3 time domain resources and the plurality of pieces of third phase information. In a possible implementation, the second communication apparatus may determine one piece of third phase information based on one or more of the S3 time domain resources. For example, the second communication apparatus may determine S3 pieces of third phase information corresponding to the S3 time domain resources, and the plurality of pieces of third phase information are in a one-to-one correspondence with the S3 time domain resources. For another example, the second communication apparatus may determine a plurality of pieces (which may be less than S3) of third phase information corresponding to time domain resources in the S3 time domain resources. For example, S3 is 8. The second communication apparatus may determine six pieces of third phase information corresponding to the eight time domain resources. For example, the six pieces of third phase information may be determined based on signals received on six of the eight time domain resources. For another example, five pieces of third phase information may be determined based on signals received on five of the eight time domain resources, and one piece of third phase information may be determined based on signals received on remaining three time domain resources in the eight time domain resources.

In a possible implementation, the second communication apparatus may determine one piece of third phase information based on one of the S3 time domain resources. For a piece of third phase information in the plurality of pieces of third phase information, the third phase information is determined based on any propagation path through which a signal received on a time domain resource corresponding to the third phase information arrives at the second communication apparatus. The propagation path may be a normal path or an additional path, for example, may be a first path, a direct path, a reflection path, or a strongest path. For example, the second communication apparatus may estimate the third phase information based on the first path of the signal received on each of the S3 time domain resources.

The second communication apparatus determines the plurality of pieces of third phase information based on the plurality of time domain resources. Therefore, the AOA of the reference signal may be further determined based on the plurality of pieces of third phase information. It can be learned that this application may provide a solution of determining an AOA based on phase information, so that when an angle used for positioning needs to be determined, there may be one more optional solution.

To further describe beneficial effects that can be brought by embodiments of this application, the following provides further descriptions with reference to FIG. 5a and FIG. 5b.

As shown in FIG. 5a, in a possible AOA determining solution, the first communication apparatus may send a sounding reference signal (Sounding reference signal, SRS) to the second communication apparatus. The second communication apparatus simultaneously receives the SRS through a plurality of radio frequency channels, and obtains phase information corresponding to the plurality of radio frequency channels. Then, the second communication apparatus calculates the AOA of the reference signal based on the phase information and a port spacing corresponding to the radio frequency channels. In this solution, the second communication apparatus usually needs to configure a plurality of radio frequency channels. If the second communication apparatus is configured with a small quantity of radio frequency channels, for example, only one radio frequency channel is configured, this solution cannot be used. In addition, in actual application, to reduce costs, a small quantity of radio frequency channels are usually configured in a communication apparatus, but a large quantity of physical ports are usually configured.

However, in a possible solution provided in this embodiment of this application, a switch may be disposed between a radio frequency channel and a port. For one time of data transmission, the radio frequency channel does not necessarily perform data transmission through all ports connected to the radio frequency channel, but may select, through the switch, one or more ports in all the ports corresponding to the radio frequency channel to perform data transmission. For a structure of the second communication apparatus, refer to FIG. 5b.

In S1402, in a possible implementation, the second communication apparatus receives a first part of the second reference signal on a fifth time domain resource, and determines one of the plurality of pieces of third phase information based on the first part of the second reference signal. The second communication apparatus receives a second part of the second reference signal on a sixth time domain resource, and determines another one of the plurality of pieces of third phase information based on the second part of the second reference signal.

In other words, in S1402, the second communication apparatus may select, by using the switch, a port that needs to be used in a process of transmitting the first reference signal. Therefore, the second communication apparatus may sequentially receive signals through a plurality of ports connected to one radio frequency channel. The second communication apparatus obtains, through measurement, a plurality of pieces of third phase information corresponding to at least two of the plurality of ports. Further, the AOA may be calculated by a device like the second communication apparatus or another apparatus (for example, a positioning server) with reference to the plurality of pieces of third phase information and a spacing between ports in the at least two ports.

It can be learned from the foregoing content that, in the solution provided in this embodiment of this application, corresponding phase information may be calculated at a granularity of a port (a quantity of ports may affect precision of the phase information), to obtain the AOA. In comparison with a solution in which an AOA is calculated at a granularity of a radio frequency channel (precision of the AOA depends on a quantity of radio frequency channels), in this embodiment of this application, a requirement on a quantity of radio frequency channels on the second communication apparatus side can be reduced when AOA calculation precision is ensured. Therefore, costs of the second communication apparatus can be reduced.

In S 1402, the second communication apparatus receives the first part of the second reference signal on the fifth time domain resource through a third port. The second communication apparatus receives the second part of the second reference signal on the sixth time domain resource through a fourth port.

It should be noted that the step of determining, by the second communication apparatus, one piece of third phase information based on the first part of the second reference signal occurs after the first part of the second reference signal is received and before the second communication apparatus receives the second part of the second reference signal, or may occur after the second communication apparatus receives the second part of the second reference signal.

Because the first part and the second part of the second reference signal are received through different ports of the second communication apparatus, after obtaining the plurality of pieces of phase information through measurement based on signals received through different ports, the second communication apparatus may calculate the angle of arrival with reference to phase difference information of the plurality of pieces of phase information and a spacing between ports. In addition, because the second communication apparatus receives different parts of a same reference signal through different ports, a quantity of reference signals used to calculate the angle of arrival can be reduced, to save network resources and reduce a latency.

It should be noted that the "third port" in this embodiment of this application is a logical port, and the "third port" may include one or more physical ports. The "fourth port" is a logical port, and the "fourth port" may include one or more physical ports. There is at least one physical port that is in the physical ports included in the third port and that is different from each of all the physical ports included in the fourth port. Alternatively, there is at least one physical port that is in the physical ports included in the fourth port and that is different from each of all the physical ports included in the third port. The physical ports included in the third port and the physical ports included in the fourth port may overlap or may not overlap. For related content related to the "third port" and the "fourth port", refer to related descriptions of the "first port" and the "second port". Details are not described herein again.

In a possible implementation, the third port and the fourth port may have a selective connection relationship with a same radio frequency channel. For example, both the third port and the fourth port are ports that have a selective connection relationship with a second radio frequency channel. The third port and the fourth port. The second communication apparatus receives the second part of the second reference signal on the sixth time domain resource through the fourth port connected to the second radio frequency channel.

In another possible implementation, the second communication apparatus may alternatively receive the second reference signal through a plurality of ports of a plurality of radio frequency channels. For example, the second communication apparatus may receive the first part of the first reference signal through a third port of the second radio frequency channel and one or more ports of a third radio frequency channel, and the second communication apparatus may receive the second part of the first reference signal through the fourth port of the second radio frequency channel and one or more ports of another radio frequency channel (for example, the third radio frequency channel). To describe the solutions provided in embodiments of this application more clearly, the second radio frequency channel in the plurality of radio frequency channels used to receive the second reference signal is described in this embodiment of this application.

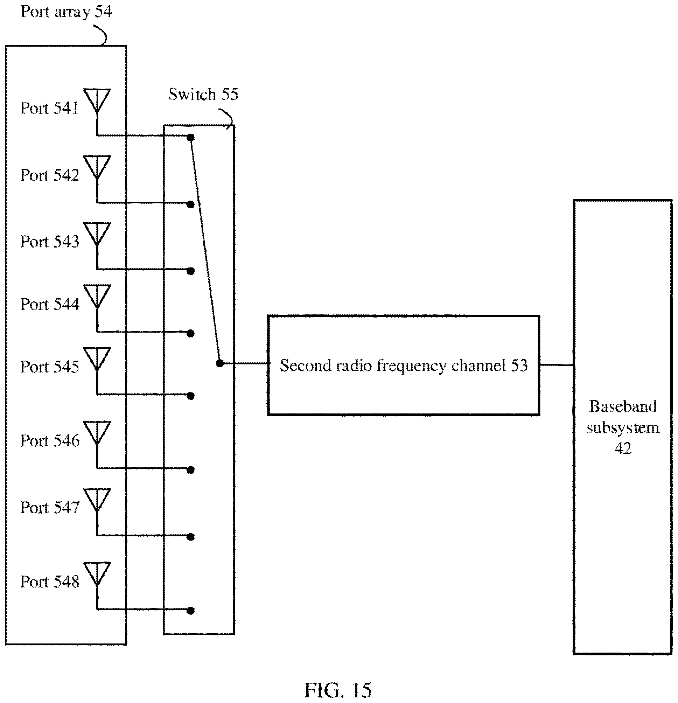

FIG. 15 is an example of a diagram in which the second radio frequency channel 53 in FIG. 5b is connected to ports in the port array 54 through the switch 55. In FIG. 15, an example in which the second radio frequency channel 53 is connected to eight physical ports is used for presentation. The eight physical ports are respectively a port 541, a port 542, a port 543, a port 544, a port 545, a port 546, a port 547, and a port 548. For example, with reference to FIG. 15, the third port may be, for example, the port 541, and the fourth port may be, for example, the port 542. For another example, the third port may be, for example, the port 541 and the port 542, and the fourth port may be, for example, the port 542 and the port 543. For another example, the third port may be, for example, the port 541 and the port 542, and the fourth port may be, for example, the port 547 and the port 548 in the port array 54.

In another possible implementation, the third port and the fourth port may be two ports connected to two radio frequency channels. For example, the third port is a port connected to the first radio frequency channel, and the fourth port is a port connected to the second radio frequency channel.

In another possible implementation, the second communication apparatus may receive a plurality of second reference signals from the first communication apparatus on a plurality of time domain resources through a plurality of ports. For example, the second communication apparatus may receive one second reference signal through one port, and determine one piece of third phase information based on the received second reference signal; and the second communication apparatus receives another second reference signal through another port, and determines another piece of third phase information based on the another received first reference signal. Then, the second communication apparatus may determine an angle of departure based on the at least two pieces of third phase information.

In this embodiment of this application, there may be a plurality of possible implementations of a correspondence between the S3 time domain resources and the ports, for example, an implementation h1, an implementation h2, an implementation h3, and an implementation h4 shown in the following content.

Implementation h1: Two time domain resources in the plurality of time domain resources (which may also be referred to as S3 time domain resources) used to receive the second reference signal correspond to two different ports used to receive the second reference signal.

The implementation h1 may also be understood as that at least two of the S3 time domain resources correspond to different ports. In this way, because the second communication apparatus receives the second reference signal through at least two different ports, the second communication apparatus may measure the signals received through the at least two different ports, to obtain at least two pieces of third phase information. The at least two pieces of third phase information may correspond to at least one phase difference, and then the angle of arrival may be determined based on the phase difference. Therefore, for the second communication apparatus that includes only one radio frequency channel including at least two ports, positioning may alternatively be performed based on the phase information corresponding to the second reference signal received by the first communication apparatus, to reduce a requirement on hardware of the second communication apparatus in a solution of performing positioning based on phase information, and reduce costs of the second communication apparatus. In addition, for the second communication apparatus with a small quantity of radio frequency channels, the solution provided in this embodiment of this application can further improve precision of positioning the first communication apparatus.

Implementation h2: One of the plurality of ports corresponds to one of the S3 time domain resources.

In this way, in a process of receiving the second reference signal on the S3 time domain resources, one port is used once. In this way, the second communication apparatus may receive the second reference signal through as many different ports as possible, and then the second communication apparatus may obtain third phase information corresponding to more different ports. More phase differences may be obtained based on third phase information corresponding to more different ports. It can be learned that, in this solution, a quantity of phase differences may be increased, to further improve precision of the angle of arrival.

Implementation h3: One of the plurality of ports corresponds to a plurality of time domain resources in the S3 time domain resources.

In this way, in a process in which the second communication apparatus receives the second reference signal on the S3 time domain resources, one port may be used for a plurality of times. In this case, one port may be set as a reference port, to provide calibration for another port. In addition, ports are reused a plurality of times, so that a quantity of ports required in this solution can be reduced, to reduce a requirement on hardware of the second communication apparatus, and reduce costs of the second communication apparatus.

Implementation h4: Two adjacent time domain resources in the S3 time domain resources correspond to two different ports.

In this way, in a process of receiving the second reference signal on the S3 time domain resources in S1402, the second communication apparatus needs to change a port after receiving a signal on one time domain resource, to receive a signal on a next time domain resource. In this way, the first communication apparatus may obtain two pieces of different third phase information based on signals received on two adjacent time domain resources. A phase difference may be obtained by using the two pieces of different third phase information. When ports corresponding to every two adjacent time domain resources are different, a maximum quantity of phase differences may be obtained, so that precision of the angle of departure obtained by using the phase difference can be improved.

In this embodiment of this application, the S3 time domain resources may also have a plurality of possible implementations. For example, the following implementation i1, implementation i2, implementation i3, and implementation i4 are examples of several possible implementations of the S3 time domain resources.

Implementation i1: Two time domain resources that are in the S3 time domain resources and that correspond to different ports are separated by at least one time domain resource unit.

Because the second communication apparatus receives the second reference signal through at least two different ports, to reserve time for the second communication apparatus to perform port switching in the process of receiving the second reference signal, two time domain resources that are in the S3 time domain resources and that correspond to different ports are separated by at least one time domain resource unit. In this way, the second communication apparatus may have time to perform a port switching action.

Implementation i2: Two adjacent time domain resources in the S3 time domain resources are separated by at least one time domain resource unit.

In this way, when two adjacent time domain resources in the S3 time domain resources correspond to two different ports, the second communication apparatus may have time to perform a port switching action between the adjacent time domain resources in the S3 time domain resources.

Implementation i3: Adjacent time domain resources in the S3 time domain resources are separated by Q2 time domain resource units, where Q2 is a positive integer.

Because this solution is regular, a quantity of bits occupied by information indicating the S3 time domain resources can be further reduced.

Implementation i4: One time domain resource unit may be one or more time domain symbols.

For related descriptions of the time domain resource unit, refer to the foregoing content. In the implementation i4, in the process in which the second communication apparatus receives the second reference signal, port switching may be performed at a time domain symbol level, and the second communication apparatus may obtain a plurality of pieces of third phase information at the time domain symbol level. In comparison with a solution in which the second communication apparatus receives a plurality of second reference signals and the second communication apparatus obtains one piece of third phase information by measuring each second reference signal, in this embodiment of this application, because the second communication apparatus knows information about the time domain resources for determining the third phase information, a phenomenon of determining one piece of third phase information based on data received on a plurality of adjacent time domain symbols can be reduced (because the data received on the plurality of adjacent time domain symbols may be considered as one signal by a receive end and cannot be differentiated). In this way, the first communication apparatus can obtain a plurality of pieces of third phase information at a symbol granularity, and then can determine the angle of arrival based on phase information of at least one reference signal. This reduces technical difficulty in calculating the angle of arrival based on the phase information, and also reduces a latency of a solution of calculating the angle of arrival based on behavior information.

In a possible implementation, the S3 time domain resources are S1 time domain resources in one slot (slot). The second reference signal may be transmitted together with data, or may be transmitted separately. For a relationship between the second reference signal and the data transmission, refer to the relationship between the first reference signal and the data transmission, for example, the relationship between the first reference signal and the data transmission shown in FIG. 7a and FIG. 7b. Details are not described herein again.

For a correspondence between the S3 time domain resources and the ports, refer to the correspondence between the S1 time domain resources and the ports, for example, the examples of the correspondence between the S 1 time domain resources and the ports shown in FIG. 7c and FIG. 7d. Details are not described herein again.

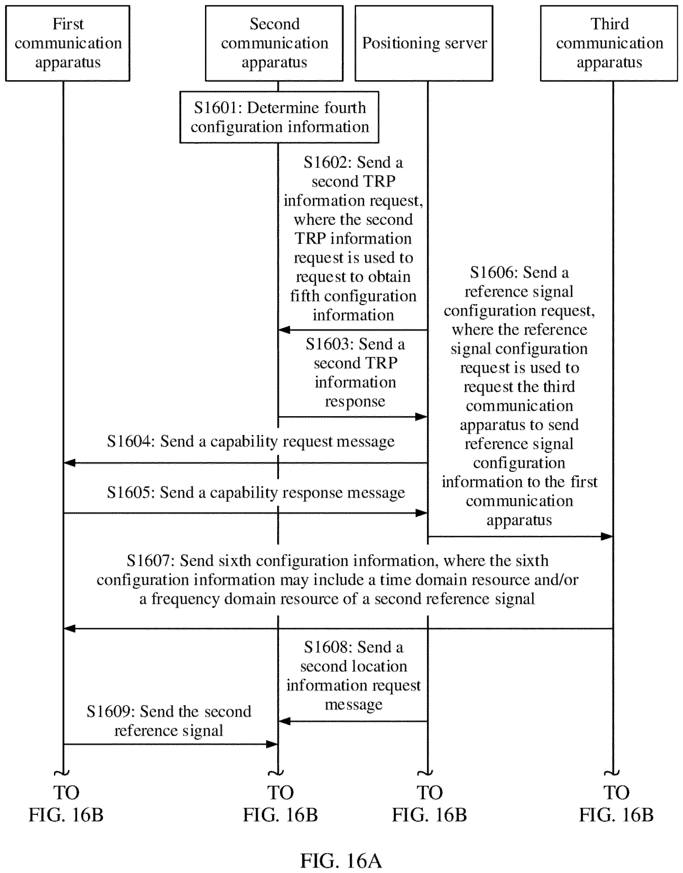

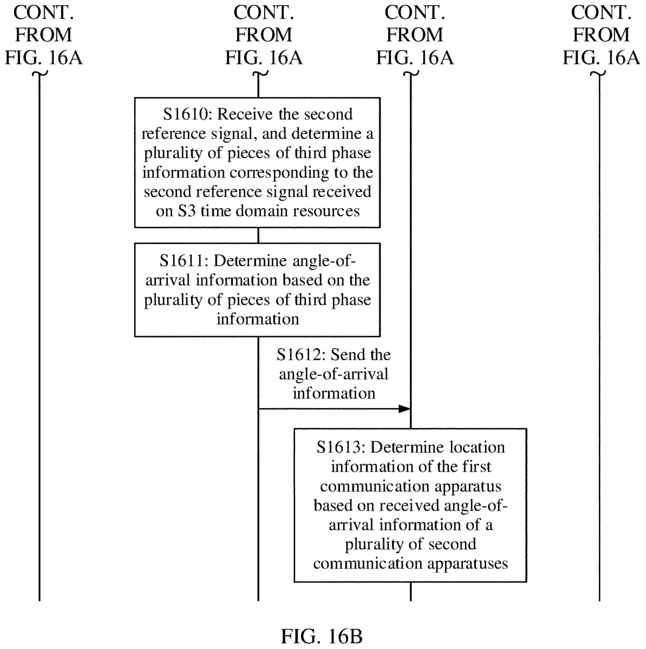

Based on the foregoing content, FIG. 16A and FIG. 16B are an example of a schematic flowchart of another AOA determining method. In this method, an example in which a first communication apparatus is a terminal device, a second communication apparatus is a base station, and a positioning server is an LMF is used for description. As shown in FIG. 8A and FIG. 8B, the method includes the following steps.

S1601: The second communication apparatus determines fourth configuration information of a second reference signal.

In this embodiment of this application, the fourth configuration information may include at least one of the following parameters: a parameter j 1, a parameter j2, parameter j3, or a parameter j4.

The parameter j 1 is information indicating S3 time domain resources.

The information indicating the S3 time domain resources may include information about a quantity of time domain resource units between two of the S3 time domain resources; and/or information about the S3 time domain resources. The S3 time domain resources may also be referred to as a plurality of time domain resources used to determine a plurality of pieces of third phase information.

For example, the information indicating the S3 time domain resources may include indication information of a quantity of time domain resource units between adjacent time domain resources in the S3 time domain resources. For example, the information indicating the S3 time domain resources may be information indicating the following content: In one slot, the second reference signal is received once at an interval of one time domain symbol (or a plurality of time domain symbols), and duration of receiving the second reference signal is one time domain symbol (or a plurality of time domain symbols). When the fourth configuration information includes the information about the quantity of time domain resource units between two of the S3 time domain resources, the second communication apparatus may determine the S3 time domain resources used to receive the second reference signal, so that the second reference signal may be received on the S3 time domain resources.

The parameter j2 is information about a frequency domain resource corresponding to the second reference signal.

The second reference signal may occupy one or more subcarriers in frequency domain. Frequency domain resources corresponding to two of the S3 time domain resources may be the same. In another possible implementation, frequency domain resources corresponding to all of the S3 time domain resources may be the same. In this way, the solution may be simple.

For information about the frequency domain resource corresponding to the second reference signal, refer to the information about the frequency domain resources corresponding to the first reference signal. Details are not described herein again.

The parameter j3 is information indicating a correspondence between the S3 time domain resources and a plurality of ports.

The information indicating the correspondence between the S3 time domain resources and the plurality of ports may include at least one of the following content:

the S3 time domain resources and identifiers of the plurality of ports (the identifiers of the plurality of ports may appear in a form of an array, and each number may indicate an identifier of one port); or
an identifier of a target port switching policy used to receive a reference signal.

One or more port switching policies for receiving a reference signal may be preset on the second communication apparatus side, and the target port switching policy for receiving a reference signal is one of the preset port switching policies for receiving a reference signal. The port switching policy for receiving a reference signal includes information about the identifiers of the plurality of ports corresponding to the S3 time domain resources. The second communication apparatus may determine, based on the identifier of the target port switching policy used for receiving a reference signal, the target port switching policy used for receiving a reference signal, and then determine the identifiers of the plurality of ports corresponding to the S3 time domain resources.

The parameter j4 is a sending periodicity of the second reference signal.

In a possible implementation, the first communication apparatus may periodically send the second reference signal, so that the second communication apparatus periodically measures the second reference signal, to periodically position the first communication apparatus.

The sending periodicity of the second reference signal may indicate a time interval at which the first communication apparatus sends the first reference signal once. The time interval may be one or more symbols, slots, frames, seconds, minutes, hours, or the like.

In another possible implementation, if the first communication apparatus does not need to be periodically positioned, the sending periodicity may not be configured in the fourth configuration information, or a value of the sending periodicity configured in the fourth configuration information indicates that the first communication apparatus sends the second reference signal once, and the first communication apparatus does not periodically send the second reference signal.

In addition, there are a plurality of manners in which the second communication apparatus determines the fourth configuration information. Specifically, the manner may be similar to the manner of determining the second configuration information. Details are not described herein again.

S1602: The positioning server may send a second TRP information request to the second communication apparatus, where the second TRP information request is used to request to obtain fifth configuration information.

The positioning server may send the second TRP information request to the second communication apparatus by using the NR positioning protocol (NR positioning protocol a, NRPPa).

S1603: The second communication apparatus sends a second TRP information response to the positioning server, where the second TRP information response includes the fifth configuration information.

The second TRP information response may also be referred to as a TRP information response.

The fifth configuration information may include at least one of the parameter j1, the parameter j2, the parameter j3, or the parameter d. For related content of the parameter j1, the parameter j2, the parameter j3, or the parameter d, refer to the foregoing content. Details are not described again.

S1604: The positioning server sends a capability request message to the first communication apparatus, where the capability request message is used to query whether the first communication apparatus supports sending of the second reference signal.

In a possible implementation, the positioning server may send the capability request message to the first communication by using the LPP.

S1605: The first communication apparatus sends a capability response message to the positioning server, where the capability response message indicates that the first communication apparatus supports sending of the second reference signal.

S1606: The positioning server sends a reference signal configuration request to a third communication apparatus, where the reference signal configuration request is used to request the third communication apparatus to send reference signal configuration information to the first communication apparatus.

The positioning server may send the reference signal configuration request to the third communication apparatus after receiving, from the first communication apparatus, the message indicating that the first communication apparatus supports sending of the second reference signal. If the positioning server receives, from the first communication apparatus, a message indicating that the first communication apparatus does not support sending of the second reference signal, the procedure may be ended, or the first communication apparatus is positioned in another positioning manner.

The reference signal configuration information may include a time domain resource and/or a frequency domain resource of the second reference signal. In a possible implementation, the positioning server may provide a suggestion on the time domain resource and/or the frequency domain resource of the second reference signal based on a configuration of the second communication apparatus (for example, information in the fifth configuration information), and send the suggestion to the third communication apparatus.

S1607: The third communication apparatus sends sixth configuration information to the first communication apparatus, where the sixth configuration information may include the time domain resource and/or the frequency domain resource of the second reference signal.

The third communication apparatus may send the sixth configuration information to the first communication apparatus based on the suggestion of the positioning server.

In a possible implementation, the time domain resource that is of the second reference signal and that is included in the sixth configuration information may include the parameter k1. The sixth configuration information may further include the following parameter k2.

The parameter k1 is information indicating S4 time domain resources used by the first communication apparatus to send the second reference signal.

In a possible implementation, the information indicating the S4 time domain resources may include information about a quantity of time domain resource units between two of the S4 time domain resources; and/or information about the S4 time domain resources.

When the sixth configuration information includes the information about the quantity of time domain resource units between two of the S4 time domain resources, the first communication apparatus may determine the S4 time domain resources on which the second reference signal needs to be sent.

For example, the information indicating the S4 time domain resources may be information indicating the following content: In one slot, the first communication apparatus sends the reference signal once at an interval of one time domain symbol, and duration for sending the reference signal is one time domain symbol (or a plurality of time domain symbols). In this way, in a process of sending the first reference signal, the first communication apparatus may send the first reference signal once at an interval of one time domain symbol, and duration is one symbol (or a plurality of symbols).

It should be noted that the S4 time domain resources may be a segment of consecutive time domain resources, or may be S4 time domain resources with intervals. A distribution rule of the S4 time domain resources may be consistent with a distribution rule of the S3 time domain resources. For example, two adjacent time domain resources in the S4 time domain resources are separated by one time domain symbol.

The parameter k2 is an identifier of the second communication apparatus.

For the identifier of the second communication apparatus, refer to the foregoing content. Details are not described herein again.

It should be noted that the first communication apparatus obtains the sixth configuration information in a plurality of manners. For details, refer to the manner of obtaining the first configuration information. Details are not described herein again.

S1608: The positioning server sends a second location information request message to the second communication apparatus, where the second location information request message indicates the second communication apparatus to report a measurement value.

The second location information request message sent by the positioning server to the second communication apparatus may include indication information of a measurement manner. The indication information of the measurement manner may indicate the second communication apparatus to receive the second reference signal in a port switching manner, and separately measure a plurality of parts of the second reference signal, to obtain a plurality of pieces of third phase information.

S1609: The first communication apparatus sends the second reference signal.

The first communication apparatus may send the second reference signal on the S4 time domain resources. In S807, the first communication apparatus may send the second reference signal on a segment of consecutive time domain resources, or the first communication apparatus may send the second reference signal at an interval of some time domain resources. For example, the first communication apparatus may send the second reference signal once at an interval of one time domain symbol, and duration is one or more symbols.

The step of sending the second reference signal by the first communication apparatus in S 1609 may be performed before S1608.

S1610: The second communication apparatus receives the second reference signal, and determines a plurality of pieces of third phase information corresponding to the second reference signal received on the S3 time domain resources.

In S808, the second communication apparatus may perform channel calibration on the plurality of ports used to receive the second reference signal, so that phases of the plurality of ports are initially consistent. Then, the second reference signal is received through the plurality of ports. In this way, precision of the determined angle of arrival can be improved.

S1611: The second communication apparatus determines angle-of-arrival information based on the plurality of pieces of third phase information.

The second communication apparatus may calculate the plurality of pieces of third phase information, to obtain phase difference information, and further determine the angle of arrival of the second reference signal based on the phase difference information. There are a plurality of manners of calculating the angle of arrival of the second reference signal based on the phase difference information. This embodiment of this application provides an example of a possible manner.

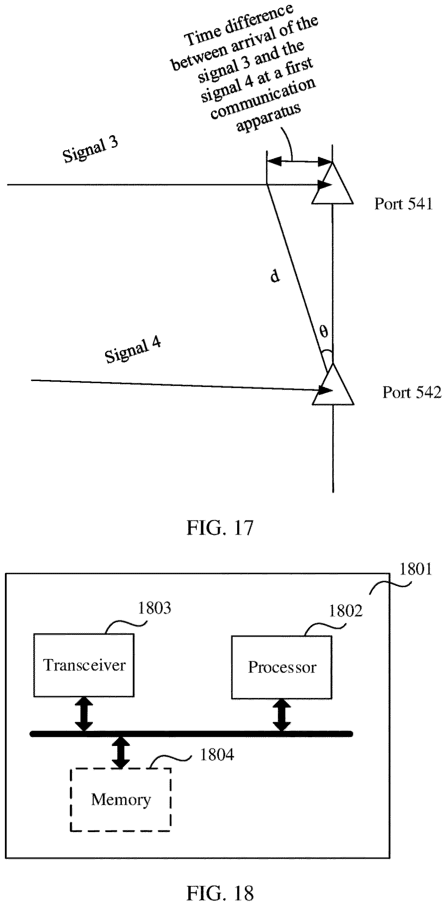

FIG. 17 is an example of a diagram of determining the angle of arrival of the second reference signal based on the phase difference information. As shown in FIG. 17, the second communication apparatus receives a signal 3 through a port 541, and receives a signal 4 through a port 542. The signal 3 may be the first part of the second reference signal, and the signal 4 may be the second part of the second reference signal. With reference to FIG. 17, a relationship between the angle of arrival and the phase difference information may be learned, and the angle of arrival of the first reference signal may be calculated by using Formula (4):

$$\psi = 2\pi \frac{dsin\theta}{\lambda} ... \text{Formula (4)}$$

In Formula (4), d is the spacing between the port 541 and the port 542.

$\theta$ is the angle of arrival of the second reference signal.

$\psi$ is a phase difference corresponding to the signal 3 and the signal 4 on the second communication apparatus side.

$\lambda$ is a wavelength of the second reference signal.

$\pi$ is a constant and refers to the circumference ratio.

In a possible implementation, the phase difference between the signal 3 and the signal 4 that is determined by the first communication apparatus may include two parts. One part is a phase difference between two ports that is introduced when the second communication apparatus sends the signal 3 and the signal 4 through the two ports respectively, and the other part is a phase difference introduced by time consumed by the second communication apparatus to perform port switching in a process of sending the signal 3 and the signal 4. A phase changes with time. Therefore, a part of the phase difference that is introduced by duration consumed by the second communication apparatus to perform port switching in the process of sending the signal 3 and the signal 4 may be determined based on the duration (for example, the phase difference corresponding to the duration may be calculated by using (t*(2πc/$\lambda$)), where * represents multiplication, t represents duration, c represents a light speed, $\lambda$ is a wavelength of the signal, and $\pi$ is a constant and refers to the circumference ratio). In this way, the first communication apparatus may remove, from the measured phase difference between the signal 3 and the signal 4, the phase difference introduced due to port switching, so that the obtained phase difference information is more accurate.

S1612: The second communication apparatus sends the angle-of-arrival information to the positioning server.

Correspondingly, the positioning server receives a plurality of pieces of angle-of-arrival information from a plurality of second communication apparatuses.

The second communication apparatus may send the angle-of-arrival information to the LMF by using the NRPPa.

S1613: The positioning server determines location information of the first communication apparatus based on the received angle-of-arrival information of the plurality of second communication apparatuses.

A manner in which the positioning server determines the location information of the first communication apparatus based on the plurality of pieces of angle-of-arrival information is similar to a manner of determining the location information of the first communication apparatus based on the plurality of pieces of angle-of-departure information. Details are not described again.

FIG. 8A and FIG. 8B show only an example of a possible implementation solution. In a specific implementation, there may be another possible implementation. For example, the step of determining, based on the third phase information of each second communication apparatus, the angle-of-arrival information corresponding to each second communication apparatus may alternatively be performed by the positioning server.

It should be noted that, in embodiments of this application, that a network element (for example, a network element A) receives information from another network element (for example, a network element B) may mean that the network element A directly receives the information from the network element B, or may mean that the network element A receives the information from the network element B through another network element (for example, a network element C). When the network element A receives the information from the network element B through the network element C, the network element C may transparently transmit the information, or may process the information, for example, add the information to different messages for transmission, or screen the information, and send only information obtained through screening to the network element A. Similarly, in embodiments of this application, that the network element A sends information to the network element B may mean that the network element A directly sends the information to the network element B, or may mean that the network element A sends the information to the network element B through another network element (for example, the network element C).

The terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" generally represents an "or" relationship between the associated objects. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" mentioned in embodiments of this application are intended to distinguish a plurality of objects, rather than limit a sequence, a time sequence, priorities, or importance degrees of the plurality of objects.

It should be noted that, names of the foregoing messages are merely examples. With evolution of communication technologies, the name of any foregoing message may change. However, regardless of how the names of the messages change, provided that meanings of the messages are the same as those of the messages in this application, the messages fall within the protection scope of this application.

According to the foregoing methods, FIG. 18 is a diagram of a structure of a communication apparatus according to an embodiment of this application. As shown in FIG. 18, the communication apparatus may be a first communication apparatus, a second communication apparatus, or a third communication apparatus, or may be a chip or a circuit, for example, a chip or a circuit that may be disposed in the first communication apparatus, a chip or a circuit that may be disposed in the second communication apparatus, or a chip or a circuit that may be disposed in the third communication apparatus.

The communication apparatus 1801 includes a processor 1802 and a transceiver 1803.

Further, the communication apparatus 1801 may include a memory 1804. In the figure, the memory 1804 is a dashed line, which further indicates that the memory is optional.

Further, the communication apparatus 1801 may further include a bus system. The processor 1802, the memory 1804, and the transceiver 1803 may be connected through the bus system.

It should be understood that the processor 1802 may be a chip. For example, the processor 1802 may be a field programmable gate array (field programmable gate array, FPGA), an application-specific integrated circuit (application-specific integrated circuit, ASIC), a system on chip (system on chip, SoC), or a central processing unit (central processing unit, CPU), a network processor (network processor, NP), a digital signal processing circuit (digital signal processor, DSP), a micro controller unit (micro controller unit, MCU), or a programmable logic device (programmable logic device, PLD) or another integrated chip.

In an implementation process, the steps of the foregoing methods may be completed by using an integrated logic circuit of hardware in the processor 1802 or instructions in a form of software. Steps of the methods disclosed with reference to embodiments of this application may be directly executed and accomplished by using a hardware processor, or may be executed and accomplished by using a combination of hardware and software modules in the processor 1802. The software module may be located in a mature storage medium in the art, for example, a random access memory, a flash memory, a read-only memory, a programmable read-only memory, an electrically erasable programmable memory, or a register. The storage medium is located in the memory 1804. The processor 1802 reads information in the memory 1804, and completes the steps of the methods in combination with hardware of the processor.

It should be noted that, the processor 1802 in embodiments of this application may be an integrated circuit chip, and has a signal processing capability. In an implementation process, the steps in the foregoing method embodiments may be implemented by using an integrated logic circuit of hardware in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps of the methods disclosed with reference to embodiments of this application may be directly executed and accomplished by a hardware decoding processor, or may be executed and accomplished by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the methods in combination with hardware of the processor.

It may be understood that the memory 1804 in this embodiment of this application may be a volatile memory or a non-volatile memory, or may include a volatile memory and a non-volatile memory. For related descriptions of the memory in embodiments of this application, refer to the foregoing content. Details are not described herein again.

When the communication apparatus 1801 is the first communication apparatus, through the transceiver 1803, the processor 1802 is configured to: obtain first configuration information of a first reference signal, where the first configuration information includes indication information of a plurality of time domain resources used to determine phase information; receive the first reference signal, and determine a plurality of pieces of first phase information corresponding to the plurality of time domain resources, where one of the plurality of pieces of first phase information is determined based on a signal received on one of the plurality of time domain resources; and send second phase information and/or first angle-of-departure information. The second phase information is determined based on the plurality of pieces of first phase information, and the first angle-of-departure information is determined based on the plurality of pieces of first phase information.

When the communication apparatus 1801 is the second communication apparatus, through the transceiver 1803, the processor 1802 is configured to: generate a first reference signal, and send the first reference signal to the first communication apparatus on a plurality of time domain resources. Two of the plurality of time domain resources correspond to two different ports used to send the first reference signal.

When the communication apparatus 1801 is the third communication apparatus, through the transceiver 1803, the processor 1802 is configured to: receive a plurality of pieces of first angle-of-departure information, where one of the plurality of pieces of first angle-of-departure information is determined based on a plurality of pieces of first phase information determined by the first communication apparatus, and the plurality of pieces of first phase information are determined based on a first reference signal; and determine location information of the first communication apparatus based on the plurality of pieces of first angle-of-departure information.

When the communication apparatus 1801 is the second communication apparatus, in another possible implementation, through the transceiver 1803, the processor 1802 is configured to: receive a second reference signal, determine a plurality of pieces of third phase information that correspond to the second reference signal and that are received on a plurality of time domain resources, and determine an angle of arrival of the second reference signal based on the plurality of pieces of third phase information.

For concepts, explanations, detailed descriptions, and other steps of the communication apparatus that are related to the technical solutions provided in embodiments of this application, refer to the descriptions of the content in the methods or other embodiments. Details are not described herein again.

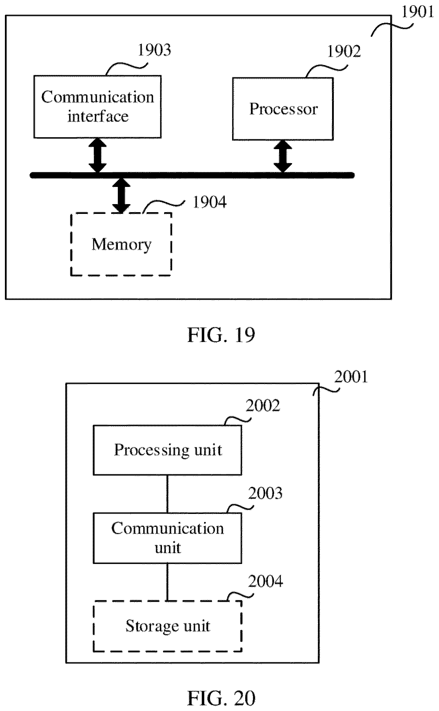

According to the foregoing methods, FIG. 19 is a diagram of a structure of a communication apparatus according to an embodiment of this application. As shown in FIG. 19, the communication apparatus 1901 may include a communication interface 1903 and a processor 1902. Further, the communication apparatus 1901 may include a memory 1904. In the figure, the memory 1904 is a dashed line, which further indicates that the memory is optional. The communication interface 1903 is configured to input and/or output information. The processor 1902 is configured to execute a computer program or instructions, so that the communication apparatus 1901 implements the method on the first communication apparatus side in any one of the related solutions in FIG. 4, FIG. 8A and FIG. 8B, FIG. 11A and FIG. 11B, FIG. 12, FIG. 13A and FIG. 13B, FIG. 14, or FIG. 16A and FIG. 16B, or the communication apparatus 1901 implements the method on the second communication apparatus side in any one of the related solutions in FIG. 4, FIG. 8A and FIG. 8B, FIG. 11A and FIG. 11B, FIG. 12, FIG. 13A and FIG. 13B, FIG. 14, or FIG. 16A and FIG. 16B, or the communication apparatus 1901 implements the method on the third communication apparatus side in any one of the related solutions in FIG. 4, FIG. 8A and FIG. 8B, FIG. 11A and FIG. 11B, FIG. 12, FIG. 13A and FIG. 13B, FIG. 14, or FIG. 16A and FIG. 16B. In this embodiment of this application, the communication interface 1903 may implement the solution implemented by the transceiver 1803 in FIG. 18, the processor 1902 may implement the solution implemented by the processor 1802 in FIG. 18, and the memory 1904 may implement the solution implemented by the memory 1804 in FIG. 18. Details are not described herein again.

Based on the foregoing embodiments and a same concept, FIG. 20 is a diagram of a communication apparatus according to an embodiment of this application. As shown in FIG. 20, the communication apparatus 2001 may be the first communication apparatus, the second communication apparatus, or the third communication apparatus, or may be a chip or a circuit, for example, a chip or a circuit that may be disposed in the first communication apparatus, the second communication apparatus, or the third communication apparatus.

The communication apparatus 2001 includes a processing unit 2002 and a communication unit 2003. Further, the communication apparatus 2001 may include a storage unit 2004, or may not include the storage unit 2004. In the figure, the storage unit 2004 is a dashed line, which further indicates that the memory is optional.

The communication unit 2003 is configured to input and/or output information. The processing unit 2002 is configured to execute a computer program or instructions, so that the communication apparatus 2001 implements the method on the first communication apparatus side in any one of the related solutions in FIG. 4, FIG. 8A and FIG. 8B, FIG. 11A and FIG. 11B, FIG. 12, FIG. 13A and FIG. 13B, FIG. 14, or FIG. 16A and FIG. 16B, or the communication apparatus 2001 implements the method on the second communication apparatus side in any one of the related solutions in FIG. 4, FIG. 8A and FIG. 8B, FIG. 11A and FIG. 11B, FIG. 12, FIG. 13A and FIG. 13B, FIG. 14, or FIG. 16A and FIG. 16B, or the communication apparatus 2001 implements the method on the third communication apparatus side in any one of the related solutions in FIG. 4, FIG. 8A and FIG. 8B, FIG. 11A and FIG. 11B, FIG. 12, FIG. 13A and FIG. 13B, FIG. 14, or FIG. 16A and FIG. 16B. In this embodiment of this application, the communication unit 2003 may implement the solution implemented by the transceiver 1803 in FIG. 18, the processing unit 2002 may implement the solution implemented by the processor 1802 in FIG. 18, and the storage unit 2004 may implement the solution implemented by the memory 1804 in FIG. 18. Details are not described herein again.

According to the methods provided in embodiments of this application, this application further provides a computer program product. The computer program product includes computer program code or instructions. When the computer program code or the instructions are run on a computer, the computer is enabled to perform the method in any one of embodiments shown in FIG. 4, FIG. 8A and FIG. 8B, FIG. 11A and FIG. 11B, FIG. 12, FIG. 13A and FIG. 13B, FIG. 14, or FIG. 16A and FIG. 16B.

According to the methods provided in embodiments of this application, this application further provides a computer-readable storage medium. The computer-readable medium stores program code. When the program code is run on a computer, the computer is enabled to perform the method in any one of embodiments shown in FIG. 4, FIG. 8A and FIG. 8B, FIG. 11A and FIG. 11B, FIG. 12, FIG. 13A and FIG. 13B, FIG. 14, or FIG. 16A and FIG. 16B.

According to the method provided in embodiments of this application, this application further provides a chip system. The chip system may include a processor. The processor is coupled to a memory, and may be configured to perform the method in any one of embodiments shown in FIG. 4, FIG. 8A and FIG. 8B, FIG. 11A and FIG. 11B, FIG. 12, FIG. 13A and FIG. 13B, FIG. 14, or FIG. 16A and FIG. 16B. Optionally, the chip system further includes the memory. The memory is configured to store a computer program (which may also be referred to as code or instructions). The processor is configured to invoke the computer program from the memory and run the computer program, so that a device on which the chip system is installed performs the method in any one of embodiments shown in FIG. 4, FIG. 8A and FIG. 8B, FIG. 11A and FIG. 11B, FIG. 12, FIG. 13A and FIG. 13B, FIG. 14, or FIG. 16A and FIG. 16B.

According to the methods provided in embodiments of this application, this application further provides a system. The system includes the one or more first communication apparatuses and the one or more second communication apparatuses, and may further include a third communication apparatus.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It should be noted that a part of the present patent application documents includes content protected by copyright. The copyright owner reserves the copyright except copies made for the patent documents or the recorded content of the patent documents in the Patent Office.

The second communication apparatus and the first communication apparatus in the foregoing apparatus embodiments correspond to the second communication apparatus and the first communication apparatus in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with another system by using the signal).

A person of ordinary skill in the art may be aware that, illustrative logical blocks (illustrative logical blocks) and steps (steps) described in combination with embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located at one location, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. When the functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A reference signal receiving method, comprising:

   obtaining, by a first communication apparatus, first configuration information of a first reference signal, wherein the first configuration information comprises indication information of a plurality of time domain resources used to determine phase information;
   receiving, by the first communication apparatus, the first reference signal, and determining a plurality of pieces of first phase information corresponding to the plurality of time domain resources, wherein one of the plurality of pieces of first phase information is determined based on a signal received on one of the plurality of time domain resources; and
   sending, by the first communication apparatus, second phase information and/or first angle-of-departure information, wherein the second phase information is determined based on the plurality of pieces of first phase information, and the first angle-of-departure information is determined based on the plurality of pieces of first phase information.

**2.** The method according to claim 1, wherein the plurality of time domain resources comprise a first time domain resource and a second time domain resource; and
the receiving, by the first communication apparatus, the first reference signal, and determining a plurality of pieces of first phase information corresponding to the plurality of time domain resources comprises:

receiving, by the first communication apparatus, a first part of the first reference signal on the first time domain resource, and determining one of the plurality of pieces of first phase information based on the first part of the first reference signal; and
receiving, by the first communication apparatus, a second part of the first reference signal on the second time domain resource, and determining another one of the plurality of pieces of first phase information based on the second part of the first reference signal.

**3.** The method according to claim 1 or 2, wherein the indication information of the plurality of time domain resources comprises at least one of the following content:

information about a quantity of time domain resource units between two of S 1 time domain resources corresponding to the first reference signal, wherein S1 is an integer greater than 1, and the S1 time domain resources are time domain resources used by a transmit end of the first reference signal to send the first reference signal; and/or
information about the S1 time domain resources corresponding to the first reference signal.

**4.** The method according to claim 3, wherein two adjacent time domain resources in the S1 time domain resources are separated by at least one time domain resource unit.

**5.** The method according to any one of claims 1 to 4, wherein the first configuration information further comprises:

a correspondence between the S1 time domain resources corresponding to the first reference signal and a plurality of ports, wherein S1 is an integer greater than 1, wherein
the plurality of ports are ports used by the transmit end of the first reference signal to send the first reference signal on the S1 time domain resources.

**6.** The method according to any one of claims 1 to 5, wherein the second phase information comprises at least one of the following content:

at least two of the plurality of pieces of first phase information;
at least one piece of phase difference information corresponding to the plurality of pieces of first phase information; or
average information of at least one piece of phase difference information.

**7.** The method according to any one of claims 1 to 6, wherein after the first communication apparatus determines the plurality of pieces of first phase information corresponding to the first reference signal received on the plurality of time domain resources used to determine the phase information, the method further comprises:

sending, by the first communication apparatus, first indication information, wherein
the first indication information indicates a correspondence between a parameter in the second phase information and an identifier of a port used to send the first reference signal.

**8.** A reference signal sending method, comprising:

generating, by a second communication apparatus, a first reference signal; and
sending, by the second communication apparatus, the first reference signal on a plurality of time domain resources, wherein two of the plurality of time domain resources correspond to two different ports used to send the first reference signal.

**9.** The method according to claim 8, wherein the sending, by the second communication apparatus, the first reference signal on a plurality of time domain resources comprises:

sending, by the second communication apparatus, a first part of the first reference signal on a third time domain resource through a first port connected to a first radio frequency channel; and

sending, by the second communication apparatus, a second part of the first reference signal on a fourth time domain resource through a second port connected to the first radio frequency channel.

10. The method according to claim 8 or 9, wherein before the sending, by the second communication apparatus, the first reference signal on a plurality of time domain resources, the method further comprises:

determining, by the second communication apparatus, second configuration information of the first reference signal, wherein the second configuration information comprises fourth indication information, the fourth indication information indicates S1 time domain resources, S1 is an integer greater than 1, and the S1 time domain resources are the plurality of time domain resources used to send the first reference signal.

11. The method according to claim 10, wherein the second configuration information further comprises at least one of the following content:

information about a quantity of time domain resource units between two of the S1 time domain resources; and/or information about the S1 time domain resources.

12. The method according to claim 10 or 11, wherein the second configuration information further comprises:

a correspondence between the S1 time domain resources and a plurality of ports, wherein S1 is an integer greater than 1; and

sending, by the second communication apparatus, the first reference signal on the S1 time domain resources based on the second configuration information comprises:

for a time domain resource in the S1 time domain resources, sending, by the second communication apparatus, the first reference signal through a port corresponding to the time domain resource.

13. The method according to any one of claims 8 to 12, wherein after the sending, by the second communication apparatus, the first reference signal on a plurality of time domain resources, the method further comprises:

receiving, by the second communication apparatus, second phase information, wherein the second phase information is determined based on a plurality of pieces of first phase information, and the plurality of pieces of first phase information are determined based on the first reference signal; and

determining, by the second communication apparatus, an angle of departure of the first reference signal based on the second phase information.

14. The method according to claim 13, wherein the second phase information comprises at least one of the following content:

at least two of the plurality of pieces of first phase information;

at least one piece of phase difference information corresponding to the plurality of pieces of first phase information; or

average information of at least one piece of phase difference information.

15. A communication apparatus, comprising a processor and a communication interface, wherein through the communication interface, the processor is configured to perform the following content:

obtaining first configuration information of a first reference signal, wherein the first configuration information comprises indication information of a plurality of time domain resources used to determine phase information;

receiving the first reference signal, and determining a plurality of pieces of first phase information corresponding to the plurality of time domain resources, wherein one of the plurality of pieces of first phase information is determined based on a signal received on one of the plurality of time domain resources; and

sending second phase information and/or first angle-of-departure information, wherein the second phase information is determined based on the plurality of pieces of first phase information, and the first angle-of-departure information is determined based on the plurality of pieces of first phase information.

16. The communication apparatus according to claim 15, wherein the plurality of time domain resources comprise a first time domain resource and a second time domain resource; and

through the communication interface, the processor is specifically configured to:

receive a first part of the first reference signal on the first time domain resource, and determine one of the plurality of pieces of first phase information based on the first part of the first reference signal; and
receive a second part of the first reference signal on the second time domain resource, and determine another one of the plurality of pieces of first phase information based on the second part of the first reference signal.

17. The communication apparatus according to claim 15 or 16, wherein the indication information of the plurality of time domain resources comprises at least one of the following content:

information about a quantity of time domain resource units between two of S 1 time domain resources corresponding to the first reference signal, wherein S 1 is an integer greater than 1, and the S 1 time domain resources are time domain resources used by a transmit end of the first reference signal to send the first reference signal; and/or
information about the S 1 time domain resources corresponding to the first reference signal.

18. The communication apparatus according to claim 17, wherein two adjacent time domain resources in the S 1 time domain resources are separated by at least one time domain resource unit.

19. The communication apparatus according to any one of claims 15 to 18, wherein the first configuration information further comprises:

a correspondence between the S 1 time domain resources corresponding to the first reference signal and a plurality of ports, wherein S 1 is an integer greater than 1, wherein
the plurality of ports are ports used by the transmit end of the first reference signal to send the first reference signal on the S1 time domain resources.

20. The communication apparatus according to any one of claims 15 to 19, wherein the second phase information comprises at least one of the following content:

at least two of the plurality of pieces of first phase information;
at least one piece of phase difference information corresponding to the plurality of pieces of first phase information; or
average information of at least one piece of phase difference information.

21. The communication apparatus according to any one of claims 15 to 20, wherein through the communication interface, the processor is further configured to:

send first indication information, wherein
the first indication information indicates a correspondence between a parameter in the second phase information and an identifier of a port used to send the first reference signal.

22. A communication apparatus, comprising a processor and a communication interface, wherein through the communication interface, the processor is configured to perform the following content:

generating a first reference signal; and
sending the first reference signal on a plurality of time domain resources, wherein two of the plurality of time domain resources correspond to two different ports used to send the first reference signal.

23. The communication apparatus according to claim 22, wherein through the communication interface, the processor is specifically configured to:

send a first part of the first reference signal on a third time domain resource through a first port connected to a first radio frequency channel; and
send, for the second communication apparatus, a second part of the first reference signal on a fourth time domain resource through a second port connected to the first radio frequency channel.

24. The communication apparatus according to claim 22 or 23, wherein through the communication interface, the processor is further configured to:
determine second configuration information of the first reference signal, wherein the second configuration information comprises fourth indication information, the fourth indication information indicates S1 time domain resources, S1 is an integer greater than 1, and the S1 time domain resources are the plurality of time domain resources used to send the first reference signal.

25. The communication apparatus according to claim 24, wherein the second configuration information further comprises at least one of the following content:

information about a quantity of time domain resource units between two of the S1 time domain resources; and/or information about the S1 time domain resources.

26. The communication apparatus according to claim 24 or 25, wherein the second configuration information further comprises:

a correspondence between the S1 time domain resources and a plurality of ports, wherein S1 is an integer greater than 1; and
through the communication interface, the processor is specifically configured to:
for a time domain resource in the S1 time domain resources, send the first reference signal through a port corresponding to the time domain resource.

27. The communication apparatus according to any one of claims 22 to 26, wherein through the communication interface, the processor is further configured to:

receive second phase information, wherein the second phase information is determined based on a plurality of pieces of first phase information, and the plurality of pieces of first phase information are determined based on the first reference signal; and
determine an angle of departure of the first reference signal based on the second phase information.

28. The communication apparatus according to claim 27, wherein the second phase information comprises at least one of the following content:

at least two of the plurality of pieces of first phase information;
at least one piece of phase difference information corresponding to the plurality of pieces of first phase information; or
average information of at least one piece of phase difference information.

29. A communication apparatus, comprising a processor and a memory, wherein

the memory is configured to store a computer program or instructions; and
the processor is configured to execute the computer program or instructions in the memory, so that the method according to any one of claims 1 to 7 is performed, or the method according to any one of claims 8 to 14 is performed.

30. A communication apparatus, comprising a processing module and a communication module, wherein the processing module is configured to perform, through the communication module, the method according to any one of claims 1 to 7 or the method according to any one of claims 8 to 14.

31. A computer-readable storage medium, wherein the computer-readable storage medium stores computer-executable instructions, and when the computer-executable instructions are invoked by a computer, the method according to any one of claims 1 to 7 is performed, or the method according to any one of claims 8 to 14 is performed.

32. A chip system, comprising a communication interface and a processor, wherein

the communication interface is configured to input and/or output signaling or data; and
the processor is configured to execute a computer-executable program, so that a device on which the chip system is installed performs the method according to any one of claims 1 to 7, or performs the method according to any one of claims 8 to 14.

FIG. 1a

FIG. 1b

FIG. 1c

FIG. 2

FIG. 3

```
┌─────────────────────┐                           ┌─────────────────────┐
│ First communication │                           │ Second communication│
│      apparatus      │                           │      apparatus      │
└─────────────────────┘                           └─────────────────────┘
           │                              ┌────────────────────────────────┐
           │                              │    S201: Generate a first      │
           │                              │        reference signal        │
           │                              └────────────────────────────────┘
           │  S202: Send the first reference signal to the first           │
           │  communication apparatus on a plurality of time domain        │
           │                      resources                                │
           │◄──────────────────────────────────────────────────────────────┤
┌─────────────────────────────┐                                            │
│ S203: Obtain first config-  │                                            │
│ uration information of the  │                                            │
│   first reference signal    │                                            │
└─────────────────────────────┘                                            │
┌─────────────────────────────┐                                            │
│ S204: Receive the first     │                                            │
│ reference signal, and       │                                            │
│ determine a plurality of    │                                            │
│ pieces of first phase       │                                            │
│ information corresponding   │                                            │
│ to a plurality of time      │                                            │
│ domain resources            │                                            │
└─────────────────────────────┘                                            │
           │ S2051: Send second phase information, where the second        │
           │ phase information is determined based on the plurality of     │
           │         pieces of first phase information                     │
           ├──────────────────────────────────────────────────────────────►
           │                                                               │
```

FIG. 4

Port array 44

First radio frequency channel 43

Port array 54

Second radio frequency channel 53

Baseband subsystem 42

FIG. 5a

Port array 44

Switch 45

First radio frequency channel 43

Port array 54

Switch 55

Second radio frequency channel 53

Baseband subsystem 42

FIG. 5b

Port array 44

Switch 45

Port 441

Port 442

Port 443

Port 444

Port 445

Port 446

Port 447

Port 448

First radio frequency channel 43

Baseband subsystem 42

FIG. 6

Time domain resources used to transmit data

Time domain resources in S1 time domain resources used to transmit a reference signal

Time domain resource units (which may be used for port switching)

FIG. 7a

Time domain resources in S1 time domain resources used to transmit a reference signal

Time domain resource units (which may be used for port switching)

FIG. 7b

Identifiers of ports corresponding to time domain resources

| Port 441 | Port 442 | Port 443 | Port 444 | Port 445 | Port 446 | Port 447 | Port 448 |

Time domain resources in S1 time domain resources used to transmit a reference signal

Time domain resource units (which may be used for port switching)

FIG. 7c

Identifiers of ports corresponding to time domain resources

| Port 441 | Port 442 | Port 441 | Port 443 | Port 441 | Port 444 | Port 441 | Port 445 |

Time domain resources in S1 time domain resources used to transmit a reference signal

Time domain resource units (which may be used for port switching)

FIG. 7d

| First communication apparatus | Second communication apparatus | Positioning server |
|---|---|---|

S801: Determine second configuration information

S802: Send a first TRP information request, where the first TRP information request is used to request to obtain third configuration information

S803: Send a first TRP information response

S804: Send a request assistance data message

S805: Send a provide assistance data message, where the provide assistance data message includes first configuration information

S806: Send a first location information request message

S807: The second communication apparatus sends a first reference signal to the first communication apparatus on a plurality of time domain resources based on the second configuration information

S808: Receive the first reference signal, and determine a plurality of pieces of first phase information corresponding to the first reference signal received on a plurality of time domain resources used to determine phase information

S809: Send a first message for providing positioning information, where the first message includes second phase information

TO
FIG. 8B

TO
FIG. 8B

TO
FIG. 8B

FIG. 8A

CONT.
FROM
FIG. 8A

CONT.
FROM
FIG. 8A

CONT.
FROM
FIG. 8A

S810: Send a positioning information request message, where the positioning information request message includes the second phase information

S811: Determine an angle of departure of the first reference signal based on the second phase information

S812: Send a positioning information response message, where the positioning information response message includes angle-of-departure information

S813: Determine location information of the first communication apparatus based on angle-of-departure information received from a plurality of second communication apparatuses

FIG. 8B

Port
441

Signal 1

Time difference between
arrival of the signal 1 and
the signal 2 at a first
communication apparatus

θ

Port
442

Signal 2

d

Terminal
device
103

Base station 101

FIG. 9

AOD1

AOD2

Base station
101

Base station
102

Terminal
device 103

FIG. 10

| First communication apparatus | Second communication apparatus | Positioning server | Third communication apparatus |
|---|---|---|---|

S801: Determine second configuration information

S802: Send a first TRP information request, where the first TRP information request is used to request to obtain third configuration information

S803: Send a first TRP information response

S804: Send a request assistance data message

S805: Send a provide assistance data message, where the provide assistance data message includes first configuration information

S806: Send a first location information request message

S807: The second communication apparatus sends a first reference signal to the first communication apparatus on a plurality of time domain resources based on the second configuration information

TO FIG. 11B    TO FIG. 11B    TO FIG. 11B    TO FIG. 11B

FIG. 11A

CONT.
FROM
FIG. 11A

CONT.
FROM
FIG. 11A

CONT.
FROM
FIG. 11A

CONT.
FROM
FIG. 11A

S808: Receive the first reference signal, and determine a plurality of pieces of first phase information corresponding to the first reference signal received on a plurality of time domain resources used to determine phase information

S1101: Send a second message, where the second message may include second phase information

S1102: Send port configuration information of a plurality of second communication apparatuses

S1103: Determine, based on second phase information corresponding to the plurality of second communication apparatuses and the port configuration information of the plurality of second communication apparatuses, angle-of-departure information corresponding to the plurality of second communication apparatuses

S1104: Send the angle-of-departure information corresponding to the plurality of second communication apparatuses

S1105: Determine location information of the first communication apparatus based on the angle-of-departure information of the plurality of second communication apparatuses

FIG. 11B

First communication apparatus

Second communication apparatus

S201: Generate a first reference signal

S202: Send the first reference signal to the first communication apparatus on a plurality of time domain resources

S203: Obtain first configuration information of the first reference signal

S204: Receive the first reference signal, and determine a plurality of pieces of first phase information corresponding to the first reference signal received on a plurality of time domain resources used to determine phase information

S2052: The first communication apparatus sends first angle-of-departure information

FIG. 12

| First communication apparatus | Second communication apparatus | Positioning server |
|---|---|---|

S801: Determine second configuration information

S802: Send a first TRP information request, where the first TRP information request is used to request third configuration information

S803: Send a first TRP information response

S804: Send a request assistance data message

S805: Send a provide assistance data message, where the provide assistance data message includes first configuration information

S806: Send a first location information request message

S807: The second communication apparatus sends a first reference signal to the first communication apparatus on a plurality of time domain resources based on the second configuration information

S808: Receive the first reference signal, and determine a plurality of pieces of first phase information corresponding to the first reference signal received on a plurality of time domain resources used to determine phase information

TO
FIG. 13B

TO
FIG. 13B

TO
FIG. 13B

FIG. 13A

CONT.
FROM
FIG. 13A

CONT.
FROM
FIG. 13A

CONT.
FROM
FIG. 13A

S1201: Send a fourth message for providing positioning information, where the fourth message includes first angle-of-departure information

S1202: Determine location information of the first communication apparatus based on received first angle-of-departure information corresponding to a plurality of second communication apparatuses

**FIG. 13B**

First communication apparatus

Second communication apparatus

S1401: The first communication apparatus sends a second reference signal

S1402: Receive the second reference signal, and determine a plurality of pieces of third phase information corresponding to the second reference signal received on a plurality of time domain resources

S1403: Determine an angle of arrival of the second reference signal based on the plurality of pieces of third phase information

**FIG. 14**

Port array 54

Port 541

Port 542

Port 543

Port 544

Switch 55

Port 545

Second radio frequency channel 53

Baseband subsystem 42

Port 546

Port 547

Port 548

FIG. 15

FIG. 16A

CONT.
FROM
FIG. 16A

CONT.
FROM
FIG. 16A

CONT.
FROM
FIG. 16A

CONT.
FROM
FIG. 16A

S1610: Receive the second reference signal, and determine a plurality of pieces of third phase information corresponding to the second reference signal received on S3 time domain resources

S1611: Determine angle-of-arrival information based on the plurality of pieces of third phase information

S1612: Send the angle-of-arrival information

S1613: Determine location information of the first communication apparatus based on received angle-of-arrival information of a plurality of second communication apparatuses

FIG. 16B

Time difference between arrival of the signal 3 and the signal 4 at a first communication apparatus

Signal 3

Port 541

d

θ

Signal 4

Port 542

FIG. 17

1801

1803
Transceiver

1802
Processor

1804
Memory

FIG. 18

1901

1903

Communication
interface

1902

Processor

1904

Memory

FIG. 19

2001

2002

Processing unit

2003

Communication
unit

2004

Storage unit

FIG. 20

**INTERNATIONAL SEARCH REPORT**

International application No.

**PCT/CN2022/142540**

### A. CLASSIFICATION OF SUBJECT MATTER

H04W24/08(2009.01)i

According to International Patent Classification (IPC) or to both national classification and IPC

### B. FIELDS SEARCHED

Minimum documentation searched (classification system followed by classification symbols)

H04W,H04L

Documentation searched other than minimum documentation to the extent that such documents are included in the fields searched

Electronic data base consulted during the international search (name of data base and, where practicable, search terms used)

CNTXT, ENTXT, CNABS, VEN, 3GPP, CNKI: 通信装置, 终端, 基站, 参考信号, 配置信息, 相位, 时域, 离开角, 定位, 相位差, 均值, 端口, communication device, terminal, base station, BS, reference signal, RS, configuration information, phase, time domain, angle of departure, AoD, position+, phase difference, mean+, port+

### C. DOCUMENTS CONSIDERED TO BE RELEVANT

| Category* | Citation of document, with indication, where appropriate, of the relevant passages | Relevant to claim No. |
|---|---|---|
| X | CN 111866938 A (HUAWEI TECHNOLOGIES CO., LTD.) 30 October 2020 (2020-10-30) description, paragraphs 104-197, 345-356 | 1-32 |
| A | US 2020150216 A1 (DEEYOOK LOCATION TECH LTD.) 14 May 2020 (2020-05-14) entire document | 1-32 |
| A | WO 2021062858 A1 (NOKIA SHANGHAI BELL CO., LTD. et al.) 08 April 2021 (2021-04-08) entire document | 1-32 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 March 2023** | **17 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/142540**

| Patent document cited in search report | | | Publication date (day/month/year) | Patent family member(s) | | | Publication date (day/month/year) |
|---|---|---|---|---|---|---|---|
| CN | 111866938 | A | 30 October 2020 | None | | | |
| US | 2020150216 | A1 | 14 May 2020 | US | 11550024 | B2 | 10 January 2023 |
| WO | 2021062858 | A1 | 08 April 2021 | EP | 4039001 | A1 | 10 August 2022 |
| | | | | US | 2022283259 | A1 | 08 September 2022 |

Form PCT/ISA/210 (patent family annex) (July 2022)

**REFERENCES CITED IN THE DESCRIPTION**

**Patent documents cited in the description**

- CN 202111646420